# EUROPEAN PATENT SPECIFICATION

(11) **EP 0 635 438 B1**
(45) Date of publication and mention of the grant of the patent: **17.03.1999**
(21) Application number: 94111191.6
(22) Date of filing: 18.07.1994
(51) Int. Cl.: B65D 85/50

(54) **Floral grouping wrapper and methods**
Umhüllung für Blumensträusse sowie Umhüllverfahren
Feuille d'emballage pour un bouquet de fleurs et procédé pour sa mise en oeuvre

(30) Priority: 19.07.1993 US 93838; 21.07.1993 US 95331; 21.12.1993 US 171489
(43) Date of publication of application: 25.01.1995
(73) Proprietor: SOUTHPAC TRUST INTERNATIONAL, Inc., not individually, but as Trustee of the Family Trust, Rarotonga (CK)
(72) Inventor: Weder, Donald E., Highland, Illinois 62249 (US); Straeter, Joseph G., Highland, Illinois 62249 (US); Straeter, William F., Breese, Illinois 62230 (US)
(74) Representative: Baillie, Iain Cameron

(56) References cited:
- WO-A-93/15979
- US-A- 3 508 372
- US-A- 4 801 014

## Description

The present invention relates generally to the wrapping of a floral grouping with a wrapper and crimping at least a portion of the wrapper about the stem portion of the floral grouping whereby the crimped area of the wrapper is bound together with a connecting means which may comprise a bonding material.

Floral arrangements are usually wrapped in a wrapping material, to protect the delicate blooms and foliage from damage. And, the wrapping material utilized frequently has some bonding material thereon, such as an adhesive or cohesive, so that the wrapping material retains its wrapped shape, and securely encompasses the floral arrangement in order to protect it. This type of wrapping material, however, has its disadvantages.

For example, packers of floral groupings such as bouquets often complain that floral grouping wrappers such as commercially-available "sleeves" and other flat sheets of wrapping material are not the correct size at the lower end of the sleeve or wrapper. Therefore, the packer must use some type of band or tie at the lower end of the sleeve or sheet to take up the extra material and to tightly wrap the material about the stems of the floral grouping to inhibit the bouquet from spreading apart or slipping from the wrapper. It would be desirable to increase the ease and quickness with which a wrapper such as a sleeve or sheet of material can be applied about a floral grouping and held firmly about the stems of the floral grouping without relying on the additional step of applying a separate band or tie about the wrapper.

Another significant disadvantage occurs when the wrapping material is removed from the floral arrangement. Frequently, it is not obvious where the wrapping material begins or ends. When this occurs, the recipient of the floral arrangement may become frustrated in looking for the edge of the wrapping material, and may, in a state of frustration, tear the wrapping material away from the delicate floral arrangement, damaging the blooms, foliage, or both. A further disadvantage is that, even when it is obvious where the wrapping material begins and ends, it is difficult to release the bonding material which holds the wrapping material about the floral arrangement. The recipient may again inadvertently damage the blooms and/or foliage of the floral arrangement in his/her struggle to lift and release a portion of the bonded wrapping material from itself. As a result, again, damage to the floral arrangement is likely. Such damage interferes with the recipient's enjoyment of the beauty and visual quality of the gift of a floral arrangement.

It would be desirable to have a wrapping material which has means for enhancing and simplifying the ability to wrap a floral arrangement and which has means for enabling the quicker and easier removal of the wrapper so that the wrapping material can be removed from the floral arrangement without causing damage to the delicate and fragile blooms and foliage. This objective is attained by the present invention.

US-A-3508372 shows a rectangular wrapper in a package for readily damageable poinsettia petals and the like, in which, by use of cohesive rather than adhesive material at the opposite ends of a wrapper, an enclosure may be formed which will not adhere to the petals and will not damage the same.

US-A-4801014 shows a prefabricated wrapper for a bouquet of flowers having a decorative crush-to-hold intermediate portion made of metal foil or the like.

WO-A-93/15979 shows a transport vase for cut flowers and bouquets of flowers consisting of a water-tight wrapper shaped as a pouch, which is provided on its inner side with a liquid-storing, absorbent material and with prescored or creased portions.

### SUMMARY

The invention includes a wrapper for wrapping a floral grouping having a bloom portion and a stem portion, the wrapper comprising: a flat sheet of material sized to substantially surround and encompass the floral grouping when wrapped thereabout; and crimp connecting means for holding a portion of the sheet of material about the floral grouping when the sheet of material is crimpingly wrapped about the floral grouping, the crimp connecting means comprising a bonding material disposed upon a surface of the sheet of material for bondingly connecting overlapping portions of the sheet of material when a crimped portion is formed in the sheet of material, and the crimp connecting means further comprising a cinching tab extending from the sheet of material for holding the connected overlapping folds in a crimped position, and wherein the sheet of material is crimpingly wrappable about at least a portion of the stem portion of the floral grouping with the crimp connecting means being adapted to hold the sheet of material in a position crimped about the stem portion of the floral grouping.

The invention also includes a wrapper for wrapping a floral grouping, the wrapper comprising; a flat sheet of material sized to substantially surround and encompass the floral grouping when wrapped thereabout, and the sheet of material having: crimp connecting means for holding a portion of the sheet of material about the floral grouping when the sheet of material is crimpingly wrapped about the floral grouping, the crimp connecting means comprising a bonding material for bondingly connecting to portions of the sheet of material when a crimped portion is formed in the sheet of material, and, sheet connecting means comprising a bonding material for connecting portions of an inner surface of the sheet of material to portions of an outer surface of the sheet of material, and wherein the sheet of material is crimpingly wrappable about at least a portion of the stem portion of the floral grouping with the crimp connecting means being adapted to hold the sheet of material in a position crimped about the stem portion of the floral grouping.

The invention includes a wrapper for wrapping a floral grouping having a bloom portion and a stem portion, the wrapper comprising: a sleeve of material having a first end, a second end, an outer surface, an inner surface, an opening at the first end and an inner retaining space and sized to substantially surround and encompass the floral grouping when wrapped thereabout; and crimp connecting means for holding a portion of the sleeve of material about the floral grouping when the sleeve of material is crimped about the floral grouping, the crimp connecting means comprising a bonding material disposed upon a portion of at least one of the inner surface or outer surface of the sleeve of material, the bonding material being adapted for bondingly connecting overlapping portions of the sleeve of material when a crimped portion is formed in the material, and wherein the sleeve of material is crimpingly wrappable about at least a portion of the floral grouping with the crimp connecting means being adapted to hold the sleeve of material in a position crimped about the stem portion of the floral grouping.

The invention also includes a method of wrapping a floral grouping, comprising: providing a floral grouping having a bloom portion and a stem portion; providing a wrapper comprising: a sheet of material having a first end, a second end, a first side, a second side, an inner surface and an outer surface, and wherein the sheet of material is sized to substantially surround and encompass the floral grouping when wrapped thereabout, and crimp connecting means comprising a bonding material disposed upon a surface of the sheet of material or an extension thereof for bondingly connecting a plurality of overlapping portions of the sheet of material when a crimped portion comprising overlapping portions is formed in the sheet of material; placing the floral grouping on a portion of the sheet of material; wrapping the sheet of material about the floral grouping to form a wrapped floral grouping; and forming a crimped portion having a plurality of connected overlapping folds in the sheet of material of the wrapped floral grouping, the crimp connecting means holding the crimped portion about a portion of the stem portion to hold the sheet of material about the floral grouping.

The invention includes a method of wrapping a floral grouping, comprising: providing a floral grouping having a bloom portion and a stem portion; providing a wrapper comprising: a sleeve of material having a first end, a second end, an outer surface, an inner surface, an opening at the first end, a circumference, and an inner retaining space bounded by the inner surface and sized to substantially surround and encompass the floral grouping when wrapped thereabout, and crimp connecting means comprising a cinching tab extending from the sleeve of material for bondingly connecting to a portion of the sleeve of material when a crimped portion is formed in the sleeve of material and wherein the sleeve of material is free of preformed folds or creases which determine the position of the crimped portion; placing at least a portion of the stem portion of the floral grouping into the retaining space of the sleeve of material; and crimping a portion of the sleeve of material about the stem portion of the floral grouping to form a crimped portion comprising overlapping folds, the crimp connecting means holding the crimped portion.

In addition, the invention includes a method of wrapping a floral grouping, comprising: providing a floral grouping having a bloom portion and a stem portion; providing a wrapper comprising: a sleeve of material having a first end, a second end, an outer surface, an inner surface, an opening at the first end, and an inner retaining space bounded by the inner surface and sized to substantially surround and encompass the floral grouping when wrapped thereabout, and crimp connecting means comprising a bonding material disposed upon a portion of at least one of the inner surface or the outer surface of the sleeve of material for bondingly connecting overlapping portions of the sleeve of material when a crimped portion is formed in the sleeve of material; placing at least a portion of the stem portion of the floral grouping into the retaining space of the sleeve of material; and crimping portions of the sleeve of material about the stem portion of the floral grouping to form a crimped portion in the sleeve of material, the bonding material of the crimp connecting means holding overlapping portions of the crimped portion in place, thereby holding the sleeve of material about the floral grouping.

### BRIEF DESCRIPTION OF THE DRAWINGS

Figure 1 is a plan view of a sheet of material with one end turned up and constructed in accordance with the present invention.
Figure 2 is a plan view of a second sheet of material with one end turned up and constructed in accordance with the present invention.
Figure 3 is a perspective view showing the first and the second sheets of material disposed adjacent each other.
Figure 4 is a diagrammatic view of a plurality of sheets of material, constructed in accordance with the present invention forming a continuous roll, the roll partially unrolled to reveal a single sheet still attached thereto.
Figure 5 is a diagrammatic view of a plurality of sheets of material forming a continuous roll of material disposed in a dispenser.
Figure 6 is a diagrammatic view showing a roll of material wherein the roll of material comprises a first and a second sheet of material constructed in accordance with the present invention disposed in a dispenser for dispensing the first and the second sheets of material from the roll of material.
Figure 7 is a perspective view of a floral arrangement disposed on a sheet of material such as that disclosed herein.
Figure 8 is a perspective view of the floral arrangement and sheet of material of Figure 7 being wrapped in one method of wrapping.
Figure 9 is a perspective view of the floral arrangement wrapped in a conical fashion.
Figure 10 is a perspective view of the conical floral arrangement of Figure 9 with the cinching tab wrapped tightly about the wrapper causing the crimping of the wrapper about the stems.
Figure 11 is a perspective view of another method of using a sheet of material to wrap a floral arrangement and sheet of material of Figure 7 in a cylindrical fashion.
Figure 12 is a perspective view of the cylindrically wrapped floral grouping of Figure 11 having the cinching tab wrapped tightly about the wrapper causing the crimping of the wrapper about the stems.
Figure 13 is a plan view of a sheet of material constructed in accordance with the present invention having a first strip and a second strip of bonding material applied to a portion of the upper surface thereof.
Figure 14 is a plan view of a sheet of material having a first strip of bonding material on the upper surface and a second strip of bonding material applied to the lower surface thereof.
Figure 15 is a perspective view of the sheet of material of Figure 13 and having a floral grouping disposed thereon.
Figure 16 is a perspective view of the sheet of material and the floral grouping of Figure 15 showing the method used to wrap the sheet of material about the floral grouping.
Figure 17 is a perspective view of the sheet of material of Figure 16 wrapped completely about the floral grouping in a conical fashion.
Figure 18 is a perspective view of the wrapper and floral grouping of Figure 17 which indicates how the second bonding portion of the wrapper has been crimped about the stems of the flowers to form a bound area of the wrapper.
Figure 19 is a perspective view of the sheet of material of Figure 15 wrapped about a floral grouping in a cylindric manner.
Figure 20 is a perspective view of the cylindric wrapper of Figure 19 showing the second bonding material crimped about the stems of the floral grouping.
Figure 21 is a perspective view of the sheet of material of Figure 14 and having a floral grouping disposed on the upper surface thereof.
Figure 22 is a perspective view of the sheet of material and the floral grouping of Figure 21 showing the method used to wrap the sheet of material about the floral grouping.
Figure 23 is a perspective view of the sheet of material of Figure 22 wrapped completely about the floral grouping in a conical fashion.
Figure 24 is a perspective view of the wrapper and floral grouping of Figure 23 which indicates how the second bonding portion of the wrapper has been crimped about the stems of the flowers to form a bound area of the wrapper.
Figure 25 is a perspective view of the sheet of material of Figure 21 wrapped about a floral grouping in a cylindric manner.
Figure 26 is a perspective view of the cylindric wrapper of Figure 25 showing the second bonding material crimped about the stems of the floral grouping.
Figure 27 is a perspective view of a modified wrapping material constructed exactly like the wrapping material of Figure 1 and having a pull tab.
Figure 28 is a perspective view of a the wrapping material of Figure 27 showing a wrapped floral arrangement, but showing the wrapper crimped near the stem end of the floral arrangement.
Figure 29 is a perspective view of a the wrapped floral arrangement, but showing the wrapper crimped near the stem end of the floral arrangement, the crimped end being twisted about the stem end by being rotated clockwise one-quarter turn.
Figure 30 is a perspective view of the wrapped floral arrangement of Figure 27, but showing the wrapping material partially unwrapped from around the floral arrangement.
Figure 31 is a perspective view of a wrapping material constructed exactly like the wrapping material of Figure 27, but showing the elongation of the pull tab, the pull tab having a bonding material at partially disposed thereon.
Figure 32 is a perspective view of a the wrapping material of Figure 31 showing a wrapped floral arrangement, but showing the wrapper crimped near the stem end of the floral arrangement, and showing the pull tab acting to both crimp the wrapping material and retaining the wrapping material in the crimped condition.
Figure 33 is a perspective view of the wrapped floral arrangement of Figure 32, but showing the wrapping material partially unwrapped from around the floral arrangement.
Figure 34 shows the floral grouping and sheet of material of another sheet of material wrapped in a conical fashion.
Figure 35 shows the sheet of material of Figure 34 wrapped about the floral grouping in a cylindrical fashion.
Figure 36 is a perspective view of a wrapper constructed in accordance with the present invention after a floral grouping has been disposed within the wrapper interior and further shows the release strip partially detached from the bonding material on the wrapper.
Figure 37 is a perspective view of the wrapper and floral grouping of Figure 36 showing one way in which the wrapper can be folded about the stems of the floral grouping.
Figure 38 is a perspective view of the wrapper and floral grouping of Figure 37 once the wrapper has been folded about the stems and cinched using the closure bonding material.
Figure 39 is a perspective view of a wrapper for a floral grouping constructed in accordance with the present invention.
Figure 40 is a transverse view of the wrapper of Figure 39 showing a portion of the inner surface of the sleeve having a bonding material disposed upon a portion thereof.
Figure 41 is a transverse view of a modified wrapper substantially similar to the wrapper of Figure 39 but showing a portion of the outer surface of the sleeve having a bonding material disposed upon a portion thereof.
Figure 42 is a perspective view of the wrapper of Figure 39 and a floral grouping, showing the floral grouping being disposed into the wrapper via the stem portion of the floral grouping.
Figure 43 is a perspective view of the wrapper of Figure 42 but showing the stem portion disposed inside of the wrapper.
Figure 44 is a perspective view of the wrapper of Figure 42 but showing the floral grouping disposed inside of the wrapper with the bloom portion near the first end and the stem portion extending from the second end.
Figure 45 is a perspective view of the wrapper of Figure 44 but showing the wrapper crimped about the stem portion of the floral grouping, the crimped portion forming overlapping folds.
Figure 46 is a perspective view of the modified wrapper shown in Figure 41, but showing the wrapper crimped about the stem portion of the floral grouping, the crimped portion forming overlapping folds.
Figure 47 is a perspective view of a wrapper constructed in accordance with the present invention and having the floral grouping disposed within the interior thereof.
Figure 48 is a perspective view of the wrapper and floral grouping of Figure 47 and further showing the cinching tab cinching a portion of the wrapper tightly about the stems of the floral grouping.
Figure 49 is a perspective view of a wrapper constructed in accordance with the present invention and having a floral grouping disposed within the interior thereof.
Figure 50 is a perspective view of the wrapper and the floral grouping of Figure 49 after the closure bonding material has been crimped about the stems of the floral grouping and after the cinching tab has been cinched tightly about the stems of the floral grouping.
Figure 51 is a perspective of a wrapper constructed in accordance with the present invention and having a floral grouping disposed within the interior thereof.
Figure 52 is a perspective view of the wrapper and floral grouping of Figure 51 and showing the wrapper crimped about the stems of the floral grouping by the closure bonding material further showing the cinching tab cinched tightly about the stems of the floral grouping.
Figure 53 is a plan view of a wrapper constructed in accordance with the present invention having a cinching tab attached thereto further having a lower end flap and an upper end flap.
Figure 54 is a plan view of a wrapper comprising a first surface and a second surface and having a bonding material disposed upon a portion of the interior portion of the surfaces thereof.
Figure 55 is a plan view of a wrapper having a first surface and a second surface and having a bonding material disposed upon a portion of the interior portions of the surfaces thereof and further having a closure tab.

### DESCRIPTION OF THE INVENTION

The present invention contemplates a wrapping material having a crimp connector for firmly holding overlapping portions of the wrapper in a crimped position adjacent the stem portion of the floral grouping. The crimp connector may further comprise a bonding material, or a cinching tab, or both for enhancing the ability to crimpingly wrap a floral arrangement. The present invention also contemplates a wrapping material which is readily removed, that is, a wrapping material which also has a pull tab and pull indicia and which permits the bonding material to be more readily released from the wrapping material, so that the wrapping material can be quickly and easily removed from the floral arrangement.

More particularly, the present invention in one version is a wrapper for wrapping a floral grouping having a bloom portion and a stem portion. The wrapper comprises a material sized to substantially surround and encompass the floral grouping when wrapped thereabout, and comprises crimp connecting means for holding a portion of the material about the floral grouping when the material is crimpingly wrapped about the floral grouping, the crimp connecting means comprising a bonding material for bondingly connecting to portions of the material when a crimped portion is formed in the material. When the wrapper is crimpingly wrapped about the stem portion of the floral grouping, a plurality of overlapping folds is formed in the crimped portion of the material and the overlapping folds are held in place by the crimp connecting means to hold the material about the floral grouping.

In one version of the present invention, the wrapper may be a sheet of material having a first end, a second end, a first side, a second side, an inner (or upper) surface and an outer (or lower) surface. The bonding material of the crimp connecting means may be disposed on portions of the inner surface, portions of the outer surface, or portions of both the inner surface and the outer surface of the sheet of material. The wrapper may further comprise sheet connecting means comprising a bonding material for connecting portions of the inner surface of the sheet of material to portions of the outer surface of the sheet of material when the sheet of material is wrapped about the floral grouping.

In an alternate embodiment the wrapper may comprise a sleeve such as a sleeve commonly known in the art having a first end, a second end, an outer surface, an inner surface, a first opening at the first end, a second opening at the second end, and an inner retaining space bounded by the inner surface and extending from the first opening to the second opening. The bonding material of the crimp connecting means may be disposed on portions of the inner surface, portions of the outer surface, or portions of both the inner surface and the outer surface of the sleeve. The sleeve may have closure means for closing the first end of the sleeve, the second end of the sleeve, or both the first end and the second end of the sleeve after the sleeve has been wrapped about the floral grouping.

In any case, the crimp connecting means of the wrapper may further comprise an extension such as a cinching tab for wrapping about the crimped portion of the wrapper to retain crimped portions of the wrapper in a crimped condition about the floral grouping. The extension may further comprise a bonding material disposed upon a portion thereof for connecting the extension to a portion of the wrapper. Additionally, the wrapper may have a pull tab for aiding in the release of the wrapper from the floral grouping. The pull tab may further comprise a bonding material disposed upon a portion thereof for connecting the pull tab to a portion of the wrapper. The wrapper may further comprise a label bonding material disposed upon a surface of the wrapper for affixing a label to a portion of the wrapper.

The wrapper may be constructed from a material selected from the group consisting of paper (untreated or treated in any manner), cellophane, foil, polymer film, fabric (woven or nonwoven or synthetic or natural), burlap, cloth, and any combination thereof and may have a thickness in a range of between about 2.54 µm (0.1 mils) and about 762 µm (30 mils). The material may have two or more layers. The bonding material of the crimp connecting means may be a pressure sensitive adhesive or cohesive, a heat sensitive adhesive or cohesive, a sonically sealable adhesive or cohesive, a vibratingly sealing adhesive or cohesive, a chemically sealing adhesive or cohesive, or a cold sealing lacquer.

In an alternative embodiment, the invention comprises a floral grouping wrapped in a wrapper such as described above, in particular wherein the wrapper is crimpingly wrapped about the stem portion of the floral grouping such that a plurality of overlapping folds is formed in the crimped portion of the material and wherein the crimp connecting means holds the overlapping folds in place to hold the material about the floral grouping. The wrapped floral grouping may be closed by closure means at the upper end, at the lower end or at both the upper end and the lower end of the sleeve. In the wrapped floral grouping the overlapping folds in the crimped portion may be connected together by the bonding material, or may be held together by an extension or may be both connected together by the bonding material and held together by an extension to retain crimped portions of the wrapper in a crimped condition about the floral grouping. The wrapped floral grouping may have a label affixed thereto via a label bonding material disposed upon a surface of the wrapper.

The present invention further comprises a method for wrapping a floral grouping. First is provided a floral grouping having a bloom portion and a stem portion. Next is provided a wrapper made from a sheet of material having a first end, a second end, a first side, a second side, an inner surface and an outer surface, and wherein the sheet of material is sized to substantially surround and encompass the floral grouping when wrapped thereabout. The wrapper further comprises crimp connecting means comprising a bonding material for bondingly connecting to portions of the sheet of material when a crimped portion is formed in the sheet of material.

In the next step the floral grouping is placed on a portion of the sheet of material. The sheet is wrapped about the floral grouping to form a wrapped floral grouping. Finally, a crimped portion is formed in the sheet of material of the wrapped floral grouping. The crimped portion comprises a plurality of overlapping folds in the sheet of material and the crimp connecting means holds the overlapping folds in place to hold the sheet of material about the floral grouping. In this method, the bonding material of the crimp connecting means may be disposed on portions of the inner surface, portions of the outer surface, or portions of both the inner surface and the outer surface of the sheet of material. In the step of forming the crimped portion at least some of the overlapping folds in the crimped portion of the sheet of material may be connected together by the bonding material of the crimp connecting means. Alternatively, in the step of providing the wrapper, the wrapper may further comprise sheet connecting means comprising a bonding material for connecting portions of the inner surface of the sheet of material to portions of the outer surface of the sheet of material.

In yet another version of the method, the step of providing a wrapper may comprise providing a pad of sheets of material, the pad having a top sheet of material and wherein the sheet connecting means of each sheet of material bondingly connects to a portion of an adjacent sheet of material for cooperating to connect the sheets of material into the pad and wherein the sheet connecting means on each sheet of material releasably connects each sheet of material to one other sheet of material whereby one of the sheets of material can be releasably disconnected from another sheet of material by pulling the sheets of material apart. In the step of providing a pad of sheets of material, the step of wrapping the sheet of material about the floral grouping may further comprise placing a portion of the top sheet of material over at least a portion of the floral grouping and rolling the top sheet of material and the floral grouping and wrapping the top sheet of material about the floral grouping, the sheet connecting means on the top sheet of material being bondingly connected to another portion of the top sheet of material for further securing the top sheet of material about the floral grouping and the top sheet of material being removed from the pad of sheets of material as the top sheet of material is wrapped about the floral grouping. Further, the step of wrapping the top sheet of material about the floral grouping and disconnecting the top sheet of material from the pad leaves the next sheet of material forming a new top sheet of material. The steps of placing the floral grouping on the top sheet of material, and wrapping the top sheet of material about the floral grouping may be repeated with other floral groupings until substantially all of the sheets of material in the pad have been wrapped about the floral groupings.

In the step of providing the wrapper, the crimp connecting means may further comprise an extension from the sheet of material for wrapping about the crimped portion of the wrapper to retain the crimped portion of the wrapper in a crimped condition about the floral grouping. The extension may further comprise a bonding material disposed upon a portion thereof for connecting the extension to a portion of the sheet of material when the extension is wrapped about the crimped portion of the sheet of material. The wrapper may also have a pull tab extending from the sheet of material for aiding in the release of the wrapper from the floral grouping. The pull tab may further comprise a bonding material disposed upon a portion thereof for connecting the pull tab to a portion of the sheet of material. The wrapper may further comprise a label bonding material disposed upon a portion of the sheet of material for affixing a label to the wrapper. The sheet of material and bonding materials may be constructed as described previously.

In an alternate version of the wrapping method, the wrapper provided comprises a sleeve having a first end, a second end, an outer surface, an inner surface, a first opening at the first end, a second opening at the second end, and an inner retaining space bounded by the inner surface and extending from the first opening to the second opening and sized to substantially surround and encompass the floral grouping when wrapped thereabout. The wrapper also has crimp connecting means comprising a bonding material for bondingly connecting to portions of the sleeve when a crimped portion is formed in the sleeve. At least a portion of the stem portion of the floral grouping is placed into the retaining space of the sleeve. Finally, a portion of the sleeve is crimped about the stem portion of the floral grouping to form a crimped portion in the sleeve. As before, the crimped portion comprises a plurality of overlapping folds and the crimp connecting means holds the overlapping folds in place thereby holding the sleeve about the floral grouping. As noted above, the bonding material of the crimp connecting means may be disposed on portions of the inner surface, portions of the outer surface, or portions of both the inner surface and the outer surface of the sleeve.

Further, at least some of the overlapping folds in the crimped portion may be connected together by the bonding material of the crimp connecting means. The sleeve may further comprise closure means for closing the first end of the sleeve, the second end of the sleeve, or both the first end and the second end of the sleeve. The sleeve may have an extension for wrapping about the crimped portion of the sleeve and a label bonding material as described above. The sleeve may be constructed as described above.

The invention will now be described in more detail by the following examples and descriptions. It should not be presumed however, that the invention is to be limited to the descriptions herein.

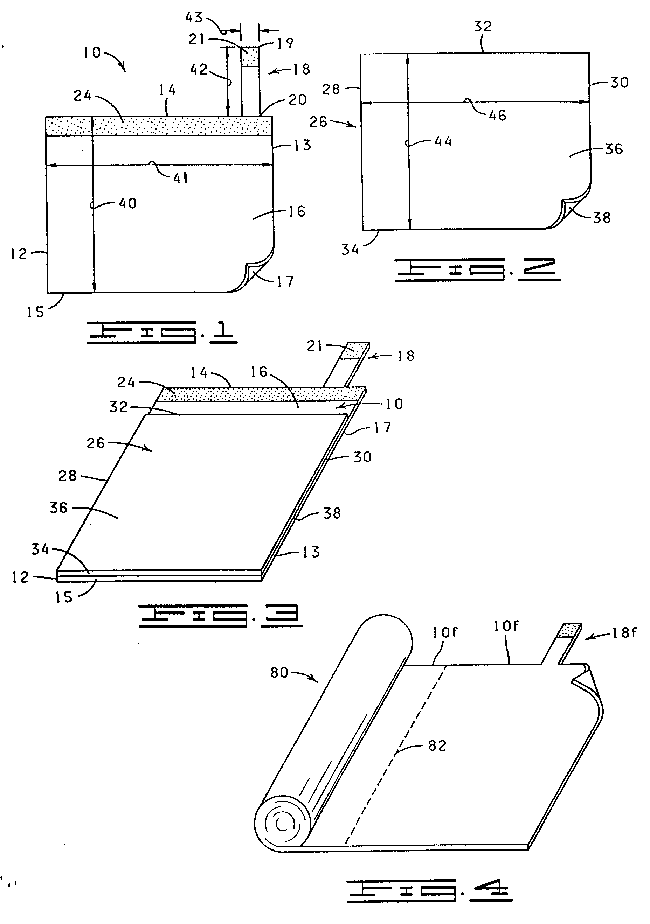

### The Embodiments of Figures 1-12

Shown in Figure 1 and designated therein by the general reference numeral 10 is a wrapper comprising a sheet of material constructed in accordance with one version of the present invention. The sheet of material 10 has a first end 12, a second end 13, a first side 14, a second side 15, an upper surface 16 and a lower surface 17. The upper surface and lower surface may be referred to elsewhere herein as the inner surface and outer surface, respectively.

The sheet of material 10 further comprises a sheet connector and a crimp connector. The sheet connector comprises a closure bonding material which is described in more detail below. The crimp connector, comprises at least a bonding material for crimpingly connecting overlapping portions of the wrapper in a position about the stems of a floral grouping for binding the wrapper firmly to the floral grouping. In the version of the present invention shown in Figure 1, the crimp connector comprises an extension from the sheet which may be referred to more particularly as a cinching tab 18 having a first end 19, a second end 20 and a bonding material 21 disposed on a portion of the cinching tab 18. The cinching tab 18 is attached at the second end 20 to a portion of the sheet of material 10. In Figure 1 the tab 18 is shown attached to a portion of the sheet 10 near the first side 14 of the sheet 10. But it will be understood by one of ordinary skill in the art that the tab 18 can be attached to any portion of the sheet 10 which enables the tab 18 to function in accordance with the invention as presently contemplated and as described in further detail below.

A closure bonding material 24 forms the sheet connector and may be disposed on the upper surface 16 of the sheet of material. Alternatively, the sheet of material 10 may be free of such a closure bonding material in which case the only bonding material on the sheet 10 is that which comprises the crimp connector. As shown in Figure 1, the closure bonding material 24, if present, is disposed in a preferred embodiment adjacent the first side 14 of the sheet of material 10 and extends between the first and the second ends 12 and 13 of the sheet of material 10. As shown in Figure 1, the closure bonding material 24 is disposed on the upper surface 16 in a strip of closure bonding material 24, although the closure bonding material 24 also could be applied to the upper surface 16 of the sheet of material 10 in the form of spaced apart spots or the closure bonding material 24 also could be disposed on the upper surface 16 of the sheet of material 10 in any other geometric form and in any pattern including covering the entire upper surface 16 of the sheet of material 10. In this last-mentioned instance, the closure bonding material and the connecting bonding material would be contained within the bonding material covering the sheet of material 10. The term "spot" or "spots" includes any geometric shape of spot including, but not limited to, what is commonly referred to as strips.

The sheet of material 10 has a thickness in a range from about 2.54 µm (0.1 mils) to about 762 µm (30 mils). Preferably, the sheet of material 10 has a thickness in a range from about 2.54 µm (0.1 mils) to about 127 µm (5 mils).

The sheet of material 10 may be any shape and a square or rectangular shape is shown in Figure 1 only by way of example. The sheet of material 10 for example only may be square, rectangular, circular, may have a scalloped edge, or any other geometric shape such as heart shaped, for example only.

The sheet of material 10 may be constructed of a single layer of material or a plurality of layers of the same or different types of materials (shown below is a case in which sheet 10 is used in conjunction with a second sheet to serve as a wrapper). Any thickness of the sheet of material 10 may be utilized in accordance with the present invention as long as the sheet of material 10 is wrappable about an object, such as a floral grouping or plant, as described herein. The layers of material comprising the sheet of material 10 may be connected together or laminated or may be separate layers, and the layers of material comprising the sheet of material 10 need not be uniform in shape or composition.

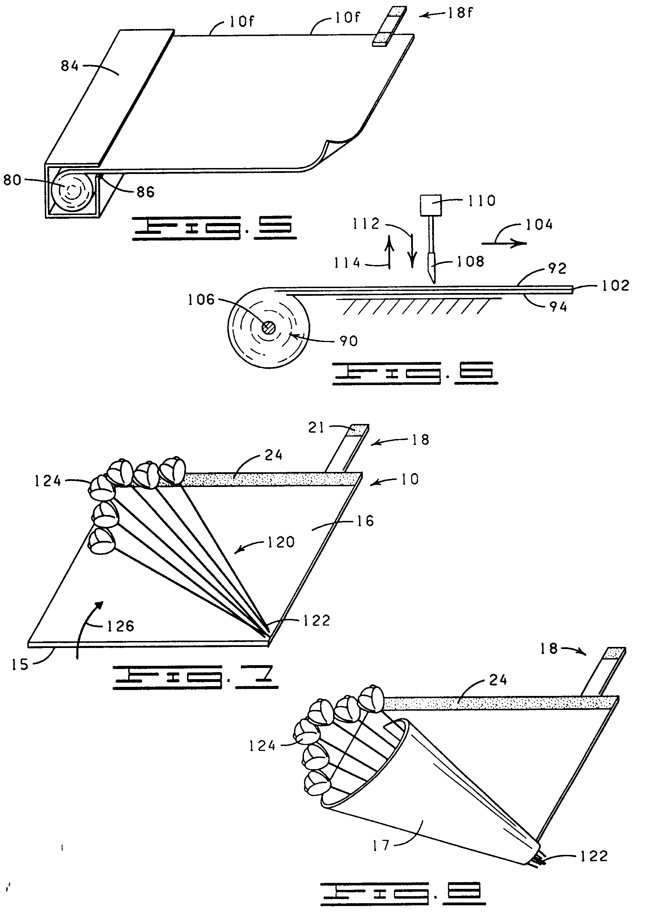

Shown in Figure 2 is a second sheet of material 26. The second sheet of material 26 has a first end 28, a second end 30, a first side 32, a second side 34, an upper surface 36 and a lower surface 38. The second sheet of material is preferably constructed of paper. The term "paper" as used herein means treated or untreated paper, corrugated paper or cardboard or any other form of paper material.

The first sheet of material 10 has a length 40 extending between the first and the second sides 14 and 15 of the sheet of material 10. The first sheet of material 10 also has a width 41 extending between the first and the second ends 12 and 13 of the first sheet of material 10. The crimp connector, or cinching tab, 18 of the sheet of material 10 has a length 42 and a width 43.

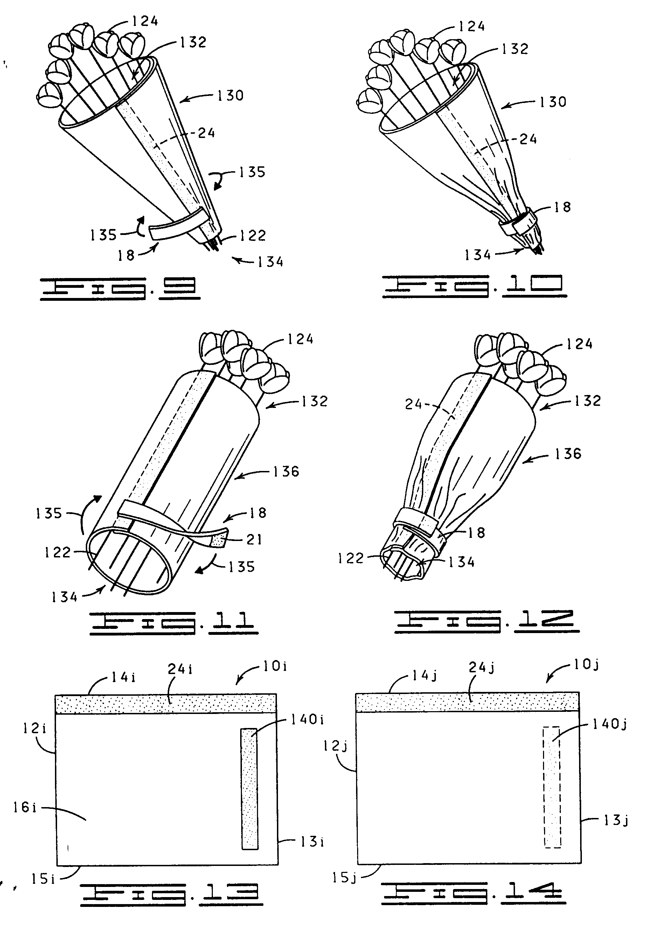

The second sheet of material 26 has a length 44 extending between the first and the second sides 32 and 34 of the second sheet of material 26. The second sheet of material 26 has a width 46 extending between the first and the second ends 28 and 30 of the second sheet of material 26. In a preferred embodiment, the length 44 of the second sheet of material 26 is less than the length 40 of the first sheet of material 10 as shown in Figure 3 so that, when the first sheet of material 10 is disposed adjacent the second sheet of material 26, a portion of the first sheet of material 10 adjacent the first side 14 thereof extends a distance beyond the first side 32 of the second sheet of material 26, in a manner and for reason which will be described in greater detail below.

The first sheet of material has a thickness in a range from about 12.7 µm (0.5 mils) to about 762 µm (30 mils) and preferably the thickness of the first sheet of material is in a range from about 12.7 µm (0.5 mils) to about 254 µm (10 mils). The first sheet of material 10 is constructed of a material which is flexible.

The second sheet of material 26 has a thickness in a range from about 2.54 µm (0.1 mils) to about 762 µm (30 mils) and preferably in a range from about 2.54 µm (0.1 mils) to about 254 µm (10 mils). The second sheet of material 26 is flexible, but preferably is relatively rigid compared to the first sheet of material 10.

The second sheet of material 26 may be any shape and a square or rectangular shape is shown in Figure 2 only by way of example. The second sheet of material for example only may be square, rectangular, circular or any other geometric shape.

The second sheet of material 26 may be constructed of a single layer of materials or a plurality of layers of the same or different types of materials. Any thickness of the second sheet of material 26 may be utilized in accordance with the present invention as long as the second sheet of material 26 is wrappable about an object such as a floral grouping or plant, as described herein, and as long as the second sheet of material 26 provides the rigidity described herein or the absorbency described herein or both. The layers of material comprising the second sheet of material 26 may be connected together or laminated or may be separate layers.

In operation, when a second sheet of material 26 is desired in addition to the first sheet of material 10, the second sheet of material 26 is placed adjacent the first sheet of material 10 as shown in Figure 3. In this position, the lower surface 38 of the second sheet of material 26 is disposed adjacent the upper surface 16 of the first sheet of material 10. The width 41 of the first sheet of material 10 is about equal to the width 46 of the second sheet of material 26 so that, when the first and the second sheets of material 10 and 26 are disposed adjacent each other, the first end 28 of the second sheet of material is generally aligned with the first end 12 of the first sheet of material 10, the second end 30 of the second sheet of material 26 is generally aligned with the second end 13 of the first sheet of material 10, the second side 15 of the first sheet of material 10 is generally aligned with the second side 34 of the second sheet of material and the first side 14 of the first sheet of material 10 extends a distance beyond the first side 32 of the second sheet of material 26 so that the closure bonding material 24 on the upper surface 16 of the first sheet of material 10 is exposed and not covered by the second sheet of material 26.

It should be noted that the first and the second sheets of material 10 and 26 each could have virtually identical lengths 40 and 44. In this case, the second sheet of material 26 is disposed on the first sheet of material 10 in such a manner that the second side 34 of the second sheet of material 26 extends a distance beyond the second side 15 of the first sheet of material 10 whereby the first side 14 of the first sheet of material 10 is spaced a distance from the first side 32 of the second sheet of material 26 thereby leaving the closure bonding material 24 on the first sheet of material 10 exposed and not covered by the second sheet of material 26. And multiple sheets of material 10 and 26 may be used. Moreover, when multiple sheets of material 10 and 26 are used in combination, the sheets of material 10 and 26 need not be uniform in size or shape. Finally, it will be appreciated that the sheets of material 10 and 26 shown in all embodiments herein are substantially flat.

As noted earlier, a sheet connector or closure bonding material, may be disposed on the upper surface of the first sheet of material 10. The closure bonding material 24 may be applied as a strip or as spots or other shapes either manually or automatically.

As noted above, the first sheet of material 10 can be utilized alone or in combination with the second sheet of material 26 or additional sheets of material to wrap a floral grouping. "Floral grouping" as used herein means cut fresh flowers, artificial flowers, a single flower other fresh and/or artificial plants or other floral materials and may include other secondary plants and/or ornamentation or artificial or natural materials which add to the aesthetics of the overall floral arrangement. The floral grouping comprises a bloom or foliage portion and a stem portion. However, it will be appreciated that the floral grouping may consist of only a single bloom or only foliage (not shown). The term "floral grouping" may be used interchangeably herein with the term "floral arrangement".

The first sheet of material 10 or the second sheet of material 26 may be constructed of a single layer of material or a plurality of layers of the same or different types of materials. Any thickness of the sheet of material 10 or 26 may be utilized in accordance with the present invention as long as the sheet of material 10 or 26 may be wrapped or formed about at least a portion of a portion of a flower pot or a floral grouping, as described herein. Additionally, an insulating material such as bubble film, preferable as one of two or more layers, can be utilized in order to provide additional protection for the item wrapped therein.

In a preferred embodiment, the first sheet of material 10 is constructed from two polypropylene films (a 50.8 cm (20") x 38.1 cm (15") sheet of Mobil 270 ABW white opaque film laminated to a 50.8 cm (20") x 38.1 cm (15") sheet of Mobil 220 AB clear film) having a thickness in a range of from less than about 25.4 µm (1.0 mil) to about 63.5 µm (2.5 mils). The layers of material comprising the first sheet of material 10 may be connected together or laminated or may be separate layers.

The sheet of material 10 is constructed from any suitable wrapping material that is capable of being wrapped about a floral grouping. Preferably, the wrapping material 10 comprises paper (untreated or treated in any manner), cellophane, foil, polymer film, fabric (woven or nonwoven or synthetic or natural), burlap, or combinations thereof.

The term "polymer film" means a man-made polymer such as a polypropylene or a naturally occurring polymer such as cellophane. A polymer film is relatively strong and not as subject to tearing (substantially non-tearable), as might be the case with paper or foil.

The sheet of material 10 or 26 may vary in color. Further, the sheet of material 10 or 26 may consist of designs or decorative patterns which are printed, etched, and/or embossed thereon using inks or other printing materials which are well known to those of ordinary skill in the art. In addition, the sheet of material 10 or 26 may have various colorings, coatings, flocking and/or metallic finishes, or other decorative surface ornamentation applied separately or simultaneously or may be characterized totally or partially by pearlescent, translucent, transparent, iridescent or the like, qualities. Each of the above-named characteristics may occur alone or in combination and may be applied to the upper and/or lower surface of the sheet of material 10 or 26. Moreover, each surface of the sheet of material 10 or 26 may vary in the combination of such characteristics. The sheet of material 10 or 26 itself may be opaque, translucent, transparent or partially clear or tinted transparent.

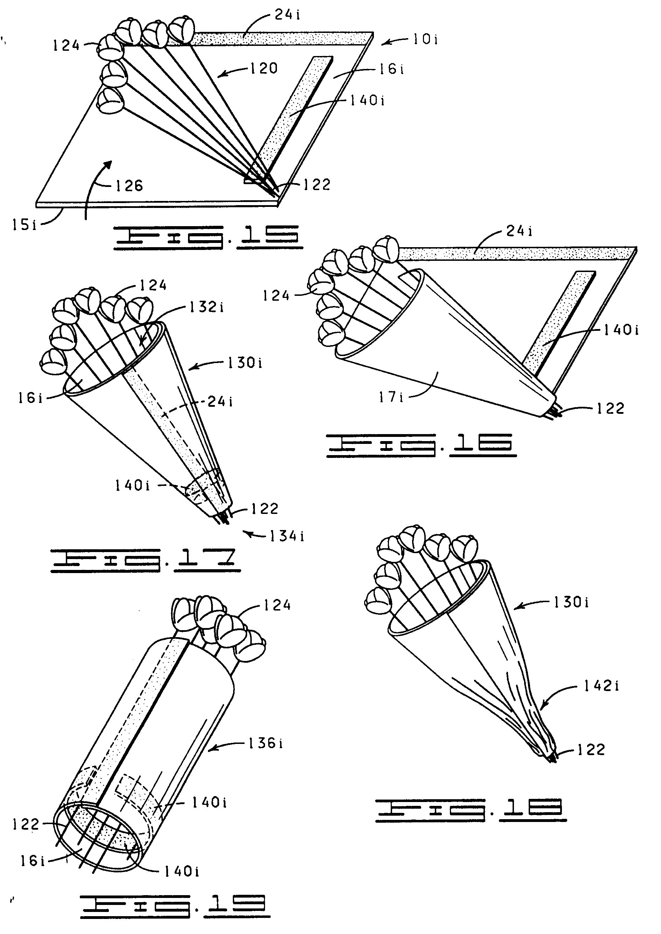

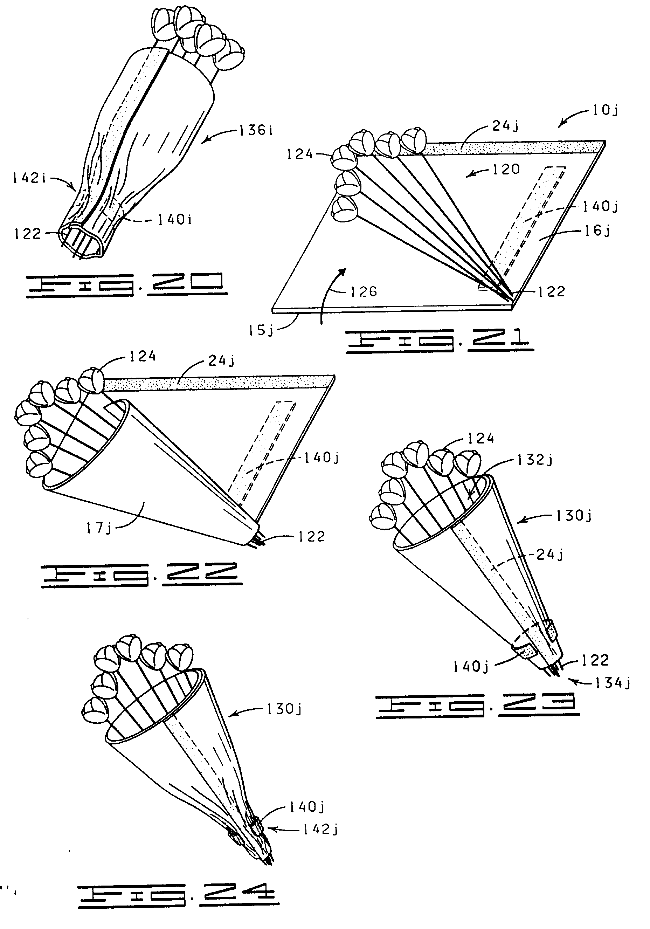

Referring now to Figure 4, a plurality of individual sheets of material 10f are connected linearly together to form a roll 80. Preferably, the plurality of sheets of material 10f in the roll 80 are connected by perforations 82, as illustrated in Figure 4. Such a roll 80 permits one sheet of material 10f to be withdrawn from the roll 80, then severed or disconnected from the roll 80. Alternatively, as shown in Figure 5, the roll 80 may simply be formed as a continuous roll 80 of wrapping material without perforations, wherein a plurality of sheets of material 10f may be removed from the roll 80 by unrolling a portion of the roll 80, and using a separate cutting element (not shown) to sever the unrolled portion of the roll 80 of material to form the sheet of material 10f. The roll 80 may also be contained within a dispenser 84, as illustrated in Figure 5. When the roll 80 is disposed in the dispenser 84, a portion of the wrapping material is again unrolled, and a serrated cutting edge 86 contained within the dispenser 84, or a separate cutting element (not shown), severs the unrolled portion of the wrapping material from the roll 80 to form a sheet of material 10f. Any number of sheets of material 10f may form the roll 80 as long as it is possible to withdraw at least one sheet 10f from the roll 80 as described herein.

Each sheet 10f of roll 80 is either equipped with a cinching tab 18f as shown in Figure 4 wherein the tab 18f is integral with one end or side of a sheet 10f. Alternatively, the cinching tab 18f may be affixable to the sheet 10f after the roll 80 has been unrolled to expose sheet 10f as shown in Figure 5.

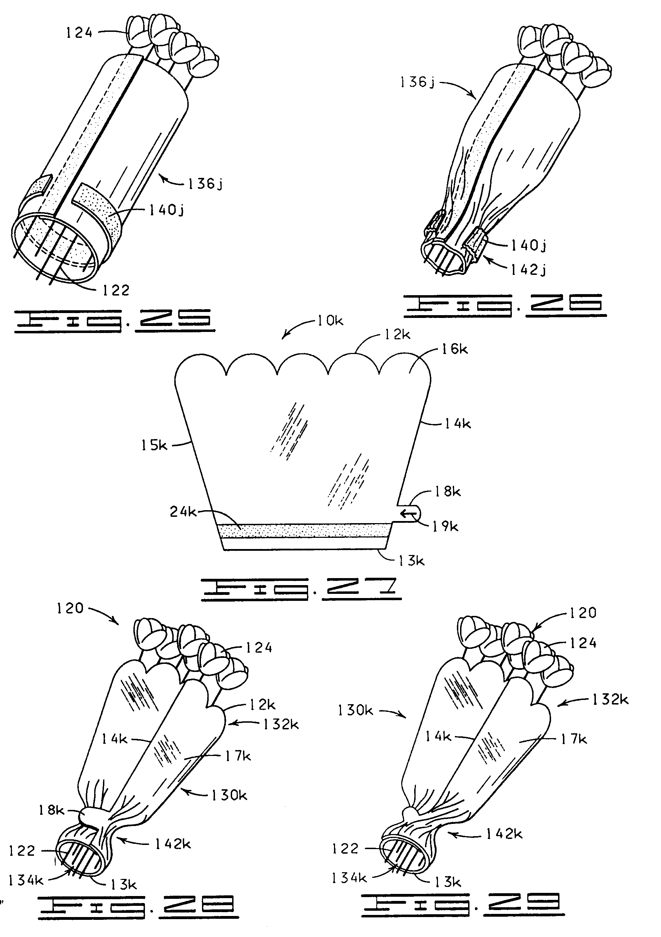

As shown in Figure 6, the first and the second sheets of material described herein can be provided in the form of a roll of first and second sheets of material wherein the first and the second sheets of material are unrolled from the roll of first and second sheets of material and the first and the second sheets of material are severed from the roll either by perforations at spaced apart locations in the roll or by cutting the first and the second sheets of material from the roll. It also should be noted that additional sheets of material may be combined with the first and the second sheets of material if so desired in a particular application.

Shown in Figure 6 is a roll of material 90 comprising a first material 92 and a second material 94 with the second material 94 being disposed adjacent the first material 92. The first material 94 is constructed of any of the materials described before with respect to the first sheet of material. The second material 94 is constructed of any of the materials described before with respect to the second sheet of material.

The roll of material 90 may be disposed in a dispenser (not shown) having an opening through which the materials 92 and 94 may be withdrawn from the roll of material 90. A cutting edge (not shown) may be disposed on the dispenser near the opening. The cutting edge may be a sawtooth type of edge or the cutting edge may be any other type of edge or device suitable for cutting a portion of the materials 92 and 94 from the roll of material 90 and the cutting edge may be connected to the dispenser or may be a separate component if desired in a particular application.

The roll of material 90 has a leading edge 102. In operation, the leading edge 102 is gripped or a portion of the first and/or the second materials are gripped and the first and the second materials are unrolled and withdrawn from the roll of material 90 in a direction 104. The first and the second materials 92 and 94 are withdrawn or unrolled from the roll of material 90 until a desired length of the first and the second materials 92 and 94 have been withdrawn from the roll of material 90. In this position, a portion of the first and the second materials 92 and 94 are disposed adjacent the cutting edge. The first and the second materials 92 and 94 then are maneuvered to pass the first and the second materials 92 and 94 over the cutting edge thereby severing a portion of the material extending a distance from the leading edge 102 thereof from the roll of material 90. The portion of the first and the second materials 92 and 94 withdrawn from the roll of material 90 and severed from the roll of material 90 comprise the first and the second sheets of material as described herein.

The first and the second materials 92 and 94 in the roll of material 90 may be connected or unconnected. Further, the roll of material 90 may comprise two rolls of material with one of the rolls of material comprising the first material 92 and the other roll of material comprising the second material 94. In this last-mentioned embodiment, the first material 92 is withdrawn from the first roll of material and the second material 94 is withdrawn from the second roll of material about simultaneously so that the first and the second materials 92 and 94 are provided in a manner as generally shown in Figure 6 for severing from the first and second rolls of material to provide the first and the second sheets of material as described herein. The term "roll of material" as used herein is intended to encompass two or more rolls in the manner generally described.

As shown in Figure 6 the roll of material 90 is supported on a generally mounted shaft 106. The first and the second sheets of material 92 and 94 are withdrawn from the roll of material 90 until a predetermined length of the first and the second materials 92 and 94 have been withdrawn from the roll of material 90. In this position, a portion of the first and the second materials 92 and 94 are disposed under a knife edge 108. The knife edge 108 is connected to an actuator 110 adapted to move the knife edge 108 in a direction 112 and in a direction 114. When the predetermined length of the first and the second materials 92 and 94 have been withdrawn from the roll of material 90, the actuator 110 actuates to move the knife edge 108 in the direction 112 to a position wherein the knife edge 108 severingly engages the materials 92 and 94 to severingly cut a portion of the first and the second materials 92 and 94 from the roll of materials 90 to provide the first and the second sheets of material as described herein. The actuator 110 may comprise a hydraulic or pneumatic cylinder or a motor and gear arrangement or any other form of arrangement suitable for moving the knife edge 108 in the directions 112 and 114. After the knife edge 108 has cuttingly severed the desired portion of the first and the second sheets of material 92 and 94 from the roll of material 90, the actuator 110 is actuated to move the knife edge 108 in the direction 114 to a storage position disposed a distance above the first and the second materials 92 and 94 as opposed to the cutting position previously described.

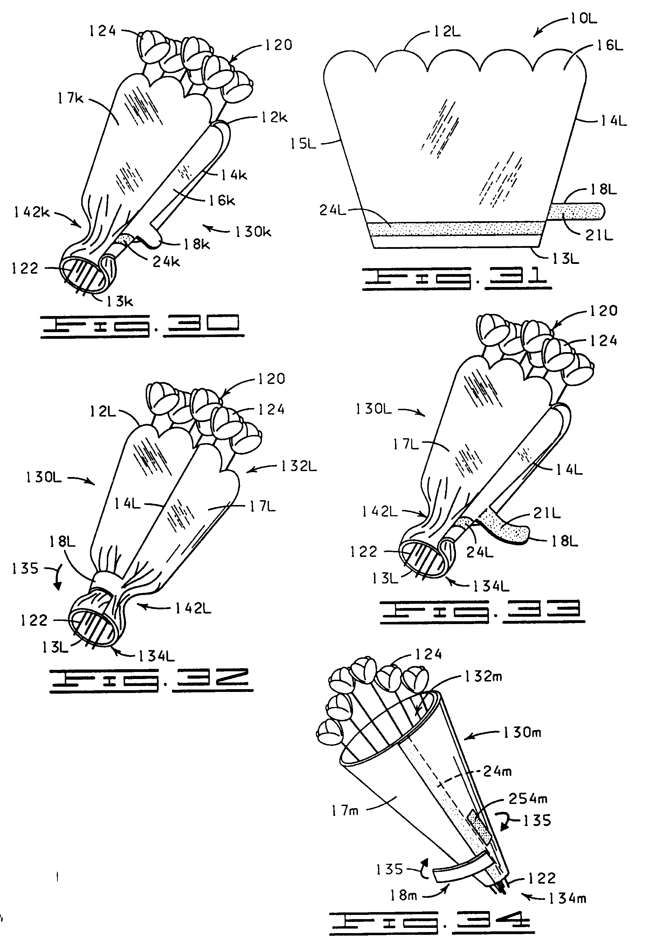

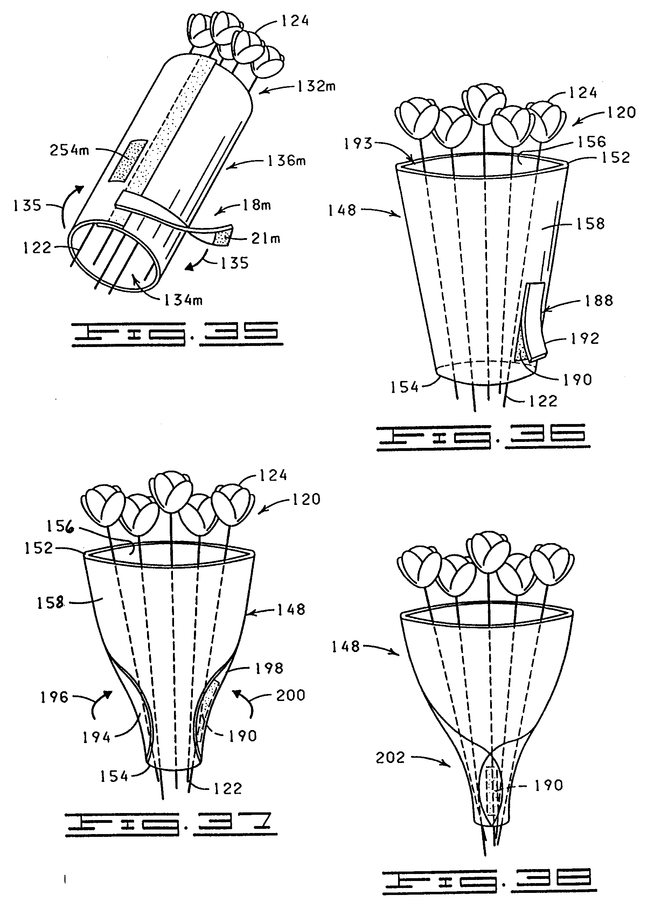

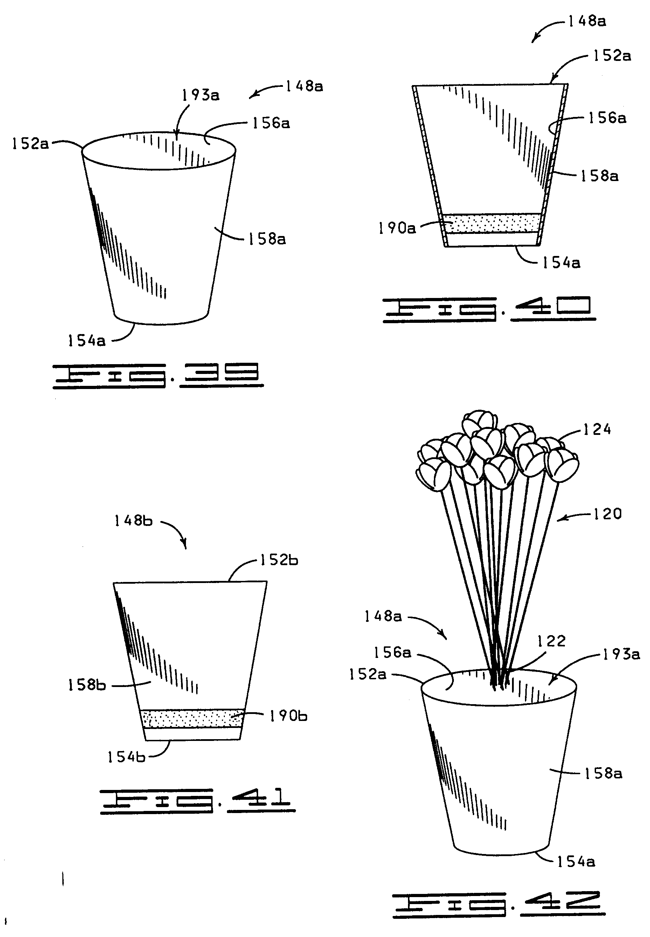

As noted above, the present invention contemplates in one embodiment using the sheet of material 10 having a crimp connector comprising an extension, or cinching tab 18 to wrap a floral grouping. A floral grouping 120 having a stem end 122 and a bloom end 124 (Figure 7) is disposed on the upper surface 16 of the sheet of material 10. The sheet of material 10 then is wrapped about the floral grouping 120 by taking the second side 15 of the sheet of material 10 and rolling the sheet of material 10 in a direction 126 about the floral grouping 120 (Figure 8). The floral grouping 120 is shown as having the bloom end 124 resting upon the closure bonding material 24 of the sheet 10, however, preferably the bloom end 124 does not rest on the closure bonding material 24. The sheet of material 10 is continued to be rolled about the floral grouping 120 until a portion of the sheet connector, i.e., the closure bonding material 24, is disposed adjacent a portion of the lower surface 17 of the sheet of material 10 and brought into bonding contact or engagement therewith (Figure 9) thereby bondingly connecting the closure bonding material 24 on the upper surface 16 of the sheet of material 10 to a portion of the lower surface 17 of the sheet of material 10 for cooperating to secure the first sheet of material 10 in a wrapped condition about the floral grouping 120 to provide a wrapper 130 wrapped about the floral grouping 120, as shown in Figure 9.

In the wrapped condition with the sheet of material 10 wrapped about the floral grouping 120 as shown in Figure 9, the wrapper 130 forms a conical shaped with an open upper end 132 and an open lower end 134. The wrapper 130 covers a portion of the bloom end 124 of the floral grouping 120. A portion of the stem end 122 of the floral grouping 120 extends through the opened lower end 134 of the wrapper 130.

The wrapper 130 is caused to be more tightly wrapped about the floral grouping 120 by grasping the cinching tab 18 and pulling the cinching tab 18 in a direction 135 about the lower end of the wrapper 130. Once the tab 18 has been wrapped tightly about lower end of the wrapper 130, the portion of the tab 18 having the bonding material 21 applied thereto is engagingly pressed against the wrapper 130 to affix the tab 18 to the wrapper 130 thereby causing the lower end of the wrapper 130 to be crimpingly wrapped about the stem end 122 of the floral grouping 120 for inhibiting the floral grouping 120 from slipping or moving excessively within the wrapper 130.

The crimping may be conducted as the floral grouping 120 is wrapped (not shown), or the crimping may be conducted after the floral grouping is wrapped by crimping the sheet of material 10 in the area of the bonding material 24. Such crimping may be conducted by hand, by grasping and substantially encompassing with one or more hands the lower end of the wrapper 130, in the area of the bonding material 24, and evenly and firmly squeezing the sheet of material 10 and forming overlapping folds in the sheet about the area of the bonding material 24, thereby pressing and gathering both the sheet of material 10 against itself and against the stem end 122 of the floral grouping 120 and the bonding material 24 against itself and against the stem end 122 of the floral grouping 120. The wrapper 130 may also be crimped by using both a crimping motion and a turning motion to create a twisted crimping (not shown), resulting in a wrapper 130 which is both crimped, as described previously, and which is twisted about the stem end 122 (the sheet of material 10 near the stem end 122 being rotated between about one-eighth of a turn to about a full turn) primarily in the area near the stem end 122 of the floral grouping 120. Such crimping as described above may also be conducted by any instrument or machine used for gathering or crimping materials. The cinching tab 18 may be utilized to both crimp the wrapper 130 in a crimped condition, as described above, that, is, the cinching tab may perform the crimping, as well as retaining the wrapper 130 in a crimped condition.

At least a portion of the floral grouping 120 is disposed within the wrapper 130. In some applications, the stem end 122 of the floral grouping 120 extends through the open lower end 134 of the wrapper 130, as described before. The bloom end 124 of the floral grouping 120 is disposed near the open upper end 132 of the floral grouping 120 and the bloom end 124 of the floral grouping 120 is visible via the open upper end 132 of the wrapper 130. In some instances, the bloom end 124 of the floral grouping 120 may extend beyond the open upper end 132 of the wrapper 130. In some applications, the upper end 132 of the wrapper 130 may be closed if desired. In some applications, the lower end 134 of the wrapper 130 may be closed if desired.

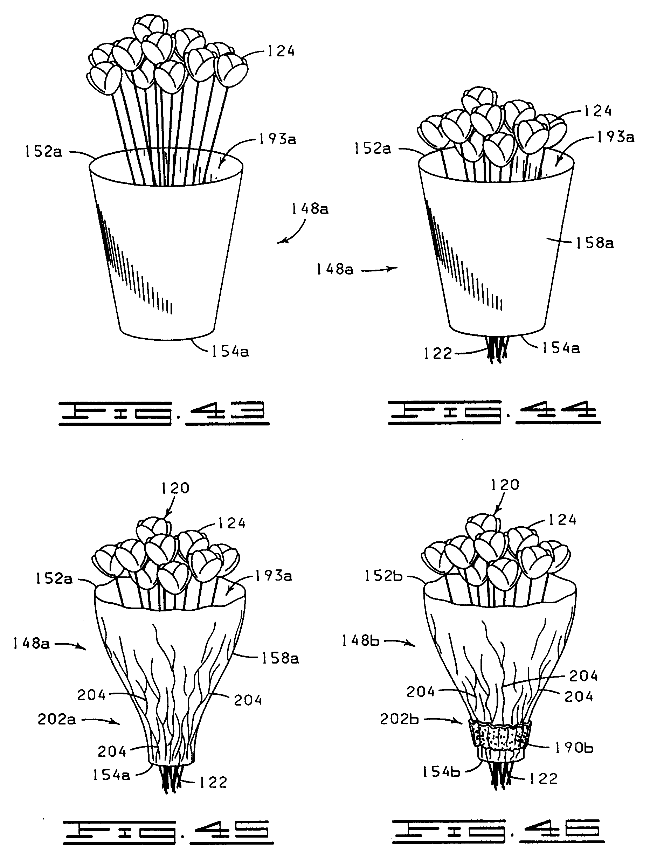

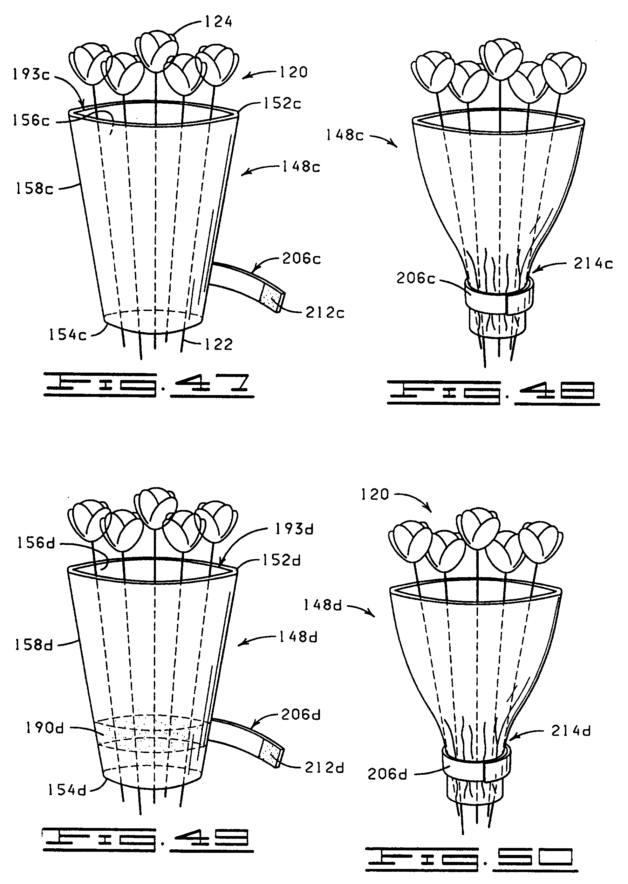

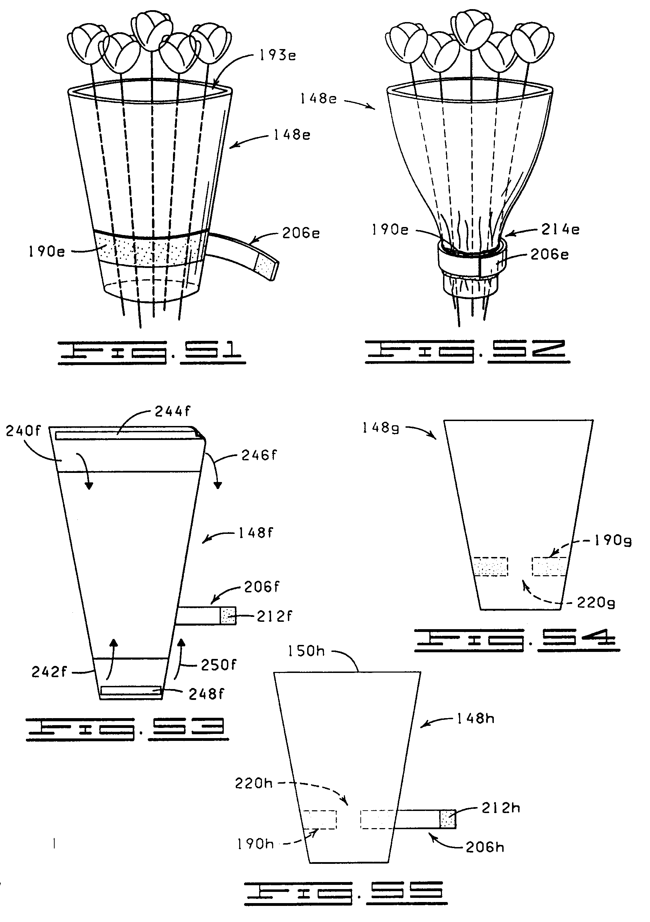

The wrapper 130, formed from the sheet of material 10, as shown in Figures 9 and 10, is generally conically shaped. The sheet of material 10 may also be wrapped about the floral grouping 130 to form a cylindrically shaped wrapper 136 as shown in Figures 11 and 12 or any other shape wrapper if desired in a particular application. When the sheet of material 10 is wrapped cylindrically about the floral grouping 120 as shown in Figure 11, the cinching tab 18 is disposed about the wrapper 130 in exactly the same way as the conically shaped wrapper 130 shown in Figure 10 yet still maintaining a generally cylindric shape as shown in Figure 12.

When the floral grouping 120 is wrapped using both a first sheet of material 10 and a second sheet material 26, the floral grouping 120 is disposed on the upper surface 36 of the second sheet of material 26. First and second sheets of material which are placed similarly to the placement shown in Figure 3 are then wrapped about the floral grouping 120 in substantially the same manner that a single first sheet of material 10 is wrapped about the floral grouping 120 to arrive at a conically or cylindrically wrapped floral grouping as described above whereby a closure bonding material 24 on the first sheet is brought into bonding contact or engagement therewith thereby bondingly connecting the closure bonding material 24 on the upper surface 16 of the first sheet of material 10 to a position of the lower surface 17 of the first sheet of material 10.

When used in the context of wrapping a floral grouping, the second sheet of material 26 is preferably constructed of a relatively rigid, flexible sheet of material capable of being wrapped about the floral grouping 120 whereby the second sheet of material 26 cooperates to add rigidity to the first and the second sheets of material 10 and 26 for cooperating to support the first and the second sheets of material 10 and 26 wrapped about the floral grouping 120 in the form of the wrapper 130. Also, the second sheet of material 26 preferably is constructed of an insulation type of material for providing insulation when the first and the second sheets of material 10 and 26 are wrapped about the floral grouping 120 to form the wrapper 130. The second sheet of material 26 also preferably is capable of absorbing water so that, when the first and the second sheets of material 10 and 26 are wrapped about the floral grouping 120 to form the wrapper 130, the second sheet of material 26 is disposed adjacent the floral grouping 120 and absorbs water from the floral grouping 120.

In addition, the second sheet of material 26 may be disposed on the outer surface of the wrapper 130, rather than the inner surface of the wrapper 130 adjacent the floral grouping 120, if desired in a particular application.

The term "bonding material" when used herein may mean an adhesive, preferably a pressure sensitive adhesive, or a cohesive. Where the bonding material is a cohesive, a similar cohesive material must be placed on the adjacent surface for bondingly contacting and bondingly engaging with the cohesive material. The term "bonding material" also may include materials which are heat sealable and, in this instance, the adjacent portions of the material must be brought into contact and then heat must be applied to effect the seal. The term "bonding material" also may include materials which are sonic sealable and vibratory sealable. The term "bonding material" when used herein may also mean a heat sealing lacquer which may be applied to the sheet of material and, in this instance, heat, sound waves, or vibrations, also must be applied to effect the sealing. The term "bonding material" may also mean cold sealing lacquers which are known to those of ordinary skill in the art.

The term "bonding material" when used herein may also mean any type of material or thing which can be used to effect the bonding or connecting of the two adjacent portions of the material or sheet of material to effect the connection or bonding described herein. The term "bonding material" may also include ties, labels, bands, ribbons, strings, tape, staples or combinations thereof. Some of the bonding materials would secure the ends of the material while other bonding material may bind the circumference of the wrapper. Another way to secure the wrapping is to heat seal the ends of the material to another portion of the material. One way to do this is to contact the ends with an iron of sufficient heat to heat seal the material.

The term "bonding material" when used herein may also mean any heat or chemically shrinkable material, and static electrical or other electrical means, magnetic means, mechanical or barb-type fastening means or clamps, curl-type characteristics of the film or materials incorporated in the sheet of material which can cause the material to take on certain shapes, and any type of welding method which may weld portions of the sheet to itself or to the pot, or to both the sheet itself and the pot.

"Cling Wrap or Material" when used herein means any material which is capable of connecting to the sheet of material and/or itself upon contacting engagement during the wrapping process and is wrappable about an item whereby portions of the cling material contactingly engage and connect to other portions of the wrapping material for generally securing the sheet of material wrapped about at least a portion of the item. This connecting engagement is preferably temporary in that the wrapping material may be easily removed without tearing same, i.e., the cling material "clings" to the wrapping material. A wrapping material which remains securely connected to and about the wrapped item until the wrapping material is torn therefrom.

The cling material is constructed and treated if necessary, from polyethylene such as Cling Wrap made by Glad®, First Brands Corporation, Danbury, Connecticut. The thickness of the cling material will, in part, depend upon the thickness of the sheet of material utilized, i.e., generally, the thicker and therefore heavier sheet of material may require a thicker and therefore stronger cling material. The cling material will range in thickness from less than about 5.08 µm (0.2 mils) to about 254 µm (10 mils), and preferably less than about 12.7 µm (0.5 mils) to about 63.5 µm (2.5 mils) and most preferably from less than about 15.24 µm (0.6 mils) to about 50.8 µm (2 mils). However, any thickness of cling material may be utilized in accordance with the present invention which permits the cling material to function as described herein. It will be appreciated that the cinching tab 18, the sheet of material 10, or any portion of either, may comprise cling material.

The term "botanical item" when used herein means a natural or artificial herbaceous or woody plant, taken singly or in combination. The term "botanical item" also means any portion or portions of natural or artificial herbaceous or woody plants including stems, leaves, flowers, blossoms, buds, blooms, cones, or roots, taken singly or in combination, or in groupings of such portions such as bouquet or floral grouping.

The term "propagule" when used herein means any structure capable of being propagated or acting as an agent of reproduction including seeds, shoots, stems, runners, tubers, plants, leaves, roots or spores.

The term "growing medium" when used herein means any liquid, solid or gaseous material used for plant growth or for the cultivation of propagules, including organic and inorganic materials such as soil, humus, perlite, vermiculite, sand, water, and including the nutrients, fertilizers or hormones or combinations thereof required by the plants or propagules for growth.

The term "band" when used herein means any material which may be secured about an object such as a flower pot, such bands commonly being referred to as elastic bands, rubber bands or non-elastic bands and also includes any other type of material such as an elastic or non-elastic string or elastic piece of material, non-elastic piece of material, a round piece of material, a flat piece of material, a ribbon, a piece of paper strip, a piece of plastic strip, a piece of wire, a tie wrap or a twist tie or combinations thereof or any other device capable of gathering the sheet of material to removably or substantially permanently form a crimped portion and secure the crimped portion formed in the sheet of material which may be secured about an object such as the flower pot. The band also may include a bow if desired in a particular application. Such a band may be included as a part of the cinching tab 18 or may comprise the cinching tab 18, however, the cinching tab 18 may not comprise a band, and the cinching tab 18 may be used without a band attached thereto as well.

The [sheet of material] wrapper used herein may further comprise at least one scent (not shown). Examples of scents utilized herein include (but are not limited to) floral scents (flower blossoms, or any portion of a plant), food scents (chocolate, sugar, fruits), herb or spice scents (cinnamon), and the like. Additional examples of scents include flowers (such as roses, daisies, lilacs), plants (such as fruits, vegetables, grasses, trees), foods (for example, candies, cookies, cake), food condiments (such as honey, sugar, salt), herbs, spices, woods, roots, and the like, or any combination of the foregoing. Such scents are known in the art, and are commercially available.

The scent may be disposed upon the sheet of material 10 by spraying the scent thereupon, painting the scent thereupon, brushing the scent thereupon, lacquering the scent thereupon, immersing the sheet of material in a scent-containing liquid, exposing the sheet of material to scent-containing gas, or any combination thereof.

The scent may be contained within a lacquer, or other liquid, before it is disposed upon the sheet of material 10. The scent may also be contained within a dye, ink, and/or pigment (not shown). Such dyes, inks and pigments are known in the art, and are commercially available, and may be disposed upon or incorporated in the sheet of material 10 by any method described herein or known in the art.

### Embodiments of Figures 13-26

Shown in Figure 13 and designated by the reference numeral 10i is a sheet of material having a first end 12i and a second end 13i, a first side 14i and a second side 15i and having an upper surface 16i and a lower surface 17i. Sheet 10i is exactly the same as sheet 10 described above in Figure 1 except that the crimp connector is not a cinching tab but is instead a strip or area of bonding material disposed upon one of the surfaces of the sheet 10i. Disposed upon the upper side 16i of the sheet 10i is a wrapper connector comprising a strip of bonding material designated by the numeral 24i which covers a portion of the upper surface of the sheet of material and may be similar to the bonding material 24 of sheet 10. Additionally, as indicated in Figure 13 a crimp connector comprising a second strip of bonding material 140i is disposed on the upper surface 16i of the sheet 10i. Shown in Figure 14 is a sheet of material exactly the same as sheet 10i of Figure 13 except that the crimp connector is a bonding material 140j disposed on a portion of the lower surface 15j of the sheet of material 10j.

Shown in Figure 15 is the sheet of material 10i having disposed thereon a floral grouping 120 having a stem end 122 and a bloom end 124 as described above. One method of wrapping the sheet of material 10i about the floral grouping 120 is to draw the sheet 10i at side 15i in the direction 126 over the floral grouping 120 (see Figure 16) thereby causing the lower surface 17i of the sheet to become the externally oriented surface of the wrapper. The sheet of material 10i is wrapped about the floral grouping thus forming a wrapper 130i in exactly the same way as is disclosed above in Figures 7-12.

Shown then in Figure 17 is a finished wrapper 130i having a conical shape and possessing the additional strip of bonding material 140i. The bonding material 140i is disposed on the inner surface 16i of the wrapper 130i facing the stems 122 of the floral grouping 120.

In operation, the portion of the wrapper 130i in the vicinity of the strip of bonding material 140i is tightly grasped and crimped as explained above about the stems 122 of the floral grouping 120 thereby causing overlapping folds in the portion of the wrapper 140i adjacent the stems 122 to be bondingly connected thereby causing the portion of the wrapper 140i to be bound about the stems 122 thereby forming a crimp connected portion 142i as shown in Figure 18.

Shown in Figure 19 is the same sheet of material 10i which has been wrapped in a cylindrical fashion about the floral grouping 120 thereby forming a cylindrically shaped wrapper 136i about the floral grouping substantially as shown above in Figure 11. Bonding material 140i is disposed on the inner surface 16i of the wrapper 136i and surrounds a portion of the stem portion 122 of the floral grouping 120. The wrapper 136i is grasped and crimped in the vicinity of the bonding material 140i thereby causing the wrapper to overlap each other and be bonded together about the stems 122 of the floral grouping 120 thereby binding the wrapper 136i about the stems 122 thereby forming a crimp connected area 142i about the stems 122 as shown in Figure 20.

### Embodiments of Figures 21-26

Shown in Figure 21 is the sheet of material 10j as shown in Figure 14 here shown with the crimp connector, i.e., the bonding material 140j, disposed upon the surface 17j of the sheet 10j. The sheet of material 10j can be wrapped about the floral grouping 120 exactly the same as shown in Figures 15-17 to form a conically shaped wrapper 130j as shown in Figures 22-24 or a cylindrically shaped wrapper 136j shown in Figures 25-26.

More particularly, as shown in Figure 24, the wrapper 130j is grasped in proximity to the bonding material 140j and is crimped about the stems 122 of the floral grouping 120 thereby causing portions of the wrapper 130j to form overlapping folds which engage with one another forming a crimp connected portion 142j of the wrapper 130j about the floral grouping 120. Similarly to that shown in Figure 26, the wrapper 136j and the bonding material 140j is crimped about the stems 122 thereby forming a crimp connected area 142j of the wrapper 136j about the stems 122 of the floral grouping 120 disposed within the wrapper 136j.

In an alternative embodiment of the present invention (not shown), a sheet of material such as the sheet 10i in Figure 13 or the sheet 10j in Figure 14 may be further equipped with a cinching tab such as the tab 18 in the sheet of material 10 in Figures 7-12. In such a case, after the sheet 10i with a tab has been wrapped about a floral grouping as shown in Figures 18 or 20, or after the sheet 10j with a tab has been wrapped about a floral grouping as shown in Figures 24 or 26, the cinching tab is then wrapped about the crimped area in a manner similar to that shown later herein in Figures 50 and 52.

### Embodiments of Figures 27-33

Shown in Figure 27 as designated by the general reference numeral 10k is a wrapper comprising a sheet of material comprising another embodiment of the present invention. The sheet of material 10k illustrated in this embodiment and used in this method are constructed exactly the same as the wrapping material 10 shown and described in detail previously, except that the sheet of material 10k is die-cut into a trapezoidal shape and has a scalloped design cut into one of the sides of the sheet of material 10k (first end 12k in Figure 27), the bonding material 24k is a strip of bonding material 24k which is disposed generally between the first side 14k and the second side 15k of the sheet of material 10k, the bonding material 24k disposed near the second end 13k, and the pull tab 18k has been die-cut as an extension of the sheet of material 10k, and the pull tab 18k has pull indicia 19k represented as an arrow thereon. The pull tab 18k is situated slightly above the bonding material 24k, on the first side of the sheet of material 10k and near the corner junction of the first side 14k and the second end 13k of the sheet of material 10k.

A pull tab is a portion of a sheet of material near an outer edge of the sheet which can be used to grasp the sheet of material to pull one portion of the sheet of material away from another portion of the sheet of material to cause the sheet of material to unwrap from around itself thereby gently releasing a floral grouping from the wrapper. The pull tab may be solitary, or there may be multiple pull tabs. The pull tab may comprise an integral portion of the sheet of material or may form a separate piece of material which may be separately attached to the sheet of material. A pull indicia is located on the pull tab, or at a position on the sheet near the pull tab.

"Pull indicia" as used herein means symbols, such as arrows, or a small picture of the lifted edge of a sheet of material, or a round dot, circle, square, or the like, or printed words, such as "pull," "pull here," "lift here," "lift to release," "lift," or any symbol or words which would indicate that the sheet of material could be unwrapped by starting at that specific point, or any combination of words and/or symbols.

For example, the word "Pull" (or an equivalent non-English term) may be printed in the corner of the sheet of material indicating that removal of the sheet of material from the floral arrangement or grouping is to be initiated at that point. That is, the pull tab is located in the area designated by the pull indicia and the pull tab may be grasped to initiate the removal of the sheet of material from the floral arrangement.

The pull tab and/or the pull indicia may be located in or on a portion of the sheet of material having a bonding material thereon, or, alternatively, may be located in an area without bonding material. When the pull tab is located on bonding material, the bonding material at the location of the pull tab may have less "tack" or bonding, as previously described, than the remainder of the bonding material disposed on the sheet of material.

A floral arrangement may be disposed upon the sheet of material 10k in the same manner shown above and described in detail but with the floral grouping 120 oriented so the bloom end 124 is disposed adjacent the scalloped end of the sheet 10k. However, it will be appreciated that any method of use shown or described herein may be utilized.

Figures 28-30 illustrate the method of use of the sheet of material 10k.

A floral arrangement 120 is disposed upon the sheet of material 10k such that the bloom end 124 of the floral grouping 120 is disposed near the end 12k of the sheet then wrapped in the same manner shown in Figures 8-10 and described in detail previously for the method of use of wrapping material 10. However, it will be appreciated that any method of use shown or described herein may be utilized. The method for wrapping the floral arrangement 120 with the sheet of material 10k is similar to that previously described in that the sheet of material 10k is crimped about the stem portion 122 or the floral arrangement 120 in and around the area where the bonding material 24k is disposed. The crimping may be conducted as the floral arrangement 120 is wrapped (not shown), or the crimping may be conducted after the floral arrangement 120 is wrapped by crimping the sheet of material 10k in the area of the strip of bonding material 24k. Such crimping may be conducted by hand, by grasping and substantially encompassing with one or more hands a lower end 134k of the wrapper 130k near the area of the strip of bonding material 24k, and evenly and firmly squeezing the sheet of material 10k about the area of the strip of bonding material 24k, to form a crimp connected portion 142k in the wrapper 130k thereby pressing and gathering both the sheet of material 10k against portions of itself and against portions of the stem portion 122 of the floral arrangement 120 and the bonding material 24k against portions of itself and against portions the stem portion 122 of the floral arrangement 120. The wrapper 130k may also be crimped by using both a crimping motion and a turning motion to create a twisted crimping, as illustrated in Figure 29, resulting in a wrapper 130k which is both crimped, as described previously, and which is twisted about the stem portion 122 (the sheet of material 10k near the stem portion 122 being rotated between about one-eighth of a turn to about a full turn) primarily in the area near the stem portion 122 of the floral arrangement 120. Such crimping as described above may also be conducted by any instrument or machine used for gathering or crimping packaging materials.

The pull tab 18k may extend over the crimped area, as shown in Figure 28 to permit easy removal of the sheet of material 10k from about the floral grouping 120. Alternatively, the pull tab 18k may be at least partially tucked into the wrapper 130k by folding the pull tab 18k toward the inside of the wrapper 130k (not shown) after the floral arrangement 120 has been wrapped and formed into a wrapper.

The sheet of material 10k may be unwrapped from a floral arrangement 120, as shown in Figure 30, in exactly the same manner as shown herein and described in detail previously.

Figures 31-33 illustrate still another version of the present invention and method of use of the present invention. The wrapping material 10ℓ is constructed exactly the same as the wrapping material 10k shown in Figure 27 except for the differences described below.

A floral arrangement 120 is disposed upon a sheet of material 10ℓ in the same manner shown above and described in detail previously for the method of use of the sheet of material 10k, however, it will be appreciated that any method of use shown or described herein may be utilized. The method for wrapping the floral arrangement 120 with the sheet of material 10ℓ, as shown in Figures 32 and 33, differs somewhat from the previously described methods, in that the sheet of material 10ℓ is crimped in a manner described in detail and shown previously in Figures 28-30. The only difference between sheet 10k and 10ℓ is that the pull tab 18ℓ has a bonding material 21ℓ at least partially disposed thereon, and the pull tab 18ℓ is wrapped about a crimped portion 142ℓ of the wrapper 130ℓ after the sheet of material 10ℓ has been crimped, thereby further crimping the sheet of material 10ℓ and restricting and retaining the sheet of material 10ℓ in a crimped condition.

The wrapper 130ℓ is caused to be more tightly wrapped about the floral arrangement 120 by grasping the pull tab 18ℓ and pulling the pull tab 18ℓ in a direction 135 about the lower end of the wrapper 130ℓ. Once the pull tab 18ℓ has been wrapped tightly about lower end 134ℓ of the wrapper 130ℓ, the portion of the pull tab 18ℓ having the bonding material 21ℓ applied thereto is engagingly pressed against the wrapper 130ℓ to affix the pull tab 18ℓ to the wrapper 130ℓ thereby causing the lower end of the wrapper 130ℓ to be crimpingly wrapped about the stem portion 122 of the floral arrangement 120 for inhibiting the floral arrangement 120 from slipping or moving within the wrapper 130ℓ.

In an alternative method (not shown), the pull tab 18ℓ is elongated, and may have only a single spot of bonding material 21ℓ thereon, and wraps completely around the wrapper 130ℓ, the spot of bonding material 21ℓ used to attach the pull tab 18ℓ to itself after it is wrapped completely around the wrapper 130ℓ. The pull tab 18ℓ may be wrapped about the already crimped wrapper 130ℓ, or, alternatively, the pull tab 18ℓ may be utilized to both crimp the wrapper 130ℓ in a crimped condition, as described above, as well as retain the wrapper 130ℓ in a crimped condition.

In a further alternative method (not shown), the sheet of material 10ℓ may have a bonding material 24ℓ on the lower surface 17ℓ, and the pull tab 18ℓ may have no bonding material thereon. The sheet of material 10ℓ will then be crimped by any method previously described herein, and the pull tab 18ℓ will extend about the crimped bonding material and will bond thereto, thereby retaining the wrapper 130ℓ in a crimped condition.

The sheet of material 10ℓ is unwrapped from a floral arrangement 120 in exactly the same manner as shown herein and described in detail previously.

### Embodiments of Figures 34-35

Shown in Figures 34 and 35 and designated by the general reference numeral 10m is a sheet of material exactly the same as the sheet of material 10 except that the sheet of material 10m further comprises a closure tab 18m having a bonding material 21m thereon and exactly as described previously for sheet 10 described in Figure 1. Sheet 10m also comprises a bonding strip 254m located on surface 17m for bonding to a card or label or other information-containing device. The sheet 10m is wrapped about the floral grouping 120 exactly the same as shown in Figures 7-12 with the exception that for the wrappers 130m and 136m shown in Figures 34 and 35, the bonding strip 254m is disposed on the outside surface 17m of the wrapper 130m or 136m for the purpose of bonding a card or label such as was discussed above.

### Embodiments of Figures 36-38

Shown in Figure 36 is a conical wrapper generally designated by the numeral 148. The wrapper 148 is of a type of wrappers referred to in the floral industry as a "sleeve". The wrapper 148 in one version as embodied herein has an upper end 152, a lower end 154, an inner surface 156 and an outer surface 158. Wrappers known as sleeves are well known by those of ordinary skill in the art and are commercially available and have been used for many years in the floral industry.

The wrapper 148 may be composed of a single sheet of material which has been folded over to form two surfaces and is sealed on abutting sides of each surface thereby forming a sleeve similar in appearance to the sleeve in Figure 36 which has an open upper end 152 and an open lower end 154. Similarly, a sleeve such as wrapper 148 may be formed and sealed at the lower end 154 thereby forming a sleeve or wrapper which has only an open upper end 152. The abutting sides may be sealed by adhesive methods, by heat-sealing methods, by sonic-sealing methods or vibratory-sealing methods or any appropriate method for forming a seal between edges. The wrapper 148 further comprises a crimp connector 188 disposed on a portion of the outer surface 158 of the wrapper 148. The connector 188 as shown in Figure 36 is comprised of a bonding material 190 and release strip 192. The crimp connector 188 may be comprised of a double-sided adhesive bonding material 190. One side of the double-sided adhesive 190 is adhesively disposed against the outer surface 158 and the other side of the double-sided adhesive 190 is covered by a release strip or tape 192 which when removed exposes the adhesive 190.

In operation, as shown in Figure 36, the upper end 152 of the wrapper 148 is opened to expose an interior space 193 within the wrapper 148. A floral grouping 120 exactly the same as floral grouping 120 described above is disposed within the interior space 193 of the wrapper 148 such that the stems 122 are oriented near the lower end 154 of the wrapper 148 and the bloom end 124 of the floral grouping 120 is disposed near the upper end 152 of the wrapper 148. To crimp the wrapper 148, the release tape 192 is removed from the adhesive assembly 188 (Figure 36).

Then a first overlapping portion 194 of the wrapper 148 is drawn in direction 196 and a second overlapping portion 198 of the wrapper 148 is drawn in the direction 200 (Figure 37). The double-sided adhesive strip 190 is then contacted to the first overlapping portion 194 and the adhesive portion 190 is then cinched tightly about the wrapper 148 and the portion of the wrapper 148 disposed thereabout is crimped tightly about the stems 122 of the floral grouping 120 thereby forming overlapping portions of the wrapper 148 about the stems 122 of the floral grouping 120 to form a crimp connected area 202 thereby causing the wrapper 148 to be held crimpingly and firmly about the stems 122 (Figure 38). The crimp connector 188 may be formed from a bonding material other than an adhesive, such as the other bonding materials described elsewhere herein.

The sleeve 148 in Figure 36 may further have a bonding material disposed on a portion of the inner surface 156 in a position similar to the bonding material 24k disposed on sheet 10k in Figure 27 (or shown later herein for Figure 40) for adhering to portions of the stem portion 122 of the floral grouping 120 or for adhering to portions of the inner surface 156 together or for adhering both to the stem portion 122 and to other portions of the inner surface 156 of the sleeve 148 for holding the floral grouping 120 tightly within the sleeve 148.

### The Embodiments of Figures 39-46

Shown in Figures 39 and 40 and designated therein by the general reference numeral 148a is another version of a wrapper for a floral grouping 120. The wrapper 148a is exactly the same as wrapper 148 except as described. The wrapper 148a is a sleeve having an upper end 152a, a lower end 154a, an inner surface 156, and outer surface 158a and an inner space 193a. The upper end 152a is generally the portion of the sleeve 148a with the widest diameter and the lower end 154a is generally the portion of the sleeve 148a with the narrowest diameter. As noted above, such sleeves, and their construction, are well known in the art and sleeves are commercially available, as are various devices and mechanisms capable of forming sleeves.

A bonding material 190a is disposed on at least a portion of the inner surface 156a of the sleeve 148a, as shown in Figure 40. In an alternate embodiment, a sleeve 148b comprises a bonding material 190b disposed on the outer surface 158b of the sleeve 148b, as illustrated in Figure 41. In an alternate embodiment a bonding material may be disposed on both the inner surface and the outer surface of a sleeve. In a further alternative, the bonding material may be disposed on both the inner surface of the sleeve and the outer periphery of the floral grouping (not shown). In addition, in another alternative, the sleeve may be free of the bonding material, and the bonding material may be disposed only on a portion of the outer periphery of the floral grouping (not shown).

It will be understood that the bonding material described herein may be disposed in a solid strip of bonding material, as shown in Figures 40 and 41, for example. Further, the bonding material 36 may be disposed in vertical or horizontal strips of bonding material 36, or in other patterns as described above.

The sleeves 148a or 148b may be generally tubularly shaped, but the sleeves may be, by way of example but not by way of limitation, cylindrical, conical, frusto-conical (Figures 39-46), or a combination of both frusto-conical and cylindrical (not shown). Further, as long as the sleeve is capable of receiving a floral grouping 120, any shape of sleeve, whether geometric, non-geometric, asymmetrical and/or fanciful, may be utilized.

In a general method of use, illustrated in Figures 42-46, at least a portion of the floral grouping 120 is disposed within the inner space 193a of the sleeve 148a. In some applications, the stem portion 122 of the floral grouping 120 extends into the sleeve 148a via the open upper end 152a extending through the open lower end 154a of the sleeve 148a (Figures 42-44) and beyond the open lower end 154a. The bloom portion 124 of the floral grouping 120 is therefore disposed near the open upper end 152a of the sleeve 148a and the bloom portion 124 of the floral grouping 120 is visible via the open upper end 152a of the sleeve 148a (Figures 44-46). In some instances, the bloom portion 124 of the floral grouping 120 extends above the open upper end 152a of the sleeve 148a (e.g. shown in Figures 44-46). In some applications, the upper end 152a of the sleeve 148a may be closed if desired (not shown). In some circumstances, the lower end 154a of the sleeve 148a may be closed if desired (not shown).

After the floral grouping 120 has been disposed within the sleeve 148a, the sleeve 148a may then be crimped about the floral grouping 120, as shown in Figure 45. The crimping operation is conducted by an operator after the floral grouping 120 is disposed in the sleeve 148a by crimping at least a portion of the sleeve 148a in the area of the stem portion 122 of the floral grouping 120, at least a portion of the bonding material 190a being disposed on this area to retain the crimped sleeve 148a in the crimped condition. Such crimping may be conducted by hand, by grasping and substantially encompassing with one or more hands the lower end 154a of the sleeve 148a in the area of the bonding material 190a and evenly and firmly squeezing that portion of the sleeve 148a about the area having the bonding material 190a, thereby pressing and gathering both the sleeve 148a and the bonding material 190a against itself and about the stem portion 122 of the floral grouping 120. The sleeve 148a may also be crimped by using both a crimping motion (as described above) and a turning motion to create a twisted crimping, resulting in a sleeve 148a which is both crimped as previously described, and which is twisted about at least a portion of the stem portion 122 of the floral grouping 120, the sleeve 148a near the stem portion 122 being rotated for example but not by way of limitation, about the stem portion 122 between about one-eighth of a turn to about a full turn (not shown).

When the sleeve is crimped, (as shown in Figure 45) a plurality of overlapping folds 204 are formed in the crimped connected area 202a. The plurality of overlapping folds 204 (only several overlapping folds are designated by the numeral 204 in Figure 45) resulting from the gathered, crimped material of the sleeve 148a may be connected, that is, portions of the overlapping material of the sleeve 148a are bondingly connected together via bonding material 190a. A plurality of overlapping folds 204 may be formed by hand, during crimping, or by mechanical means such as are known to those of ordinary skill in the art of producing floral covers. Alternatively, the crimping may be conducted in a manner in which not all of the plurality of overlapping folds 204 are bondingly connected together. It will be appreciated that the plurality of overlapping folds 204 (connected or unconnected) are formed primarily in the crimped connected area 202a. Such crimping as described above may also be conducted by any device or mechanism known in the art and used for gathering or crimping materials.

Alternatively, the sleeve 148a may remain generally uncrimped. The bonding material 190a disposed upon the sleeve 148a may cause the sleeve 148a to bondingly connect to portions of itself, causing the sleeve 148a to conform, either generally, or closely (depending, as will be appreciated, upon the amount of bonding material 190a and the amount of overlapping material of the sleeve 148a which connects to itself) to the floral grouping 120.

When the floral grouping 120 is disposed in the sleeve 148a by any method described herein, or known in the art, the sleeve 148a substantially surrounds and encompasses a substantial portion of the floral grouping 120. When the sleeve 148a is disposed about the floral grouping 120, the sleeve 148a forms a wrapper which provides a decorative packaging for the floral grouping 120 contained therein.

It will be appreciated that the sleeve 148a has sufficient flexibility but also sufficient rigidity to both remain in and sustain its general shape, thereby substantially surrounding and encompassing the floral grouping 120.

Shown in Figure 46 is the sleeve 148b after a floral grouping 120 has been inserted therein and after portions of the sleeve 148b have been crimpingly connected about the stem portion 122 of the floral grouping 120 in the same manner as that shown and discussed above for the sleeve 148a. In particular, when the sleeve 148b is crimped, a plurality of overlapping folds 204 are formed causing the bonding material 190b to crimpingly connect at least a portion of the overlapping folds 204 to form the crimp connected area 202b in the sleeve 148b. It will also be understood by one of ordinary skill in the art that in the case wherein the bonding material is disposed on both the inner and outer surfaces of the sleeve, when the sleeve is crimped, the bonding material causes overlapping folds on both the inner surface and outer surface to be bondingly connected for forming the crimped portion in the sleeve.

### Embodiments of Figures 47-48

Shown in Figures 47 and 48 is a sleeve designated by the reference numeral 148c which comprises a sleeve exactly like sleeve 148 except that the crimp connector comprises a cinching tab 206c having a bonding material 212c disposed thereon. As shown in Figures 47 and 48 the cinching tab 206c is utilized in exactly the same manner as the cinching tab 18 is used in Figures 10 and 12 to cinch a sheet of material to form conically or cylindrically shaped wrappers about a floral grouping 120. Once the cinching tab 206c is made to cinch the sleeve 148c tightly about the stem portion 122, a crimp connected area 214c is formed from overlapped portions of the sleeve 148c which are overlappingly engaged with each other about the stems 122 thereby tightly and crimpingly connecting the wrapper 148c in an orientation about the stem portion 122.

### Embodiments of Figures 49-52

Shown in Figure 49 is a wrapper 148d which is exactly the same as the wrapper shown in Figure 47 except that the crimp connector of wrapper 148d comprises both a cinching tab 206d similar to the cinching tab 206c of Figure 47 and an internally disposed bonding material 190d which is exactly the same as the internally disposed bonding material 190a shown in Figure 40. In the version of the present invention shown in Figure 47, both the cinching tab 206d and the internally disposed bonding material 190d participate in the crimping and bonding of the wrapper 148d about the stems 122 of the floral grouping 120 to form a crimped connected area 214d (shown in Figure 50) in the wrapper 148d which functions to hold the wrapper 148d firmly against the stems 122 of the floral grouping 120.

In a preferred version of the method of the present invention, the internal bonding material 190d and the portion of the wrapper 148d proximate thereto is crimped about the stem portion 122 of the floral grouping 120 thereby causing the wrapper 148d to be crimpingly held in an orientation about the floral grouping 120. Next, the cinching tab 206d is wrapped about the crimped portion 214d of the wrapper 148d to further bind the wrapper 148d close to the stem portion 122 of the floral grouping 120 as shown in Figure 50.

Shown in Figure 51 is a wrapper designated by the general reference numeral 148e. The wrapper 148e is exactly the same as the wrapper 148d shown in Figure 49 except that the bonding material used for crimpingly forming the wrapper 148e about the floral grouping 120 is an externally disposed bonding material 190e exactly the same as shown in Figure 41 rather than an internally disposed bonding material as shown in Figure 40. The external bonding material 190e operates in exactly the same way as the external bonding material 190b in Figure 46. Additionally however, the cinching tab 206e functions to cause the wrapper 148e to be held more tightly about the stems 122 of the floral grouping 120 to form a crimped area 214e of the wrapper 148e about the stems 122 as shown in Figure 52. The method of first crimping the externally disposed bonding material 190e, then wrapping the crimped portion with the cinching tab 206e is substantially similar to the method described for the embodiment of Figures 49-50, and described in more detail above.

### Embodiment of Figure 53

Shown in Figure 53 is a wrapper designated by the general reference numeral 148f. The wrapper 148f is constructed exactly the same as the wrappers shown previously and functions in exactly the same manner except that the wrapper 148f additionally has an upper closure flap 240f and a lower closure flap 242f. The upper closure flap 240f further has an upper closure bonding strip 244f and when the upper closure flap 240f is folded in a direction 246f against the upper surface of the wrapper 148f, the upper end of the wrapper 148f is thereby closed. The lower closure flap has a lower closure bonding strip 248f and when the lower closure bonding flap is folded in a direction 250f against the wrapper 148f the lower end of the wrapper 148f is thereby closed. In this manner, the wrapper can be completely closed about a floral grouping 120 disposed within the interior space thereof. It will also be understood by one of ordinary skill in the art that any of the sheets of material or sleeves or other wrappers which comprise various crimp connectors described herein could be modified by the addition of an upper closure flap or a lower closure flap or both.

It will also be noted that any of the strips of bonding material described herein may be protected by a release strip which can be removed to expose the bonding material thereunder.

### Embodiments of Figures 54-55

Shown in Figure 54 and designated by the general reference numeral 148g is a wrapper exactly the same as wrapper 148a described in Figure 40 except that the crimp connector, or bonding material, disposed on the inner surface of the sleeve 148g and designated by the reference numeral 190g does not extend completely from one side of the wrapper 148g to the other side as is shown in Figure 40 for wrapper 148a. The wrapper 148g comprises instead a bonding material 190g which is disposed on portions of the inner surface of the sleeve 148g except for a gap 220g which interrupts the strip of bonding material 190g from extending entirely across the inner surface of the wrapper 148g. This embodiment is represented in Figure 54.

In operation, the stem portion of a floral grouping can be extended through the gap 220g of the wrapper 148g for enclosing the floral grouping 120.

Shown in Figure 55 and designated by the general reference numeral 148h is a wrapper exactly the same as wrapper 148d shown in Figure 49 except that the wrapper 148h has a crimp connector comprising a cinching tab 206h with a bonding material 212h disposed thereon and further comprises a bonding material 190h disposed upon the inner surface of the wrapper 148h exactly the same as the strip of bonding material 190g is disposed upon the inner surface of the wrapper 148g as shown in Figure 54. That is, the strip of material 190g does not extend entirely across the inner surfaces of the wrapper 148h from one side to the other but is interrupted by a gap 220h in the bonding material 190g. The stems 122 of a floral grouping 120 can be extended through the gap 220h for increasing the ease of inserting the floral grouping 120 into the wrapper 148h. The wrappers 148g and 148h can then be wrapped about a floral grouping exactly as shown in Figures 40 and 45, and Figures 49 and 50, respectively.

Changes may be made in the construction and the operation of the various components, elements and assemblies described herein or in the steps or the sequence of steps of the methods described herein without departing from the scope of the invention as defined in the following claims. Where technical features mentioned in any claim herein are followed by a reference symbols, those reference symbols are included solely for the purpose of increasing the intelligibility of the claims

## Claims

1. A wrapper (130, 136, 130i, 136i, 130j, 136j, 130k, 130L, 130m, or 136m) for wrapping a floral grouping (120) having a bloom portion (124) and a stem portion (122), the wrapper (130, 136, 130i, 136i, 130j, 136j, 130k, 130L, or 130m) comprising:
a flat sheet of material (10, 10f, 10i, 10j, 10k, or 10L) sized to substantially surround and encompass the floral grouping (120) when wrapped thereabout; and
crimp connecting means (18, 18f, 140i, 140j, 24k, 24L, 18L, or 18m) for holding a portion of the sheet of material (10, 10f, 10i, 10j, 10k, or 10L) about the floral grouping (120) when the sheet of material (10, 10f, 10i, 10j, 10k, or 10L) is crimpingly wrapped about the floral grouping (120), the crimp connecting means (18, 18f, 140i, 140j, 24k, 24L, 18L, or 18m) comprising a bonding material (140i, 140j, 24k, or 24L) disposed upon a surface (16i, 17j, 16k, or 16L) of the sheet of material (10, 10f, 10i, 10j, 10k, or 10L) for bondingly connecting overlapping portions of the sheet of material (10, 10f, 10i, 10j, 10k, or 10L) when a crimped portion (142i, 142j, 142k, or 142L) is formed in the sheet of material (10, 10f, 10i, 10j, 10k, or 10L), and the crimp connecting means (18, 18f, 140i, 140j, 24k, 24L, or 18m) further comprising a cinching tab (18, 18f, 18L, or 18m) extending from the sheet of material (10, 10f, 10i, 10j, 10k, or 10L) for holding the connected overlapping folds in a crimped position, and
wherein the sheet of material (10, 10f, 10i, 10j, 10k, or 10L) is crimpingly wrappable about at least a portion of the stem portion (122) of the floral grouping (120) with the crimp connecting means (18, 18f, 140i, 140j, 24k, 24L, 18L, or 18m) being adapted to hold the sheet of material (10, 10f, 10i, 10j, 10k, or 10L) in a position crimped about the stem portion (122) of the floral grouping (120).

2. The wrapper (130, 136, 130i, 136i, 130j, 136j, 130k, 130L, 130m, or 136m) of claim 1 wherein the flat sheet of material (10, 10f, 10i, 10j, 10k, or 10L) further comprises a first end (12, 12i, 12j, 12k, or 12L), a second end (13, 13i, 13j, 13k, or 13L), a first side (14, 14i, 14j, 14k, 14L), a second side (15, 15i, 15j, 15k, or 15L), an inner surface (16, 16i, 16j, 16k, or 16L) and an outer surface (17, 17i, 17j, 17k, 17L, or 17m) and wherein the bonding material (140i, 140j, 24k, or 24L) of the crimp connecting means (18, 18f, 140i, 140j, 24k, 24L, 18L, or 18m) is disposed on portions of the inner surface (16, 16i, 16j, 16k, or 16L), portions of the outer surface (17, 17i, 17j, 17k, 17L, or 17m), or portions of both the inner surface (16, 16i, 16j, 16k, or 16L) and the outer surface (17, 17i, 17j, 17k, 17L, or 17m) of the sheet of material (10, 10f, 10i, 10j, 10k, or 10L).

3. The wrapper (130, 136, 130i, 136i, 130j, 136j, 130k, 130L, 130m, or 136m) of claim 1 or 2 wherein the sheet of material (10, 10f, 10i, 10j, 10k, or 10L) further comprises sheet connecting means (24, 24i, 24j, or 24m) comprising a bonding material (24, 24i, 24j, or 24m) disposed upon a portion of the sheet of material (10, 10f, 10i, 10j, 10k, or 10L) for connecting portions of the inner surface (16, 16i, 16j, 16k, or 16L) of the sheet of material (10, 10f, 10i, 10j, 10k, or 10L) to portions of the outer surface (17, 17i, 17j, 17k, 17L, or 17m) of the sheet of material (10, 10f, 10i, 10j, 10k, 10L) when the sheet of material (10, 10f, 10i, 10j, 10k, or 10L) is wrapped about the floral grouping (120).

4. The wrapper (130, 136, 130i, 136i, 130j, 136j, 130k, 130L, 130m, or 136m) of any one of the preceding claims further comprising a pull tab (18k or 18L) for aiding in the release of the wrapper (130, 136, 130i, 136i, 130j, 136j, 130k, 130L, 130m, or 136m) from the floral grouping (120).

5. A wrapper (130, 136, 130i, 136i, 130j, 136j, 130k, 130L, 130m, or 136m) for wrapping a floral grouping (120), the wrapper (130, 136, 130i, 136i, 130j, 136j, 130k, 130L, 130m, or 136m) comprising:
a flat sheet of material (10, 10f, 10i, 10j, 10k, or 10L) sized to substantially surround and encompass the floral grouping (120) when wrapped thereabout, and the sheet of material (10, 10f, 10i, 10j, 10k, or 10L) having:
crimp connecting means (18, 18f, 21, 21L, 21m, 140i, 140j, 24k, 24L, 18L, or 18m) for holding a portion of the sheet of material (10, 10f, 10i, 10j, 10k, or 10L) about the floral grouping (120) when the sheet of material (10, 10f, 10i, 10j, 10k, or 10L) is crimpingly wrapped about the floral grouping (120), the crimp connecting means (18, 18f, 21, 21L, 21m, 140i, 140j, 24k, 24L, 18L, or 18m) comprising a bonding material (21, 21L, 21m, 140i, 140j, 24k, or 24L) for bondingly connecting to portions of the sheet of material (10, 10f, 10i, 10j, 10k, or 10L) when a crimped portion (142i, 142j, 142k, or 142L) is formed in the sheet of material (10, 10f, 10i, 10j, 10k, or 10L), and,
sheet connecting means (24, 24i, 24j, or 24m) comprising a bonding material (24, 24i, 24j, or 24m) for connecting portions of an inner surface (16, 16i, 16j, 16k, or 16L) of the sheet of material (10, 10f, 10i, 10j, 10k, or 10L) to portions of an outer surface (17, 17i, 17j, 17k, 17L, or 17m) of the sheet of material (10, 10f, 10i, 10j, 10k, or 10L), and
wherein the sheet of material (10, 10f, 10i, 10j, 10k, or 10L) is crimpingly wrappable about at least a portion of the stem portion (122) of the floral grouping (120) with the crimp connecting means (18, 18f, 21, 21L, 21m, 140i, 140j, 24k, 24L, 18L, or 18m) being adapted to hold the sheet of material (10, 10f, 10i, 10j, 10k, or 10L) in a position crimped about the stem portion (122) of the floral grouping (120).

6. The wrapper (130, 136, 130i, 136i, 130j, 136j, 130k, 130L, 130m, or 136m) of claim 5 wherein the flat sheet of material (10, 10f, 10i, 10j, 10k, or 10L) further comprises a first end (12, 12i, 12j, 12k, or 12L), a second end (13, 13i, 13j, 13k, or 13L), a first side (14, 14i, 14j, 14k, or 14L), a second side (15, 15i, 15j, 15k, or 15L), the inner surface (16, 16i, 16j, 16k, or 16L) and the outer surface (17, 17i, 17j, 17k, 17L, or 17m) and wherein the bonding material (140i, 140j, 24k, or 24L) of the crimp connecting means (18, 18f, 140i, 140j, 24k, 24L, 18L, or 18m) is disposed on portions of the inner surface (16, 16i, 16j, 16k, or 16L), portions of the outer surface (17, 17i, 17j, 17k, 17L, or 17m), or portions of both the inner surface (16, 16i, 16j, 16k, or 16L) and the outer surface (17, 17i, 17j, 17k, 17L, or 17m) of the sheet of material (10, 10f, 10i, 10j, 10k, or 10L).

7. The wrapper (130, 136, 130i, 136i, 130j, 136j, 130k, 130L, 130m, or 136m) of claim 5 or 6 wherein the bonding material (21, 21L, 21m, 140i, 140j, 24k, or 24L) of the crimp connecting means (18, 18f, 21, 21L, 21m, 140i, 140j, 24k, 24L, 18L, or 18m) is used to form overlapping folds in the crimped portion (142i, 142j, 142k, or 142L) that are connected together by the bonding material (140i, 140j, 24k, or 24L).

8. The wrapper (130, 136, 130i, 136i, 130j, 136j, 130k, 130L, 130m, or 136m) of any one of claims 5-7 further comprising a pull tab (18k or 18L) for aiding in the release of the wrapper (130, 136, 130i, 136i, 130j, 136j, 130k, 130L, 130m, or 136m) from the floral grouping (120).

9. A wrapper (148, 148a, 148b, 148c, 148d, 148e, 148f, 148g, or 148h) for wrapping a floral grouping (120) having a bloom portion (124) and a stem portion (122), the wrapper (148, 148a, 148b, 148c, 148d, 148e, 148f, 148g, or 148h) comprising:
a sleeve of material (148, 148a, 148b, 148c, 148d, 148e, 148f, 148g, or 148h) having a first end (152, 152a, 152b, 152c, or 152d), a second end (154, 154a, 154b, 154c, or 154d), an outer surface (158, 158a, 158b, 158c, or 158d), an inner surface (156, 156a, 156c, or 156d), an opening at the first end (152, 152a, 152b, 152c, or 152d) and an inner retaining space (193, 193a, 193c, 193d, or 193e) and sized to substantially surround and encompass the floral grouping (120) when wrapped thereabout; and
crimp connecting means (190, 190a, 190b, 206c, 190d, 206d, 190e, 206e, 206f, 190g, 190h, or 206h) for holding a portion of the sleeve of material (148, 148a, 148b, 148c, 148d, 148e, 148f, 148g, or 148h) about the floral grouping (120) when the sleeve of material (148, 148a, 148b, 148c, 148d, 148e, 148f, 148g, or 148h) is crimped about the floral grouping (120), the crimp connecting means (190, 190a, 190b, 206c, 190d, 206d, 190e, 206e, 206f, 190g, 190h, or 206h) comprising a bonding material (190, 190a, 190b, 190d, 190e, 190g, or 190h) disposed upon a portion of at least one of the inner surface (156, 156a, 156c, or 156d) or outer surface (158, 158a, 158b, 158c, or 158d) of the sleeve of material (148, 148a, 148b, 148c, 148d, 148e, 148f, 148g, or 148h), the bonding material (190, 190a, 190b, 190d, 190e, 190g, or 190h) being adapted for bondingly connecting overlapping portions (194, 198, or 204) of the sleeve of material (148, 148a, 148b, 148c, 148d, 148e, 148f, 148g, or 148h) when a crimped portion (202, 202a, 202b, 214d, or 214e) is formed in the material, and
wherein the sleeve of material (148, 148a, 148b, 148c, 148d, 148e, 148f, 148g, or 148h) is crimpingly wrappable about at least a portion of the floral grouping with the crimp connecting means (190, 190a, 190b, 206c, 190d, 206d, 190e, 206e, 206f, 190g, 190h, or 206h) being adapted to hold the sleeve of material (148, 148a, 148b, 148c, 148d, 148e, 148f, 148g, or 148h) in a position crimped about the stem portion (122) of the floral grouping (120).

10. The wrapper (148, 148a, 148b, 148c, 148d, 148e, 148f, 148g, or 148h) of claim 9 wherein the sleeve of material (148, 148a, 148b, 148c, 148d, 148e, 148f, 148g, or 148h) further comprises closure means (240f, 244f, 242f, or 248f) for closing the first end (152, 152a, 152b, 152c, or 152d) of the sleeve of material (148, 148a, 148b, 148c, 148d, 148e, 148f, 148g, or 148h), the second end (154, 154a, 154b, 154c, or 154d) of the sleeve of material (148, 148a, 148b, 148c, 148d, 148e, 148f, 148g, or 148h), or both the first end (152, 152a, 152b, 152c, or 152d) and the second end (154, 154a, 154b, 154c, or 154d) of the sleeve of material (148, 148a, 148b, 148c, 148d, 148e, 148f, 148g, or 148h) after the sleeve of material (148, 148a, 148b, 148c, 148d, 148e, 148f, 148g, or 148h) has been wrapped about the floral grouping (120).

11. The wrapper (130, 136, 130i, 136i, 130j, 136j, 130k, 130L, 130m, 136m, 148, 148a, 148b, 148c, 148d, 148e, 148f, 148g, or 148h) of any one of claims 5-10 wherein the crimp connecting means (18, 18f, 21, 21L, 21m, 140i, 140j, 24k, 24L, 18L, 18m, 190, 190a, 190b, 206c, 190d, 206d, 190e, 206e, 206f, 190g, 190h, or 206h) further comprises a cinching tab (18, 18f, 18L, 18m, 206c, 206d, 206e, 206f, or 206h) extending from the sheet of material (10, 10f, 10i, 10j, 10k, or 10L) or the sleeve of material (148, 148a, 148b, 148c, 148d, 148e, 148f, 148g, or 148h) for wrapping about the crimped portion (142i, 142j, 142k, 142L, 202, 202a, 202b, 214d, or 214e) of the wrapper (130, 136, 130i, 136i, 130j, 136j, 130k, 130L, 130m, 136m, 148, 148a, 148b, 148c, 148d, 148e, 148f, 148g, or 148h) to retain the crimped portion (142i, 142j, 142k, 142L, 202, 202a, 202b, 214d, or 214e) of the wrapper (130, 136, 130i, 136i, 130j, 136j, 130k, 130L, 130m, 136m, 148, 148a, 148b, 148c, 148d, 148e, 148f, 148g, or 148h) in a crimped condition about the floral grouping (120).

12. The wrapper (130, 136, 130i, 136i, 130j, 136j, 130k, 130L, 130m, 136m, 148, 148a, 148b, 148c, 148d, 148e, 148f, 148g, or 148h) of any one of claims 1-4 and 11 wherein the cinching tab (18, 18f, 18L, 18m, 206c, 206d, 206e, 206f, or 206h) extending from the sheet of material (10, 10f, 10i, 10j, 10k, or 10L) or the sleeve of material (148, 148a, 148b, 148c, 148d, 148e, 148f, 148g, or 148h) comprises one end connected to the sheet of material (10, 10f, 10i, 10j, 10k, or 10L) or the sleeve of material (148, 148a, 148b, 148c, 148d, 148e, 148f, 148g, or 148h) and one end that can be extended about a substantial portion of a circumference of the sheet of material (10, 10f, 10i, 10j, 10k, or 10L) or the sleeve of material (148, 148a, 148b, 148c, 148d, 148e, 148f, 148g, or 148h) and connected thereto.

13. The wrapper (130, 136, 130i, 136i, 130j, 136j, 130k, 130L, 130m, 136m, 148, 148a, 148b, 148c, 148d, 148e, 148f, 148g, or 148h) of any one of claims 1-4 and 11-12 wherein the cinching tab (18, 18f, 18L, 18m, 206c, 206d, 206e, 206f, or 206h) extending from the sheet of material (10, 10f, 10i, 10j, 10k, or 10L) or the sleeve of material (148, 148a, 148b, 148c, 148d, 148e, 148f, 148g, or 148h) further comprises a bonding material (21, 21L, 21m, 212c, 212d, 212f, or 212h) disposed upon a portion thereof for connecting the cinching tab to a portion of the sheet of material (10, 10f, 10i, 10j, 10k, or 10L) or the sleeve of material (148, 148a, 148b, 148c, 148d, 148e, 148f, 148g, or 148h) when the cinching tab (18, 18f, 18L, 18m, 206c, 206d, 206e, 206f, or 206h) is wrapped about the crimped portion (142i, 142j, 142k, 142L, 202, 202a, 202b, 214d, or 214e) of the sheet of material (10, 10f, 10i, 10j, 10k, or 10L) or the sleeve of material (148, 148a, 148b, 148c, 148d, 148e, 148f, 148g, or 148h).

14. The wrapper (130, 136, 130i, 136i, 130j, 136j, 130k, 130L, 130m, 136m, 148, 148a, 148b, 148c, 148d, 148e, 148f, 148g, or 148h) of any one of the preceding claims wherein the wrapper (130, 136, 130i, 136i, 130j, 136j, 130k, 130L, 130m, 136m, 148, 148a, 148b, 148c, 148d, 148e, 148f, 148g, or 148h) further comprises a label bonding material (254m) disposed upon a surface of the wrapper (130, 136, 130i, 136i, 130j, 136j, 130k, 130L, 130m, 136m, 148, 148a, 148b, 148c, 148d, 148e, 148f, 148g, or 148h) for affixing a label to a portion of the wrapper (130, 136, 130i, 136i, 130j, 136j, 130k, 130L, 130m, 136m, 148, 148a, 148b, 148c, 148d, 148e, 148f, 148g, or 148h).

15. The wrapper (130, 136, 130i, 136i, 130j, 136j, 130k, 130L, 130m, 136m, 148, 148a, 148b, 148c, 148d, 148e, 148f, 148g, or 148h) of any one of the preceding claims wherein the sheet of material (10, 10f, 10i, 10j, 10k, or 10L) or the sleeve of material (148, 148a, 148b, 148c, 148d, 148e, 148f, 148g, or 148h) is constructed from a material selected from the group consisting of paper (untreated or treated in any manner), cellophane, foil, polymer film, fabric (woven or nonwoven or synthetic or natural), burlap, cloth, and any combination thereof.

16. The wrapper (130, 136, 130i, 136i, 130j, 136j, 130k, 130L, 130m, 136m, 148, 148a, 148b, 148c, 148d, 148e, 148f, 148g, or 148h) of any one of the preceding claims wherein the material (10, 10f, 10i, 10j, 10k, 10L, 148, 148a, 148b, 148c, 148d, 148e, 148f, 148g, or 148h) is further defined as having a thickness in a range of between about 2.54 µm (0.1 mils) and about 762 µm (30 mils).

17. The wrapper (130, 136, 130i, 136i, 130j, 136j, 130k, 130L, 130m, 136m, 148, 148a, 148b, 148c, 148d, 148e, 148f, 148g, or 148h) of any one of the preceding claims 1-3, 6-8, or 10-12 wherein the material (10, 10f, 10i, 10j, 10k, 10L, 148, 148a, 148b, 148c, 148d, 148e, 148f, 148g, or 148h) further comprises two or more layers.

18. The wrapper (130, 136, 130i, 136i, 130j, 136j, 130k, 130L, 130m, 136m, 148, 148a, 148b, 148c, 148d, 148e, 148f, 148g, or 148h) of any one of the preceding claims wherein the bonding material (140i, 140j, 24k, 24L, 190, 190a, 190b, 190d, 190e, 190g, 190h, 21, 21L, 21m, 212c, 212d, 212f, or 212h) of the crimp connecting means (18, 18f, 21L, 21m, 140i, 140j, 24k, 24L, 18L, 18m, 190, 190a, 190b, 206c, 190d, 206d, 190e, 206e, 206f, 190g, 190h, or 206h) further comprises a bonding material (140i, 140j, 24k, 24L, 190, 190a, 190b, 190d, 190e, 190g, 190h, 21, 21L, 21m, 212c, 212d, 212f, or 212h) selected from the group consisting of a pressure sensitive adhesive or cohesive, a heat sensitive adhesive or cohesive, a sonically sealable adhesive or cohesive, a vibratingly sealing adhesive or cohesive, a chemically sealing adhesive or cohesive, or a cold sealing lacquer.

19. A method of wrapping a floral grouping (120), comprising:
providing a floral grouping (120) having a bloom portion (124) and a stem portion (122);
providing a wrapper (130, 136, 130i, 136i, 130j, 136j, 130k, 130L, 130m, or 136m) comprising:
a sheet of material (10, 10f, 10i, 10j, 10k, or 10L) having a first end (12, 12i, 12j, 12k, or 12L), a second end (13, 13i, 13j, 13k, or 13L), a first side (14, 14i, 14j, 14k, 14L), a second side (15, 15i, 15j, 15k, or 15L), an inner surface (16, 16i, 16j, 16k, or 16L) and an outer surface (17, 17i, 17j, 17k, 17L, or 17m), and wherein the sheet of material (10, 10f, 10i, 10j, 10k, or 10L) is sized to substantially surround and encompass the floral grouping (120) when wrapped thereabout, and
crimp connecting means (18, 18f, 21, 21L, 21m, 140i, 140j, 24k, 24L, 18L, or 18m) comprising a bonding material (21, 21L, 21m, 140i, 140j, 24k, or 24L) disposed upon a surface (16, 16i, 16j, 16k, 16L, 17, 17i, 17j, 17k, 17L, or 17m) of the sheet of material (10, 10f, 10i, 10j, 10k, or 10L) or an extension (18, 18f, 18L, or 18m) thereof for bondingly connecting a plurality of overlapping portions of the sheet of material (10, 10f, 10i, 10j, 10k, or 10L) when a crimped portion (142i, 142j, 142k, or 142L) comprising overlapping portions is formed in the sheet of material (10, 10f, 10i, 10j, 10k, or 10L);
placing the floral grouping (120) on a portion of the sheet of material (10, 10f, 10i, 10j, 10k, or 10L);
wrapping the sheet of material (10, 10f, 10i, 10j, 10k, or 10L) about the floral grouping (120) to form a wrapped floral grouping (120); and
forming a crimped portion (142i, 142j, 142k, or 142L) having a plurality of connected overlapping folds in the sheet of material (10, 10f, 10i, 10j, 10k, or 10L) of the wrapped floral grouping (120), the crimp connecting means (18, 18f, 21, 21L, 21m, 140i, 140j, 24k, 24L, 18L, or 18m) holding the crimped portion (142i, 142j, 142k, or 142L) about a portion of the stem portion (122) to hold the sheet of material (10, 10f, 10i, 10j, 10k, or 10L) about the floral grouping (120).

20. The method of claim 19 wherein in the step of providing the wrapper (130, 136, 130i, 136i, 130j, 136j, 130k, 130L, 130m, or 136m), the bonding material (21, 21L, 21m, 140i, 140j, 24k, or 24L) of the crimp connecting means (18, 18f, 21, 21L, 21m, 140i, 140j, 24k, 24L, 18L, or 18m) is disposed on portions of the inner surface (16, 16i, 16j, 16k, or 16L), portions of the outer surface (17, 17i, 17j, 17k, 17L, or 17m), or portions of both the inner surface (16, 16i, 16j, 16k, or 16L) and the outer surface (17, 17i, 17j, 17k, 17L, or 17m) of the sheet of material (10, 10f, 10i, 10j, 10k, or 10L).

21. The method of claim 19 or 20 wherein in the step of providing the wrapper (130, 136, 130i, 136i, 130j, 136j, 130k, 130L, 130m, or 136m), the wrapper (130, 136, 130i, 136i, 130j, 136j, 130k, 130L, 130m, or 136m) further comprises sheet connecting means (24, 24i, 24j, or 24m) disposed on the sheet of material (10, 10f, 10i, 10j, 10k, or 10L), the sheet connecting means (24, 24i, 24j, or 24m) comprising a bonding material (24, 24i, 24j, or 24m) for connecting portions of the inner surface (16, 16i, 16j, 16k, or 16L) of the sheet of material (10, 10f, 10i, 10j, 10k, or 10L) to portions of the outer surface (17, 17i, 17j, 17k, 17L, or 17m) of the sheet of material (10, 10f, 10i, 10j, 10k, or 10L) when the sheet of material (10, 10f, 10i, 10j, 10k, or 10L) is wrapped about the floral grouping (120).

22. The method of claim 21 wherein the step of providing a wrapper (130, 136, 130i, 136i, 130j, 136j, 130k, 130L, 130m, or 136m) further comprises providing a pad of sheets of material (10, 10f, 10i, 10j, 10k, or 10L), the pad having a top sheet of material (10, 10f, 10i, 10j, 10k, or 10L) and wherein the sheet connecting means (24, 24i, 24j, or 24m) of each sheet of material (10, 10f, 10i, 10j, 10k, or 10L) bondingly connects to a portion of an adjacent sheet of material (10, 10f, 10i, 10j, 10k, or 10L) for cooperating to connect the sheets of material (10, 10f, 10i, 10j, 10k, or 10L) into the pad and wherein the sheet connecting means (24, 24i, 24j, or 24m) on each sheet of material (10, 10f, 10i, 10j, 10k, or 10L) releasably connects each sheet of material (10, 10f, 10i, 10j, 10k, or 10L) to one other sheet of material (10, 10f, 10i, 10j, 10k, or 10L) whereby one of the sheets of material (10, 10f, 10i, 10j, 10k, or 10L) can be releasably disconnected from another sheet of material (10, 10f, 10i, 10j, 10k, or 10L) by pulling the sheets of material (10, 10f, 10i, 10j, 10k, or 10L) apart.

23. The method of claim 21 or 22 wherein the step of wrapping the sheet of material (10, 10f, 10i, 10j, 10k, or 10L) about the floral grouping (120) further comprises placing a portion of the top sheet of material (10, 10f, 10i, 10j, 10k, or 10L) over at least a portion of the floral grouping (120) and rolling the top sheet of material (10, 10f, 10i, 10j, 10k, or 10L) and the floral grouping (120) and wrapping the top sheet of material (10, 10f, 10i, 10j, 10k, or 10L) about the floral grouping (120), the top sheet of material (10, 10f, 10i, 10j, 10k, or 10L) being removed from the pad of sheets of material (10, 10f, 10i, 10j, 10k, or 10L) as the top sheet of material (10, 10f, 10i, 10j, 10k, or 10L) is wrapped about the floral grouping (120).

24. The method of claim 23 wherein the step of wrapping the top sheet of material (10, 10f, 10i, 10j, 10k, or 10L) about the floral grouping (120) and disconnecting the top sheet of material (10, 10f, 10i, 10j, 10k, or 10L) from the pad leaves the next sheet of material (10, 10f, 10i, 10j, 10k, or 10L) forming a new top sheet of material (10, 10f, 10i, 10j, 10k, or 10L), and
wherein the steps of placing the floral grouping (120) on the top sheet of material (10, 10f, 10i, 10j, 10k, or 10L)and wrapping the top sheet of material (10, 10f, 10i, 10j, 10k, or 10L) about the floral grouping (120) are repeated with other floral groupings (120) until substantially all of the sheets of material (10, 10f, 10i, 10j, 10k, or 10L) in the pad have been wrapped about the floral groupings (120).

25. The method of any one of claims 19-21 wherein in the step of providing the wrapper (130, 136, 130i, 136i, 130j, 136j, 130k, 130L, 130m, or 136m), the wrapper (130, 136, 130i, 136i, 130j, 136j, 130k, 130L, 130m, or 136m) further comprises sheet connecting means (24, 24i, 24j, or 24m) disposed on the sheet of material (10, 10f, 10i, 10j, 10k, or 10L), the sheet connecting means (24, 24i, 24j, or 24m) comprising a bonding material (24, 24i, 24j, or 24m) for connecting portions of the inner surface (16, 16i, 16j, 16k, or 16L) of the sheet of material (10, 10f, 10i, 10j, 10k, or 10L) to portions of the outer surface (17, 17i, 17j, 17k, 17L, or 17m) of the sheet of material (10, 10f, 10i, 10j, 10k, or 10L) when the sheet of material (10, 10f, 10i, 10j, 10k, or 10L) is wrapped about the floral grouping (120).

26. The method of any one of claims 19-25 wherein in the step of providing the wrapper (130, 136, 130i, 136i, 130j, 136j, 130k, 130L, 130m, or 136m), the wrapper (130, 136, 130i, 136i, 130j, 136j, 130k, 130L, 130m, or 136m) further comprises a pull tab (18k or 18L) extending from the sheet of material (10, 10f, 10i, 10j, 10k, or 10L) for aiding in the release of the wrapper (130, 136, 130i, 136i, 130j, 136j, 130k, 130L, 130m, or 136m) from the floral grouping (120).

27. A method of wrapping a floral grouping (120), comprising:
providing a floral grouping (120) having a bloom portion (124) and a stem portion (122);
providing a wrapper (148, 148a, 148b, 148c, 148d, 148e, 148f, 148g, or 148h) comprising:
a sleeve of material (148, 148a, 148b, 148c, 148d, 148e, 148f, 148g, or 148h) having a first end (152, 152a, 152b, 152c, or 152d), a second end (154, 154a, 154b, 154c, or 154d), an outer surface (158, 158a, 158b, 158c, or 158d), an inner surface (156, 156a, 156c, or 156d), an opening at the first end (152, 152a, 152b, 152c, or 152d), a circumference, and an inner retaining space (193, 193a, 193c, 193d, or 193e) bounded by the inner surface (156, 156a, 156c, or 156d) and sized to substantially surround and encompass the floral grouping (120) when wrapped thereabout, and
crimp connecting means (190, 190a, 190b, 206c, 190d, 206d, 190e, 206e, 206f, 190g, 190h, or 206h) comprising a cinching tab (206c, 206d, 206e, 206f, or 206h) extending from the sleeve of material (148, 148a, 148b, 148c, 148d, 148e, 148f, 148g, or 148h) for bondingly connecting to a portion of the sleeve of material (148, 148a, 148b, 148c, 148d, 148e, 148f, 148g, or 148h) when a crimped portion (202, 202a, 202b, 214d, or 214e) is formed in the sleeve of material (148, 148a, 148b, 148c, 148d, 148e, 148f, 148g, or 148h) and wherein the sleeve of material (148, 148a, 148b, 148c, 148d, 148e, 148f, 148g, or 148h) is free of preformed folds or creases which determine the position of the crimped portion (202, 202a, 202b, 214d, or 214e);
placing at least a portion of the stem portion (122) of the floral grouping (120) into the retaining space (193, 193a, 193c, 193d, or 193e) of the sleeve of material (148, 148a, 148b, 148c, 148d, 148e, 148f, 148g, or 148h); and
crimping a portion of the sleeve of material (148, 148a, 148b, 148c, 148d, 148e, 148f, 148g, or 148h) about the stem portion (122) of the floral grouping (120) to form a crimped portion (202, 202a, 202b, 214d, or 214e) comprising overlapping folds (194, 198, 204), the crimp connecting means (190, 190a, 190b, 206c, 190d, 206d, 190e, 206e, 206f, 190g, 190h, or 206h) holding the crimped portion (202, 202a, 202b, 214d, or 214e).

28. The method of claim 27 wherein in the step of providing the wrapper (148, 148a, 148b, 148c, 148d, 148e, 148f, 148g, or 148h), the crimp connecting means (190, 190a, 190b, 206c, 190d, 206d, 190e, 206e, 206f, 190g, 190h, or 206h) further comprises a bonding material (190, 190a, 190b, 190d, 190e, 190g, or 190h) disposed upon a portion of at least one of the inner surface (156, 156a, 156c, or 156d) or the outer surface (158, 158a, 158b, 158c, or 158d) of the sleeve of material (148, 148a, 148b, 148c, 148d, 148e, 148f, 148g, or 148h).

29. The method of claim 27 or 28 wherein in the step of forming the crimped portion (202, 202a, 202b, 214d, or 214e), at least some overlapping folds (194, 198, 204) are formed in the crimped portion (202, 202a, 202b, 214d, or 214e) and wherein at least some of the overlapping folds (194, 198, 204) are connected together by the bonding material (190, 190a, 190b, 190d, 190e, 190g, or 190h) of the crimp connecting means (190, 190a, 190b, 206c, 190d, 206d, 190e, 206e, 206f, 190g, 190h, or 206h).

30. The method of any one of claims 27-29 wherein in the step of providing the wrapper (148, 148a, 148b, 148c, 148d, 148e, 148f, 148g, or 148h), the sleeve of material (148, 148a, 148b, 148c, 148d, 148e, 148f, 148g, or 148h) further comprises closure means (240f, 244f, 242f, or 248f) for closing the first end (152, 152a, 152b, 152c, or 152d) of the sleeve of material (148, 148a, 148b, 148c, 148d, 148e, 148f, 148g, or 148h), the second end (154, 154a, 154b, 154c, or 154d) of the sleeve of material (148, 148a, 148b, 148c, 148d, 148e, 148f, 148g, or 148h), or both the first end (152, 152a, 152b, 152c, or 152d) and the second end (154, 154a, 154b, 154c, or 154d) of the sleeve of material (148, 148a, 148b, 148c, 148d, 148e, 148f, 148g, or 148h).

31. A method of wrapping a floral grouping (120), comprising:
providing a floral grouping (120) having a bloom portion (124) and a stem portion (122);
providing a wrapper (148, 148a, 148b, 148c, 148d, 148e, 148f, 148g, or 148h) comprising:
a sleeve of material (148, 148a, 148b, 148c, 148d, 148e, 148f, 148g, or 148h) having a first end (152, 152a, 152b, 152c, or 152d), a second end (154, 154a, 154b, 154c, or 154d), an outer surface (158, 158a, 158b, 158c, or 158d), an inner surface (156, 156a, 156c, or 156d), an opening at the first end (152, 152a, 152b, 152c, or 152d), and an inner retaining space (193, 193a, 193c, 193d, or 193e) bounded by the inner surface (156, 156a, 156c, or 156d) and sized to substantially surround and encompass the floral grouping (120) when wrapped thereabout, and
crimp connecting means (190, 190a, 190b, 206c, 190d, 206d, 190e, 206e, 206f, 190g, 190h, or 206h) comprising a bonding material (190, 190a, 190b, 190d, 190e, 190g, or 190h) disposed upon a portion of at least one of the inner surface (156, 156a, 156c, or 156d) or the outer surface (158, 158a, 158b, 158c, or 158d) of the sleeve of material (148, 148a, 148b, 148c, 148d, 148e, 148f, 148g, or 148h) for bondingly connecting overlapping portions (194, 198, or 204) of the sleeve of material (148, 148a, 148b, 148c, 148d, 148e, 148f, 148g, or 148h) when a crimped portion (202, 202a, 202b, 214d, or 214e) is formed in the sleeve of material (148, 148a, 148b, 148c, 148d, 148e, 148f, 148g, or 148h);
placing at least a portion of the stem portion (122) of the floral grouping (120) into the retaining space (193, 193a, 193c, 193d, or 193e) of the sleeve of material (148, 148a, 148b, 148c, 148d, 148e, 148f, 148g, or 148h); and
crimping portions of the sleeve of material (148, 148a, 148b, 148c, 148d, 148e, 148f, 148g, or 148h) about the stem portion (122) of the floral grouping (120) to form a crimped portion (202, 202a, 202b, 214d, or 214e) in the sleeve of material (148, 148a, 148b, 148c, 148d, 148e, 148f, 148g, or 148h), the bonding material (190, 190a, 190b, 190d, 190e, 190g, or 190h) of the crimp connecting means (190, 190a, 190b, 206c, 190d, 206d, 190e, 206e, 206f, 190g, 190h, or 206h) holding overlapping portions (194, 198, or 204) of the crimped portion (202, 202a, 202b, 214d, or 214e) in place, thereby holding the sleeve of material (148, 148a, 148b, 148c, 148d, 148e, 148f, 148g, or 148h) about the floral grouping (120).

32. The method of claim 31 wherein in the step of providing the wrapper (148, 148a, 148b, 148c, 148d, 148e, 148f, 148g, or 148h), the sleeve of material (148, 148a, 148b, 148c, 148d, 148e, 148f, 148g, or 148h) further comprises closure means (240f, 244f, 242f, or 248f) for closing the first end (152, 152a, 152b, 152c, or 152d) of the sleeve of material (148, 148a, 148b, 148c, 148d, 148e, 148f, 148g, or 148h), the second end (154, 154a, 154b, 154c, or 154d) of the sleeve of material (148, 148a, 148b, 148c, 148d, 148e, 148f, 148g, or 148h), or both the first end (152, 152a, 152b, 152c, or 152d) and the second end (154, 154a, 154b, 154c, or 154d) of the sleeve of material (148, 148a, 148b, 148c, 148d, 148e, 148f, 148g, or 148h).

33. The method of any one of claims 19-26 and 31-32 wherein in the step of providing the wrapper (130, 136, 130i, 136i, 130j, 136j, 130k, 130L, 130m, 136m, 148, 148a, 148b, 148c, 148d, 148e, 148f, 148g, or 148h), the crimp connecting means (18, 18f, 21, 21L, 21m, 140i, 140j, 24k, 24L, 18L, 18m, 190, 190a, 190b, 206c, 190d, 206d, 190e, 206e, 206f, 190g, 190h, or 206h) further comprises a cinching tab (18, 18f, 18L, 18m, 206c, 206d, 206e, 206f, or 206h) extending from the sheet of material (10, 10f, 10i, 10j, 10k, or 10L) or the sleeve of material (148, 148a, 148b, 148c, 148d, 148e, 148f, 148g, or 148h) for wrapping about the crimped portion (142i, 142j, 142k, 142L, 202, 202a, 202b, 214d, or 214e) of the wrapper (130, 136, 130i, 136i, 130j, 136j, 130k, 130L, 130m, 136m, 148, 148a, 148b, 148c, 148d, 148e, 148f, 148g, or 148h) to retain the crimped portion (142i, 142j, 142k, 142L, 202, 202a, 202b, 214d, or 214e) of the wrapper (130, 136, 130i, 136i, 130j, 136j, 130k, 130L, 130m, 136m, 148, 148a, 148b, 148c, 148d, 148e, 148f, 148g, or 148h) in a crimped condition about the floral grouping (120).

34. The method of any one of claims 27-30 and 33 wherein in the step of providing the wrapper (130, 136, 130i, 136i, 130j, 136j, 130k, 130L, 130m, 136m, 148, 148a, 148b, 148c, 148d, 148e, 148f, 148g, or 148h), the cinching tab (18, 18f, 18L, 18m, 206c, 206d, 206e, 206f, or 206h) extending from the sheet of material (10, 10f, 10i, 10j, 10k, or 10L) or the sleeve of material (148, 148a, 148b, 148c, 148d, 148e, 148f, 148g, or 148h) further comprises a bonding material (21, 21L, 21m, 212c, 212d, 212f, or 212h) disposed upon a portion thereof for connecting the cinching tab (18, 18f, 18L, 18m, 206c, 206d, 206e, 206f, or 206h) to a portion of the sheet of material (10, 10f, 10i, 10j, 10k, or 10L) when the cinching tab (18, 18f, 18L, 18m, 206c, 206d, 206e, 206f, or 206h) is wrapped about the crimped portion (142i, 142j, 142k, 142L, 202, 202a, 202b, 214d, or 214e) of the sheet of material (10, 10f, 10i, 10j, 10k, or 10L) or the sleeve of material (148, 148a, 148b, 148c, 148d, 148e, 148f, 148g, or 148h).

35. The method of any one of claims 27-30 and 33-34 wherein in the step of providing the wrapper (130, 136, 130i, 136i, 130j, 136j, 130k, 130L, 130m, 136m, 148, 148a, 148b, 148c, 148d, 148e, 148f, 148g, or 148h), the cinching tab (18, 18f, 18L, 18m, 206c, 206d, 206e, 206f, or 206h) comprises one end connected to the sleeve of material (148, 148a, 148b, 148c, 148d, 148e, 148f, 148g, or 148h) or to the sheet of material (10, 10f, 10i, 10j, 10k, or 10L) and one end that can be extended about a substantial portion of a circumference of the sheet of material (10, 10f, 10i, 10j, 10k, or 10L) or the circumference of the sleeve of material (148, 148a, 148b, 148c, 148d, 148e, 148f, 148g, or 148h) and connected thereto.

36. The method of any one of claims 19-35 wherein in the step of providing the wrapper (130, 136, 130i, 136i, 130j, 136j, 130k, 130L, 130m, 136m, 148, 148a, 148b, 148c, 148d, 148e, 148f, 148g, or 148h), the wrapper (130, 136, 130i, 136i, 130j, 136j, 130k, 130L, 130m, 136m, 148, 148a, 148b, 148c, 148d, 148e, 148f, 148g, or 148h) further comprises a label bonding material (254m) disposed upon a surface of the wrapper (130, 136, 130i, 136i, 130j, 136j, 130k, 130L, 130m, 136m, 148, 148a, 148b, 148c, 148d, 148e, 148f, 148g, or 148h) for affixing a label to a portion of the wrapper (130, 136, 130i, 136i, 130j, 136j, 130k, 130L, 130m, 136m, 148, 148a, 148b, 148c, 148d, 148e, 148f, 148g, or 148h).

37. The method of any one of claims 19-36 wherein in the step of providing the wrapper (130, 136, 130i, 136i, 130j, 136j, 130k, 130L, 130m, 136m, 148, 148a, 148b, 148c, 148d, 148e, 148f, 148g, or 148h), the sheet of material (10, 10f, 10i, 10j, 10k, or 10L) or the sleeve of material (148, 148a, 148b, 148c, 148d, 148e, 148f, 148g, or 148h) is constructed from a material selected from the group consisting of paper (untreated or treated in any manner), cellophane, foil, polymer film, fabric (woven or nonwoven or synthetic or natural), burlap, cloth, and any combinations thereof.

38. The method of any one of claims 19-37 wherein in the step of providing the wrapper (130, 136, 130i, 136i, 130j, 136j, 130k, 130L, 130m, 136m, 148, 148a, 148b, 148c, 148d, 148e, 148f, 148g, or 148h), the material (10, 10f, 10i, 10j, 10k, 10L, 148, 148a, 148b, 148c, 148d, 148e, 148f, 148g, or 148h) is further defined as having a thickness in a range of between about 2.54 µm (0.1 mils) and about 762 µm (30 mils).

39. The method of any one of claims 19-38 wherein in the step of providing the wrapper (130, 136, 130i, 136i, 130j, 136j, 130k, 130L, 130m, 136m, 148, 148a, 148b, 148c, 148d, 148e, 148f, 148g, or 148h), the material (10, 10f, 10i, 10j, 10k, 10L, 148, 148a, 148b, 148c, 148d, 148e, 148f, 148g, or 148h) further comprises two or more layers.

40. The method of any of claims 19-39 wherein in the step of providing the wrapper (130, 136, 130i, 136i, 130j, 136j, 130k, 130L, 130m, 136m, 148, 148a, 148b, 148c, 148d, 148e, 148f, 148g, or 148h), the bonding material (140i, 140j, 24k, 24L, 190, 190a, 190b, 190d, 190e, 190g, 190h, 21, 21L, 21m, 212c, 212d, 212f, or 212h) of the crimp connecting means (18, 18f, 140i, 140j, 24k, 24L, 18L, 18m, 190, 190a, 190b, 206c, 190d, 206d, 190e, 206e, 206f, 190g, 190h, or 206h) further comprises a bonding material (140i, 140j, 24k, 24L, 190, 190a, 190b, 190d, 190e, 190g, 190h, 21, 21m, 212c, 212d, 212f, or 212h) selected from the group consisting of a pressure sensitive adhesive or cohesive, a heat sensitive adhesive or cohesive, a sonically sealable adhesive or cohesive, a vibratingly sealing adhesive or cohesive, a chemically sealing adhesive or cohesive, or a cold sealing lacquer.

## Patentansprüche

1. Umhüllung (130, 136, 130i, 136i, 130j, 136j, 130k, 130L, 130m oder 136m) zur Umhüllung eines Blumenstraußes (120) mit einem Blütenabschnitt (124) und einem Stielabschnitt (122), wobei die Umhüllung (130, 136, 130i, 136i, 130j, 136j, 130k, 130L oder 130m) folgendes umfaßt:
eine flache Materialbahn (10, 10f, 10i, 10j, 10k oder 10L), die so bemessen ist, daß sie im wesentlichen den Blumenstrauß (120) umgibt und einschließt, wenn sie um diesen gewickelt wird; und
eine Faltverbindungseinrichtung (18, 18f, 140i, 140j, 24k, 24L, 18L oder 18m) zum Halten eines Teilstücks der Materialbahn (10, 10f, 10i, 10j, 10k oder 10L) um den Blumenstrauß (120), wenn die Materialbahn (10, 10f, 10i, 10j, 10k oder 10L) durch Falten um den Blumenstrauß (120) gewickelt wird, wobei die Faltverbindungseinrichtung (18, 18f, 140i, 140j, 24k, 24L, 18L oder 18m) ein Bindemittel (140i, 140j, 24k oder 24L) umfaßt, das sich auf einer Oberfläche (16i, 17j, 16k oder 16L) der Materialbahn (10, 10f, 10i, 10j, 10k oder 10L) befindet, um die überlappenden Teilstücke der Materialbahn (10, 10f, 10i, 10j, 10k oder 10L) haftend zu verbinden, wenn ein gefaltetes Teilstück (142i, 142j, 142k oder 142L) in der Materialbahn (10, 10f, 10i, 10j, 10k oder 10L) gestaltet wird, und wobei die Faltverbindungseinrichtung (18, 18f, 140i, 140j, 24K, 24L oder 18m) ferner einen Sicherungsstreifen (18, 18f, 18L oder 18m) umfaßt, der sich von der Materialbahn (10, 10f, 10i, 10j, 10k oder 10L) erstreckt, so daß die verbundenen überlappenden Faltungen an einer gefalteten Stellung gehalten werden; und
wobei die Materialbahn (10, 10f, 10i, 10j, 10k oder 10L) durch Falten um mindestens ein Teilstück des Stielabschnitts (122) des Blumenstraußes (120) gewickelt wird, wobei sich die Faltverbindungseinrichtung (18, 18f, 140i, 140j, 24k, 24L, 18L oder 18m) dazu eignet, die Materialbahn (10, 10f, 10i, 10j, 10k oder 10L) an einer um den Stielabschnitt (122) des Blumenstraußes (120) gefalteten Position zu halten.

2. Umhüllung (130, 136, 130i, 136i, 130j, 136j, 130k, 130L, 130m oder 136m) nach Anspruch 1, wobei die flache Materialbahn (10, 10f, 10i, 10j, 10k oder 10L) ferner ein erstes Ende (12, 12i, 12j, 12k oder 12L), ein zweites Ende (13, 13i, 13j, 13k oder 13L), eine erste Seite (14, 14i, 14j, 14k, 14L), eine zweite Seite (15, 15i, 15j, 15k oder 15L), eine innere Oberfläche (16, 16i, 16j, 16k oder 16L) und eine äußere Oberfläche (17, 17i, 17j, 17k, 17L oder 17m) umfaßt, und wobei sich das Bindemittel (140i, 140j, 24k oder 24L) der Faltverbindungseinrichtung (18, 18f, 140i, 140j, 24k, 24L, 18L oder 18m) auf Teilstücken der inneren Oberfläche (16, 16i, 16j, 16k oder 16L), Teilstücken der äußeren Oberfläche (17, 17i, 17j, 17k, 17L oder 17m) oder Teilstücken sowohl der inneren Oberfläche (16, 16i, 16j, 16k oder 16L) als auch der äußeren Oberfläche (17, 17i, 17j, 17k, 17L oder 17m) der Materialbahn (10, 10f, 10i, 10j, 10k oder 10L) befindet.

3. Umhüllung (130, 136, 130i, 136i, 130j, 136j, 130k, 130L, 130m oder 136m) nach Anspruch 1 oder 2, wobei die Materialbahn (10, 10f, 10i, 10j, 10k oder 10L) ferner eine Bahnverbindungseinrichtung (24, 24i, 24j oder 24m) umfaßt, die ein Bindemittel (24, 24i, 24j oder 24m) aufweist, das sich auf einem Teilstück der Materialbahn (10, 10f, 10i, 10j, 10k oder 10L) befindet, um Teilstücke der inneren Oberfläche (16, 16i, 16j, 16k oder 16L) der Materialbahn (10, 10f, 10i, 10j, 10k oder 10L) mit Teilstücken der äußeren Oberfläche (17, 17i, 17j, 17k, 17L oder 17m) der Materialbahn (10, 10f, 10i, 10j, 10k oder 10L) zu verbinden, wenn die Materialbahn (10, 10f, 10i, 10j, 10k oder 10L) um den Blumenstrauß (120) gewickelt wird.

4. Umhüllung (130, 136, 130i, 136i, 130j, 136j, 130k, 130L, 130m oder 136m) nach einem der vorstehenden Ansprüche, ferner mit einem Aufziehstreifen (18k oder 18L) zur Unterstützung des Lösens der Umhüllung (130, 136, 130i, 136i, 130j, 130k, 130L, 130m oder 136m) von dem Blumenstrauß (120).

5. Umhüllung (130, 136, 130i, 136i, 130j, 136j, 130k, 130L, 130m oder 136m) zur Umhüllung eines Blumenstraußes (120), wobei die Umhüllung (130, 136, 130i, 136i, 130j, 136j, 130k, 130L oder 130m) folgendes umfaßt:
eine flache Materialbahn (10, 10f, 10i, 10j, 10k oder 10L), die so bemessen ist, daß sie im wesentlichen den Blumenstrauß (120) umgibt und einschließt, wenn sie um diesen gewickelt wird, und wobei die Materialbahn (10, 10f, 10i, 10j, 10k oder 10L) folgendes aufweist:
eine Faltverbindungseinrichtung (18, 18f, 21, 21L, 21m, 140i, 140j, 24k, 24L, 18L oder 18m) zum Halten eines Teilstücks der Materialbahn (10, 10f, 10i, 10j, 10k oder 10L) um den Blumenstrauß (120), wenn die Materialbahn (10, 10f, 10i, 10j, 10k oder 10L) durch Falten um den Blumenstrauß (120) gewickelt wird, wobei die Faltverbindungseinrichtung (18, 18f, 21, 21L, 21m, 140i, 140j, 24k, 24L, 18L oder 18m) ein Bindemittel (21, 21L, 21m, 140i, 140j, 24k oder 24L) umfaßt, um überlappende Teilstücke der Materialbahn (10, 10f, 10i, 10j, 10k oder 10L) haftend zu verbinden, wenn ein gefaltetes Teilstück (142i, 142j, 142k oder 142L) in der Materialbahn (10, 10f, 10i, 10j, 10k oder 10L) gestaltet wird;
und wobei die Faltverbindungseinrichtung (18, 18f, 140i, 140j, 24K, 24L oder 18m) ferner einen Sicherungsstreifen (18, 18f, 18L oder 18m) umfaßt, der sich von der Materialbahn (10, 10f, 10i, 10j, 10k oder 10L) erstreckt, so daß die verbundenen überlappenden Faltungen an einer gefalteten Stellung gehalten werden; und
mit einer Bahnverbindungseinrichtung (24, 24i, 24j oder 24m), die ein Bindemittel (24, 24i, 24j oder 24m) zur Verbindung von Teilstücken einer inneren Oberfläche (16, 16i, 16j, 16k oder 16L) der Materialbahn (10, 10f, 10i, 10j, 10k oder 10L) mit Teilstücken einer äußeren Oberfläche (17, 17i, 17j, 17k, 17L oder 17m) der Materialbahn (10, 10f, 10i, 10j, 10k oder 10L) umfaßt; und
wobei die Materialbahn (10, 10f, 10i, 10j, 10k oder 10L) durch Falten um mindestens ein Teilstück des Stielabschnitts (122) des Blumenstraußes (120) gewickelt werden kann, wobei sich die Faltverbindungseinrichtung (18, 18f, 21, 21L, 21m, 140i, 140j, 24k, 24L, 18L oder 18m) dazu eignet, die Materialbahn (10, 10f, 10i, 10j, 10k oder 10L) an einer um den Stielabschnitt (122) des Blumenstraußes (120) gefalteten Position zu halten.

6. Umhüllung (130, 136, 130i, 136i, 130j, 136j, 130k, 130L, 130m oder 136m) nach Anspruch 5, wobei die flache Materialbahn (10, 10f, 10i, 10j, 10k oder 10L) ferner ein erstes Ende (12, 12i, 12j, 12k oder 12L), ein zweites Ende (13, 13i, 13j, 13k oder 13L), eine erste Seite (14, 14i, 14j, 14k, 14L), eine zweite Seite (15, 15i, 15j, 15k oder 15L), eine innere Oberfläche (16, 16i, 16j, 16k oder 16L) und eine äußere Oberfläche (17, 17i, 17j, 17k, 17L oder 17m) umfaßt, und wobei sich das Bindemittel (140i, 140j, 24k oder 24L) der Faltverbindungseinrichtung (18, 18f, 140i, 140j, 24k, 24L, 18L oder 18m) auf Teilstücken der inneren Oberfläche (16, 16i, 16j, 16k oder 16L), auf Teilstücken der äußeren Oberfläche (17, 17i, 17j, 17k, 17L oder 17m) oder auf Teilstücken sowohl der inneren Oberfläche (16, 16i, 16j, 16k oder 16L) als auch der äußeren Oberfläche (17, 17i, 17j, 17k, 17L oder 17m) der Materialbahn (10, 10f, 10i, 10j, 10k oder 10L) befindet.

7. Umhüllung (130, 136, 130i, 136i, 130j, 136j, 130k, 130L, 130m oder 136m) nach Anspruch 5 oder 6, wobei das Bindemittel (21, 21L, 21m, 140i, 140j, 24k oder 24L) der Faltverbindungseinrichtung (18, 18f, 21, 21L, 21m, 140i, 140j, 24k, 24L, 18L oder 18m) dazu eingesetzt wird, überlappende Faltungen in dem gefalteten Teilstück (142i, 142j, 142k oder 142L) zu gestalten, die durch das Bindemittel (140i, 140j, 24k oder 24L) miteinander verbunden sind.

8. Umhüllung (130, 136, 130i, 136i, 130j, 136j, 130k, 130L, 130m oder 136m) nach einem der Ansprüche 5 bis 7, wobei die Umhüllung ferner einen Aufziehstreifen (18k oder 18L) umfaßt, der das Lösen der Umhüllung (130, 136, 130i, 136i, 130j, 136j, 130k, 130L, 130m oder 136m) von dem Blumenstrauß (120) unterstützt.

9. Umhüllung (148, 148a, 148b, 148c, 148d, 148e, 148f, 148g oder 148h) zur Umhüllung eines Blumenstraußes (120) mit einem Blütenabschnitt (124) und einem Stielabschnitt (122), wobei die Umhüllung (148, 148a, 148b, 148c, 148d, 148e, 148f, 148g oder 148h) folgendes umfaßt:
eine Materialhülle (148, 148a, 148b, 148c, 148d, 148e, 148f, 148g oder 148h) mit einem ersten Ende (152, 152a, 152b, 152c oder 152d), einem zweiten Ende (154, 154a, 154b, 154c oder 154d), einer äußeren Oberfläche (158, 158a, 158b, 158c oder 158d), einer inneren Oberfläche (156, 156a, 156b, 156c oder 156d), einer Öffnung an dem ersten Ende (152, 152a, 152b, 152c oder 152d) und einem inneren Halteraum (193, 193a, 193c, 193d oder 193e), und wobei die Hülle so bemessen ist, daß sie den Blumenstrauß (120) umgibt und einschließt, wenn sie um diesen gewickelt wird; und
eine Faltverbindungseinrichtung (190, 190a, 190b, 206c, 190d, 206d, 190e, 206e, 206f, 190g, 190h oder 206h) zum Halten eines Teilstücks der Materialhülle (148, 148a, 148b, 148c, 148d, 148e, 148f, 148g oder 148h) um den Blumenstrauß (120), wenn die Materialhülle (148, 148a, 148b, 148c, 148d, 148e, 148f, 148g oder 148h) um den Blumenstrauß (120) gefaltet wird, wobei die Faltverbindungseinrichtung (190, 190a, 190b, 206c, 190d, 206d, 190e, 206e, 206f, 190g, 190h oder 206h) ein Bindemittel (190, 190a, 190b, 190d, 190e, 190g oder 190h) umfaßt, das sich einem Teilstück mindestens einer der Oberflächen der inneren Oberfläche (156, 156a, 156c oder 156d) oder der äußeren Oberfläche (158, 158a, 158b, 158c oder 158d) der Materialhülle (148, 148a, 148b, 148c, 148d, 148e, 148f, 148g oder 148h) befindet, wobei das Bindemittel (190, 190a, 190b, 190d, 190e, 190g oder 190h) überlappende Teilstücke (194, 198 oder 204) der Materialhülle (148, 148a, 148b, 148c, 148d, 148e, 148f, 148g oder 148h) haftend miteinander verbinden kann, wenn in dem Material ein gefaltetes Teilstück (202, 202a, 202b, 214d oder 214e) gestaltet wird; und
wobei die Materialhülle (148, 148a, 148b, 148c, 148d, 148e, 148f, 148g oder 148h) durch Falten um mindestens ein Teilstück des Blumenstraußes gewickelt werden kann, wobei die Faltverbindungseinrichtung (190, 190a, 190b, 206c, 190d, 206d, 190e, 206e, 206f, 190g, 190h oder 206h) die Materialhülle (148, 148a, 148b, 148c, 148d, 148e, 148f, 148g oder 148h) an einer um den Stielabschnitt (122) des Blumenstraußes 8120) gefalteten Position halten kann.

10. Umhüllung (148, 148a, 148b, 148c, 148d, 148e, 148f, 148g oder 148h) nach Anspruch 9, wobei die Materialhülle (148, 148a, 148b, 148c, 148d, 148e, 148f, 148g oder 148h) ferner eine Verschlußeinrichtung (240f, 244f, 242f oder 248f) aufweist, zum Verschließen des ersten Endes (152, 152a, 152, 152c oder 152d) der Materialhülle (148, 148a, 148b, 148c, 148d, 148e, 148f, 148g oder 148h), des zweiten Endes (154, 154a, 154b, 154c oder 154d) der Materialhülle (148, 148a, 148b, 148c, 148d, 148e, 148f, 148g oder 148h) oder sowohl des ersten Endes (152, 152a, 152b, 152c oder 152d) als auch des zweiten Endes (154, 154a, 154b, 154c oder 154d) der Materialhülle (148, 148a, 148b, 148c, 148d, 148e, 148f, 148g oder 148h) nachdem die Materialhülle (148, 148a, 148b, 148c, 148d, 148e, 148f, 148g oder 148h) um den Blumenstrauß (120) gewickelt worden ist.

11. Umhüllung (130, 136, 130i, 136i, 130j, 136j, 130k, 130L, 130m, 136m, 148, 148a, 148b, 148c, 148d, 148e, 148f, 148g oder 148h) nach einem der Ansprüche 5 bis 10, wobei die Faltverbindungseinrichtung (18, 18f, 21, 21L, 21m, 140i, 140j, 24k, 24L, 18L, 18m, 190, 190a, 190b, 206c, 190d, 206d, 190e, 206e, 206f, 190g, 190h oder 206h) ferner einen Sicherungsstreifen (18, 18f, 18L, 18m, 206c, 206d, 206e, 206f oder 206h) umfaßt, der sich von der Materialbahn (10, 10f, 10i, 10j, 10k oder 10L) oder der Materialhülle (148, 148a, 148b, 148c, 148d, 148e, 148f, 148g oder 148h) zum Wickeln um das gefaltete Teilstück (142i, 142j, 142k, 142L, 202, 202a, 202b, 214d oder 214e) der Umhüllung (130, 136, 130i, 136i, 130j, 136j, 130k, 130L, 130m, 136m, 148, 148a, 148b, 148c, 148d, 148e, 148f, 148g oder 148h) erstreckt, um das gefaltete Teilstück (142i, 142j, 142k, 142L, 202, 202a, 202b, 214d oder 214e) der Umhüllung (130, 136, 130i, 136i, 130j, 136j, 130k, 130L, 130m, 136m, 148, 148a, 148b, 148c, 148d, 148e, 148f, 148g oder 148h) in einem gefalteten Zustand um den Blumenstrauß (120) zu halten.

12. Umhüllung (130, 136, 130i, 136i, 130j, 136j, 130k, 130L, 130m, 136m, 148, 148a, 148b, 148c, 148d, 148e, 148f, 148g oder 148h) nach einem der Ansprüche 1 bis 4 und 11, wobei der Sicherungsstreifen (18, 18f, 18L, 18m, 206c, 206d, 206e, 206f oder 206h), der sich von der Materialbahn (10, 10f, 10i, 10j, 10k oder 10L) oder der Materialhülle (148, 148a, 148b, 148c, 148d, 148e, 148f, 148g oder 148h) erstreckt, ein Ende aufweist, das mit der Materialbahn (10, 10f, 10i, 10j, 10k oder 10L) oder der Materialhülle (148, 148a, 148b, 148c, 148d, 148e, 148f, 148g oder 148h) verbunden ist, sowie ein Ende, das um ein wesentliches Teilstück eines Umfangs der Materialbahn (10, 10f, 10i, 10j, 10k oder 10L) oder der Materialhülle (148, 148a, 148b, 148c, 148d, 148e, 148f, 148g oder 148h) erweitert und damit verbunden werden kann.

13. Umhüllung (130, 136, 130i, 136i, 130j, 136j, 130k, 130L, 130m, 136m, 148, 148a, 148b, 148c, 148d, 148e, 148f, 148g oder 148h) nach einem der Ansprüche 1 bis 4 und 11 bis 12, wobei der Sicherungsstreifen (18, 18f, 18L, 18m, 206c, 206d, 206e, 206f oder 206h), der sich von der Materialbahn (10, 10f, 10i, 10j, 10k oder 10L) oder der Materialhülle (148, 148a, 148b, 148c, 148d, 148e, 148f, 148g oder 148h) erstreckt, ferner ein Bindemittel (21, 21L, 21m, 212c, 212d, 212f oder 212h) umfaßt, das sich auf einem Teilstück dessen befindet, um den Sicherungsstreifen mit einem Teilstück der Materialbahn (10, 10f, 10i, 10j, 10k oder 10L) oder der Materialhülle (148, 148a, 148b, 148c, 148d, 148e, 148f, 148g oder 148h) zu verbinden, wenn der Sicherungsstreifen (18, 18f, 18L, 18m, 206c, 206d, 206e, 206f oder 206h) um das gefaltete Teilstück (142i, 142j, 142k, 142L, 202, 202a, 202b, 214d oder 214e) der Materialbahn (10, 10f, 10i, 10j, 10k oder 10L) oder der Materialhülle (148, 148a, 148b, 148c, 148d, 148e, 148f, 148g oder 148h) gewickelt wird.

14. Umhüllung (130, 136, 130i, 136i, 130j, 136j, 130k, 130L, 130m, 136m, 148, 148a, 148b, 148c, 148d, 148e, 148f, 148g oder 148h) nach einem der vorstehenden Ansprüche, wobei die Umhüllung (130, 136, 130i, 136i, 130j, 136j, 130k, 130L, 130m, 136m, 148, 148a, 148b, 148c, 148d, 148e, 148f, 148g oder 148h) ferner ein Etikettbindemittel (254m) umfaßt, das sich auf einer Oberfläche der Umhüllung (130, 136, 130i, 136i, 130j, 136j, 130k, 130L, 130m, 136m, 148, 148a, 148b, 148c, 148d, 148e, 148f, 148g oder 148h) befindet, um ein Etikett an einem Teilstück der Umhüllung (130, 136, 130i, 136i, 130j, 136j, 130k, 130L, 130m, 136m, 148, 148a, 148b, 148c, 148d, 148e, 148f, 148g oder 148h) anzubringen.

15. Umhüllung (130, 136, 130i, 136i, 130j, 136j, 130k, 130L, 130m, 136m, 148, 148a, 148b, 148c, 148d, 148e, 148f, 148g oder 148h) nach einem der vorstehenden Ansprüche, wobei die Materialbahn (10, 10f, 10i, 10j, 10k oder 10L) oder die Materialhülle (148, 148a, 148b, 148c, 148d, 148e, 148f, 148g oder 148h) aus einem Material hergestellt wird, das aus der Gruppe ausgewählt wird, die Papier (unbehandelt oder mit beliebiger Behandlung), Cellophan, Folie, Polymerfolie, Stoff (gewebt, ungewebt, synthetisch oder natürlich), Sackleinen, Textilstoff oder eine beliebige Kombination dieser umfaßt.

16. Umhüllung (130, 136, 130i, 136i, 130j, 136j, 130k, 130L, 130m, 136m, 148, 148a, 148b, 148c, 148d, 148e, 148f, 148g oder 148h) nach einem der vorstehenden Ansprüche, wobei das Material (10, 10f, 10i, 10j, 10k, 10L, 148, 148a, 148b, 148c, 148d, 148e, 148f, 148g oder 148h) ferner dadurch definiert ist, daß es eine Dicke im Bereich von 2,54 µm (0,1 Milliinch) bis etwa 762 µm (30 Milliinch) aufweist.

17. Umhüllung (130, 136, 130i, 136i, 130j, 136j, 130k, 130L, 130m, 136m, 148, 148a, 148b, 148c, 148d, 148e, 148f, 148g oder 148h) nach einem der vorstehenden Ansprüche 1 bis 3, 6 bis 8 oder 10 bis 12, wobei das Material (10, 10f, 10i, 10j, 10k, 10L, 148, 148a, 148b, 148c, 148d, 148e, 148f, 148g oder 148h) ferner ein oder zwei Schichten umfaßt.

18. Umhüllung (130, 136, 130i, 136i, 130j, 136j, 130k, 130L, 130m, 136m, 148, 148a, 148b, 148c, 148d, 148e, 148f, 148g oder 148h) nach einem der vorstehenden Ansprüche, wobei das Bindemittel (140i, 140j, 24k, 24L, 190, 190a, 190b, 190d, 190e, 190g, 190h, 21, 21L, 21m, 212c, 212d, 212f oder 212h) der Faltverbindungseinrichtung (18, 18f, 21L, 21m, 140i, 140j, 24k, 24L, 18L, 18m, 190, 190a, 190b, 206c, 190d, 206d, 190e, 206e, 206f, 190g, 190h oder 206h) ferner ein Bindemittel (140i, 140j, 24k, 24L, 190, 190a, 190b, 190d, 190e, 190g, 190h, 21, 21L, 21m, 212c, 212f oder 212h) umfaßt, das aus der Gruppe ausgewählt wird, die einen Kontaktklebstoff oder-bindemittel, einen wärmeempfindlichen Klebstoff oder ein wärmeempfindliches Bindemittel, einen schallsiegelfähigen Klebstoff oder ein schallsiegelfähiges Bindemittel, einen vibrationssiegelfähigen Klebstoff oder ein vibrationssiegelfähiges Bindemittel, einen chemisch siegelfähigen Klebstoff oder ein chemisch siegelfähiges Bindemittel oder einen kaltsiegelfähigen Lack umfaßt.

19. Verfahren zur Umhüllung eines Blumenstraußes (120), wobei das Verfahren die folgenden Schritte umfaßt:
Bereitstellen eines Blumenstraußes (120) mit einem Blütenabschnitt (124) und einem Stielabschnitt (122);
Bereitstellen einer Umhüllung (130, 136, 130i, 136i, 130j, 136j, 130k, 130L, 130m oder 136m), die folgendes umfaßt:
eine Materialbahn (10, 10f, 10i, 10j, 10k oder 10L) mit einem ersten Ende (12, 12i, 12j, 12k oder 12L), einem zweiten Ende (13, 13i, 13j, 13k oder 13L), einer ersten Seite (14, 14i, 14j, 14k, 14L), einer zweiten Seite (15, 15i, 15j, 15k oder 15L), einer inneren Oberfläche (16, 16i, 16j, 16k oder 16L) und einer äußeren Oberfläche (17, 17i, 17j, 17k, 17L oder 17m), und wobei die Materialbahn (10, 10f, 10i, 10j, 10k oder 10L) so bemessen ist, daß sie den Blumenstrauß (120) im wesentlichen umgibt und einschließt, wenn sie darum gewickelt wird; und
eine Faltverbindungseinrichtung (18, 18f, 21, 21L, 21m, 140i, 140j, 24k, 24L, 18L oder 18m), die ein Bindemittel (21, 21L, 21m, 140i, 140j, 24k oder 24L) umfaßt, das sich auf einer Oberfläche (16, 16i, 16j, 16k, 16L, 17, 17i, 17j, 17k, 17L oder 17m) der Materialbahn (10, 10f, 10i, 10j, 10k oder 10L) befindet oder einer Verlängerung (18, 18f, 18L oder 18m) dieser, um eine Mehrzahl überlappender Teilstücke der Materialbahn (10, 10f, 10i, 10j, 10k oder 10L) haftend zu verbinden, wenn ein gefaltetes Teilstück (142i, 142j, 142k oder 142L) mit überlappenden Teilstücken in der Materialbahn (10, 10f, 10i, 10j, 10k oder 10L) gestaltet wird;
Plazieren des Blumenstraußes (120) auf einem Teilstück der Materialbahn (10, 10f, 10i, 10j, 10k oder 10L);
Wickeln der Materialbahn (10, 10f, 10i, 10j, 10k oder 10L) um den Blumenstrauß (120), um einen umhüllten bzw. umwickelten Blumenstrauß (120) zu gestalten; und
Gestalten eines gefalteten Teilstücks (142i, 142j, 142k oder 142L) mit einer Mehrzahl miteinander verbundener überlappender Faltungen in der Materialbahn (10, 10f, 10i, 10j, 10k oder 10L) des umhüllten Blumenstraußes (120), wobei die Faltverbindungseinrichtung (18, 18f, 21, 21L, 21m, 140i, 140j, 24k, 24L, 18L oder 18m) das gefaltete Teilstück (142i, 142j, 142k oder 142L) um ein Teilstück des Stielabschnitts (122) hält, so daß die Materialbahn (10, 10f, 10i, 10j, 10k oder 10L) um den Blumenstrauß (120) gehalten wird.

20. Verfahren nach Anspruch 19, wobei der Schritt des Bereitstellens der Umhüllung (130, 136, 130i, 136i, 130j, 136j, 130k, 130L, 130m oder 136m) umfaßt, daß sich das Bindemittel (21, 21L, 21m, 140i, 140j, 24k oder 24L) der Faltverbindungseinrichtung (18, 18f, 21, 21L, 21m, 140i, 140j, 24k, 24L, 18L oder 18m) auf Teilstücken der inneren Oberfläche (16, 16i, 16j, 16k oder 16L), auf Teilstücken der äußeren Oberfläche (17, 17i, 17j, 17k, 17L oder 17m) oder auf Teilstücken sowohl der inneren Oberfläche (16, 16i, 16j, 16k oder 16L) als auch der äußeren Oberfläche (17, 17i, 17j, 17k, 17L oder 17m) der Materialbahn (10, 10f, 10i, 10j, 10k oder 10L) befindet.

21. Verfahren nach Anspruch 19 oder 20, wobei die Umhüllung (130, 136, 130i, 136i, 1303, 136j, 130k, 130L, 130m oder 136m) in dem Schritt der Bereitstellung der Umhüllung (130, 136, 130i, 136i, 130j, 136j, 130k, 130L, 130m oder 136m) ferner eine Bahnverbindungseinrichtung (24, 24i, 24j oder 24m) umfaßt, die sich auf der Materialbahn (10, 10f, 10i, 10j, 10k oder 10L) befindet, wobei die Bahnverbindungseinrichtung (24, 24i, 24j oder 24m) ein Bindemittel (24, 24i, 24j oder 24m) zur Verbindung von Teilstücken der inneren Oberfläche (16, 16i, 16j, 16k oder 16L)) der Materialbahn (10, 10f, 10i, 10j, 10k oder 10L) mit Teilstücken der äußeren Oberfläche (17, 17i, 17j, 17k, 17L oder 17m) der Materialbahn (10, 10f, 10i, 10j, 10k oder 10L) umfaßt, wenn die Materialbahn (10, 10f, 10i, 10j, 10k oder 10L) um den Blumenstrauß (120) gewickelt wird.

22. Verfahren nach Anspruch 21, wobei der Schritt der Bereitstellung einer Umhüllung (130, 136, 130i, 136i, 130j, 136j, 130k, 130L, 130m oder 136m) ferner die Bereitstellung eines Blocks von Materialbahnen (10, 10f, 10i, 10j, 10k oder 10L) umfaßt, wobei der Block eine obere Materialbahn (10, 10f, 10i, 10j, 10k oder 10L) aufweist, und wobei die Bahnverbindungseinrichtung (24, 24i, 24j oder 24m) jeder Materialbahn (10, 10f, 10i, 10j, 10k oder 10L) eine haftende Verbindung mit einem Teilstück einer angrenzenden Materialbahn (10, 10f, 10i, 10j, 10k oder 10L) herstellt, so daß ein Zusammenwirken zur Verbindung der Materialbahnen (10, 10f, 10i, 10j, 10k oder 10L) in dem Block hergestellt wird, und wobei die Bahnverbindungseinrichtung (24, 24i, 24j oder 24m) auf jeder Materialbahn (10, 10f, 10i, 10j, 10k oder 10L) jede Materialbahn (10, 10f, 10i, 10j, 10k oder 10L) lösbar mit einer anderen Materialbahn (10, 10f, 10i, 10j, 10k oder 10L) verbindet, wobei eine der Materialbahnen (10, 10f, 10i, 10j, 10k oder 10L) von einer anderen Materialbahn (10, 10f, 10i, 10j, 10k oder 10L) durch Auseinanderziehen der Materialbahnen (10, 10f, 10i, 10j, 10k oder 10L) lösbar getrennt werden kann.

23. Verfahren nach Anspruch 21 oder 22, wobei der Schritt der Schritt des Wickelns der Materialbahn (10, 10f, 10i, 10j, 10k oder 10L) um den Blumenstrauß (120) ferner die Plazierung eines Teilstücks der oberen Materialbahn (10, 10f, 10i, 10j, 10k oder 10L) über mindestens einem Teilstück des Blumenstraußes (120) umfaßt, und wobei die obere Materialbahn (10, 10f, 10i, 10j, 10k oder 10L) und der Blumenstrauß (120) gerollt werden und die obere Materialbahn (10, 10f, 10i, 10j, 10k oder 10L) um den Blumenstrauß (120) gewickelt wird, wobei die obere Materialbahn (10, 10f, 10i, 10j, 10k oder 10L) von dem Block der Materialbahnen (10, 10f, 10i, 10j, 10k oder 10L) entfernt wird, wenn die obere Materialbahn (10, 10f, 10i, 10j, 10k oder 10L) um den Blumenstrauß (120) gewickelt wird.

24. Verfahren nach Anspruch 23, wobei der Schritt des Wickelns der oberen Materialbahn (10, 10f, 10i, 10j, 10k oder 10L) um den Blumenstrauß (120) und des Lösens der oberen Materialbahn (10, 10f, 10i, 10j, 10k oder 10L) von dem Block die nächste Materialbahn (10, 10f, 10i, 10j, 10k oder 10L) hinterläßt, die eine neue obere Materialbahn (10, 10f, 10i, 10j, 10k oder 10L) bildet, und
wobei die Schritte der Plazierung des Blumenstraußes (120) auf der oberen Materialbahn (10, 10f, 10i, 10j, 10k oder 10L) und des Wickelns der oberen Materialbahn (10, 10f, 10i, 10j, 10k oder 10L) um den Blumenstrauß (120) mit anderen Blumensträußen (120) wiederholt werden, bis im wesentlichen alle Materialbahnen (10, 10f, 10i, 10j, 10k oder 10L) des Blocks um die Blumensträuße (120) gewickelt worden sind.

25. Verfahren nach einem der Ansprüche 19 bis 21, wobei die Umhüllung (130, 136, 130i, 136i, 130j, 136j, 130k, 130L, 130m oder 136m) in dem Schritt der Bereitstellung der Umhüllung (130, 136, 130i, 136i, 130j, 136j, 130k, 130L, 130m oder 136m) ferner eine Bahnverbindungseinrichtung (24, 24i, 24j oder 24m) umfaßt, die sich auf der Materialbahn (10, 10f, 10i, 10j, 10k oder 10L) befindet, wobei die Bahnverbindungseinrichtung (24, 24i, 24j oder 24m) ein Bindemittel (24, 24i, 24j oder 24m) zur Verbindung von Teilstücken der inneren Oberfläche (16, 16i, 16j, 16k oder 16L) der Materialbahn (10, 10f, 10i, 10j, 10k oder 10L) mit Teilstücken der äußeren Oberfläche (17, 17i, 17j, 17k, 17L oder 17m) der Materialbahn (10, 10f, 10i, 10j, 10k oder 10L) umfaßt, wenn die Materialbahn (10, 10f, 10i, 10j, 10k oder 10L) um den Blumenstrauß (120) gewickelt wird.

26. Verfahren nach einem der Ansprüche 19 bis 25, wobei die Umhüllung (130, 136, 130i, 136i, 130j, 136j, 130k, 130L, 130m oder 136m) in dem Schritt der Bereitstellung der Umhüllung (130, 136, 130i, 136i, 130j, 136j, 130k, 130L, 130m oder 136m) ferner einen Aufziehstreifen (18k oder 18L) umfaßt, der sich von der Materialbahn (10, 10f, 10i, 10j, 10k oder 10L) erstreckt, um das Ablösen der Umhüllung (130, 136, 130i, 136i, 130j, 136j, 130k, 130L, 130m oder 136m) von dem Blumenstrauß (120) zu unterstützen.

27. Verfahren zur Umhüllung eines Blumenstraußes (120), wobei das Verfahren die folgenden Schritte umfaßt:
Bereitstellen eines Blumenstraußes (120) mit einem Blütenabschnitt (124) und einem Stielabschnitt (122);
Bereitstellen einer Umhüllung (148, 148a, 148b, 148c, 148d, 148e, 148f, 148g oder 148h), die folgendes umfaßt:
eine Materialhülle (148, 148a, 148b, 148c, 148d, 148e, 148f, 148g oder 148h) mit einem ersten Ende (152, 152a, 152b, 152c oder 152d), einem zweiten Ende (154, 154a, 154b, 154c oder 154d), einer äußeren Oberfläche (158, 158a, 158b, 158c oder 158d), einer inneren Oberfläche (156, 156a, 156b, 156c oder 156d), einer Öffnung an dem ersten Ende (152, 152a, 152b, 152c oder 152d), einem Umfang und einem inneren Halteraum (193, 193a, 193c, 193d oder 193e), der durch die innere Oberfläche (156, 156a, 156c oder 156d) begrenzt und so bemessen ist, daß er den Blumenstrauß (120) im wesentlichen umgibt und einschließt, wenn die Hülle darum gewickelt wird; und
eine Faltverbindungseinrichtung (190, 190a, 190b, 206c, 190d, 206d, 190e, 206e, 206f, 190g, 190h oder 206h), die einen Sicherungsstreifen (206c, 206d, 206e, 206f oder 206h) umfaßt, der sich von der Materialhülle (148, 148a, 148b, 148c, 148d, 148e, 148f, 148g oder 148h) zur haftenden Verbindung mit einem Teilstück der Materialhülle (148, 148a, 148b, 148c, 148d, 148e, 148f, 148g oder 148h) erstreckt, wenn ein gefaltetes Teilstück (202, 202a, 202a, 214d oder 214e) in der Materialhülle (148, 148a, 148b, 148c, 148d, 148e, 148f, 148g oder 148h) gestaltet wird, und wobei die Materialhülle (148, 148a, 148b, 148c, 148d, 148e, 148f, 148g oder 148h) keine vorgeformten Falten oder Kniffe aufweist, welche die Position des gefalteten Teilstücks (202, 202a, 202b, 214d oder 214e) bestimmen;
Plazieren mindestens eines Teilstücks des Stielabschnitts (122) des Blumenstraußes (120) in dem Halteraum (193, 193a, 193c, 193d oder 193e) der Materialhülle (148, 148a, 148b, 148c, 148d, 148e, 148f, 148g oder 148h); und
Falten eines Teilstücks der Materialhülle (148, 148a, 148b, 148c, 148d, 148e, 148f, 148g oder 148h) um den Stielabschnitt (122) des Blumenstraußes (120), so daß ein gefaltetes Teilstück (202, 202a, 202b, 214d oder 214e) gebildet wird, das überlappende Faltungen (194, 198, 204) umfaßt, wobei die Faltverbindungseinrichtung (190, 190a, 190b, 206c, 190d, 206d, 190e, 206e, 206f, 190g, 190h oder 206h) das gefaltete Teilstück (202, 202a, 202b, 214d oder 214e) hält.

28. Verfahren nach Anspruch 27, wobei die Faltverbindungseinrichtung (190, 190a, 190b, 206c, 190d, 206d, 190e, 206e, 206f, 190g, 190h oder 206h) in dem Schritt der Bereitstellung der Umhüllung (130, 136, 130i, 136i, 130j, 136j, 130k, 130L, 130m oder 136m) ferner ein Bindemittel (190, 190a, 190b, 190d, 190e, 190g oder 190h) umfaßt, das sich auf einem Teilstück mindestens einer Oberfläche der inneren Oberfläche (156, 156a, 156c oder 156d) oder der äußeren Oberfläche (158, 158a, 158b, 158c oder 158d) der Materialhülle (148, 148a, 148b, 148c, 148d, 148e, 148f, 148g oder 148h) befindet.

29. Verfahren nach Anspruch 27 oder 28, wobei mindestens einige der überlappenden Faltungen (194, 198, 204) in dem Schritt der Gestaltung des gefalteten Teilstücks (202, 202a, 202b, 214d oder 214e) in dem gefalteten Teilstück (202, 202a, 202b, 214d oder 214e) gestaltet werden, und wobei mindestens einige der überlappenden Faltungen (194, 198, 204) durch das Bindemittel (190, 190a, 190b, 190d, 190e, 190g oder 190h) der Faltverbindungseinrichtung (190, 190a, 190b, 206c, 190d, 206d, 190e, 206e, 206f, 190g, 190h oder 206h) miteinander verbunden werden.

30. Verfahren nach einem der Ansprüche 27 bis 29, wobei die Materialhülle (148, 148a, 148b, 148c, 148d, 148e, 148f, 148g oder 148h) in dem Schritt der Bereitstellung der Umhüllung (148, 148a, 148b, 148c, 148d, 148e, 148f, 148g oder 148h) ferner eine Verschlußeinrichtung (240f, 244f, 242f oder 248f) zum Verschließen des ersten Endes (152, 152a, 152b, 152c oder 152d) der Materialhülle (148, 148a, 148b, 148c, 148d, 148e, 148f, 148g oder 148h), des zweiten Endes (154, 154a, 154b, 154c oder 154d) der Materialhülle (148, 148a, 148b, 148c, 148d, 148e, 148f, 148g oder 148h) oder sowohl des ersten Endes (152, 152a, 152b, 152c oder 152d) als auch des zweiten Endes (154, 154a, 154b, 154c oder 154d) der Materialhülle (148, 148a, 148b, 148c, 148d, 148e, 148f, 148g oder 148h) umfaßt.

31. Verfahren zur Umhüllung eines Blumenstraußes (120), wobei das Verfahren die folgenden Schritte umfaßt:
Bereitstellen eines Blumenstraußes (120) mit einem Blütenabschnitt (124) und einem Stielabschnitt (122);
Bereitstellen einer Umhüllung (148, 148a, 148b, 148c, 148d, 148e, 148f, 148g oder 148h), die folgendes umfaßt:
eine Materialhülle (148, 148a, 148b, 148c, 148d, 148e, 148f, 148g oder 148h) mit einem ersten Ende (152, 152a, 152b, 152c oder 152d), einem zweiten Ende (154, 154a, 154b, 154c oder 154d), einer äußeren Oberfläche (158, 158a, 158b, 158c oder 158d), einer inneren Oberfläche (156, 156a, 156c oder 156d), einer Öffnung an dem ersten Ende (152, 152a, 152b, 152c oder 152d) und einem inneren Halteraum (193, 193a, 193c, 193d oder 193e), der durch die innere Oberfläche (156, 156a, 156c oder 156d) begrenzt und so bemessen ist, daß er den Blumenstrauß (120) im wesentlichen umgibt und einschließt, wenn die Hülle um diesen gewickelt wird; und
eine Faltverbindungseinrichtung (190, 190a, 190b, 206c, 190d, 206d, 190e, 206e, 206f, 190g, 190h oder 206h), die ein Bindemittel (190, 190a, 190b, 190d, 190e, 190g oder 190h) umfaßt, das sich auf einem Teilstück mindestens einer Oberfläche der inneren Oberfläche (156, 156a, 156c oder 156d) oder der äußeren Oberfläche (158, 158a, 158b, 158c oder 158d) der Materialhülle (148, 148a, 148b, 148c, 148d, 148e, 148f, 148g oder 148h) befindet, um überlappende Teilstücke (194, 198 oder 204) der Materialhülle (148, 148a, 148b, 148c, 148d, 148e, 148f, 148g oder 148h) haftend zu verbinden, wenn ein gefaltetes Teilstück (202, 202a, 202b, 214d oder 214e) in der Materialhülle (148, 148a, 148b, 148c, 148d, 148e, 148f, 148g oder 148h) gestaltet wird;
Plazieren mindestens eines Teilstücks des Stielabschnitts (122) des Blumenstraußes (120) in dem Halteraum (193, 193a, 193c, 193d oder 193e) der Materialhülle (148, 148a, 148b, 148c, 148d, 148e, 148f, 148g oder 148h); und
Falten von Teilstücken der Materialhülle (148, 148a, 148b, 148c, 148d, 148e, 148f, 148g oder 148h) um den Stielabschnitt (122) des Blumenstraußes (120), so daß in der Materialhülle (148, 148a, 148b, 148c, 148d, 148e, 148f, 148g oder 148h) ein gefaltetes Teilstück (202, 202a, 202b, 214d oder 214e) gestaltet wird, wobei das Bindemittel (190, 190a, 190b, 190d, 190e, 190g oder 190h) der Faltverbindungseinrichtung (190, 190a, 190b, 206c, 190d, 206d, 190e, 206e, 206f, 190g, 190h oder 206h) die überlappenden Teilstücke (194, 198 oder 204) des gefalteten Teilstücks (202, 202a, 202b, 214d oder 214e) an der Verwendungsposition hält, wodurch die Materialhülle (148, 148a, 148b, 148c, 148d, 148e, 148f, 148g oder 148h) um den Blumenstrauß (120) gehalten wird.

32. Verfahren nach Anspruch 31, wobei die wobei die Materialhülle (148, 148a, 148b, 148c, 148d, 148e, 148f, 148g oder 148h) in dem Schritt der Bereitstellung der Umhüllung (148, 148a, 148b, 148c, 148d, 148e, 148f, 148g oder 148h) ferner eine Verschlußeinrichtung (240f, 244f, 242f oder 248f) zum Verschließen des ersten Endes (152, 152a, 152b, 152c oder 152d) der Materialhülle (148, 148a, 148b, 148c, 148d, 148e, 148f, 148g oder 148h), des zweiten Endes (154, 154a, 154b, 154c oder 154d) der Materialhülle (148, 148a, 148b, 148c, 148d, 148e, 148f, 148g oder 148h) oder sowohl des ersten Endes (152, 152a, 152b, 152c oder 152d) als auch des zweiten Endes (154, 154a, 154b, 154c oder 154d) der Materialhülle (148, 148a, 148b, 148c, 148d, 148e, 148f, 148g oder 148h) umfaßt.

33. Verfahren nach einem der Ansprüche 19 bis 26 und 31 bis 32, wobei die Faltverbindungseinrichtung (18, 18f, 21, 21L, 21m, 140i, 140j, 24k, 24L, 18L, 18m, 190, 190a, 190b, 206c, 190d, 206d, 190e, 206e, 206f, 190g, 190h oder 206h) in dem Schritt der Bereitstellung der Umhüllung (130, 136, 130i, 136i, 130j, 136j, 130k, 130L, 130m, 148, 148a, 148b, 148c, 148d, 148e, 148f, 148g oder 148h) ferner einen Sicherungsstreifen (18, 18f, 18L, 18m, 206c, 206d, 206e, 206f oder 206h) umfaßt, der sich von der Materialbahn (10, 10f, 10i, 10j, 10k oder 10L) oder der Materialhülle (148, 148a, 148b, 148c, 148d, 148e, 148f, 148g oder 148h) so erstreckt, daß er um das gefaltete Teilstück (142i, 142j, 142k, 142L, 202, 202a, 202b, 214d oder 214e) der Umhüllung (130, 136, 130i, 136i, 130j, 136j, 130k, 130L, 130m, 148, 148a, 148b, 148c, 148d, 148e, 148f, 148g oder 148h) gewickelt werden kann, um das gefaltete Teilstück (142i, 142j, 142k, 142L, 202, 202a, 202b, 214d oder 214e) der Umhüllung (130, 136, 130i, 136i, 130j, 136j, 130k, 130L, 130m, 148, 148a, 148b, 148c, 148d, 148e, 148f, 148g oder 148h) in einem gefalteten Zustand um den Blumenstrauß (120) zu halten.

34. Verfahren nach einem der Ansprüche 27 bis 30 und 33, wobei der Sicherungsstreifen (18, 18f, 18L, 18m, 206c, 206d, 206e, 206f oder 206h), der sich von der Materialbahn (10, 10f, 10i, 10j, 10k oder 10L) oder der Materialhülle (148, 148a, 148b, 148c, 148d, 148e, 148f, 148g oder 148h) erstreckt, in dem Schritt der Bereitstellung der Umhüllung (130, 136, 130i, 136i, 130j, 136j, 130k, 130L, 130m, 148, 148a, 148b, 148c, 148d, 148e, 148f, 148g oder 148h) ferner ein Bindemittel (21, 21L, 21m, 212c, 212d, 212f oder 212h) umfaßt, das sich auf einem Teilstück des Streifens befindet, um den Sicherungsstreifen (18, 18f, 18L, 18m, 206c, 206d, 206e, 206f oder 206h) mit einem Teilstück der Materialbahn (10, 10f, 10i, 10j, 10k oder 10L) zu verbinden, wenn der Sicherungsstreifen (18, 18f, 18L, 18m, 206c, 206d, 206e, 206f oder 206h) um das gefaltete Teilstück (142i, 142j, 142k, 142L, 202, 202a, 202b, 214d oder 214e) der Materialbahn (10, 10f, 10i, 10j, 10k oder 10L) oder der Materialhülle (148, 148a, 148b, 148c, 148d, 148e, 148f, 148g oder 148h) gewickelt wird.

35. Verfahren nach einem der Ansprüche 27 bis 30 und 33 bis 34, wobei der Sicherungsstreifen (18, 18f, 18L, 18m, 206c, 206d, 206e, 206f oder 206h) in dem Schritt der Bereitstellung der Umhüllung (130, 136, 130i, 136i, 130j, 136j, 130k, 130L, 130m, 148, 148a, 148b, 148c, 148d, 148e, 148f, 148g oder 148h) ein Ende aufweist, das mit der Materialhülle (148, 148a, 148b, 148c, 148d, 148e, 148f, 148g oder 148h) oder mit der Materialbahn (10, 10f, 10i, 10j, 10k oder 10L) verbunden ist, sowie ein Ende, das sich um ein wesentliches Teilstück des Umfangs der Materialbahn (10, 10f, 10i, 10j, 10k oder 10L) oder des Umfangs der Materialhülle (148, 148a, 148b, 148c, 148d, 148e, 148f, 148g oder 148h) erstrecken und damit verbunden werden kann.

36. Verfahren nach einem der Schritte 19 bis 35, wobei die Umhüllung (130, 136, 130i, 136i, 130j, 136j, 130k, 130L, 130m, 148, 148a, 148b, 148c, 148d, 148e, 148f, 148g oder 148h) in dem Schritt der Bereitstellung der Umhüllung (130, 136, 130i, 136i, 130j, 136j, 130k, 130L, 130m, 148, 148a, 148b, 148c, 148d, 148e, 148f, 148g oder 148h) ferner ein Etikettbindemittel (254m) umfaßt, das sich auf einer Oberfläche der Umhüllung (130, 136, 130i, 136i, 130j, 136j, 130k, 130L, 130m, 148, 148a, 148b, 148c, 148d, 148e, 148f, 148g oder 148h) befindet, um ein Etikett an einem Teilstück der Umhüllung (130, 136, 130i, 136i, 130j, 136j, 130k, 130L, 130m, 148, 148a, 148b, 148c, 148d, 148e, 148f, 148g oder 148h) anzubringen.

37. Verfahren nach einem der Ansprüche 19 bis 36, wobei die Materialbahn (10, 10f, 10i, 10j, 10k oder 10L) oder die Materialhülle (148, 148a, 148b, 148c, 148d, 148e, 148f, 148g oder 148h) in dem Schritt der Bereitstellung der Umhüllung (130, 136, 130i, 136i, 130j, 136j, 130k, 130L, 130m, 148, 148a, 148b, 148c, 148d, 148e, 148f, 148g oder 148h) aus einem Material hergestellt wird, das aus der Gruppe ausgewählt wird, die Papier (unbehandelt oder mit beliebiger Behandlung), Cellophan, Folie, Polymerfolie, Stoff (gewebt, ungewebt, synthetisch oder natürlich), Sackleinen, Textilstoff oder eine beliebige Kombination dieser umfaßt.

38. Verfahren nach einem der Ansprüche 19 bis 37, wobei das Material (10, 10f, 10i, 10j, 10k, 10L, 148, 148a, 148b, 148c, 148d, 148e, 148f, 148g oder 148h) in dem Schritt der Bereitstellung der Umhüllung (130, 136, 130i, 136i, 130j, 136j, 130k, 130L, 130m, 148, 148a, 148b, 148c, 148d, 148e, 148f, 148g oder 148h) ferner dadurch definiert ist, daß es eine Dicke im Bereich von etwa 2,54 µm (0,1 Milliinch) bis etwa 762 µm (30 Milliinch) aufweist.

39. Verfahren nach einem der Ansprüche 19 bis 38, wobei das Material (10, 10f, 10i, 10j, 10k, 10L, 148, 148a, 148b, 148c, 148d, 148e, 148f, 148g oder 148h) in dem Schritt der Bereitstellung der Umhüllung (130, 136, 130i, 136i, 130j, 136j, 130k, 130L, 130m, 148, 148a, 148b, 148c, 148d, 148e, 148f, 148g oder 148h) ferner zwei oder mehr Schichten umfaßt.

40. Verfahren nach einem der Ansprüche 19 bis 39, wobei das Bindemittel (140i, 140j, 24k, 24L, 190, 190a, 190b, 190d, 190e, 190g, 190h, 21, 21L, 21m, 212c, 212d, 212f oder 212h) der Faltverbindungseinrichtung (18, 18f, 140i, 140j, 24k, 24L, 18L, 18m, 190, 190a, 190b, 206c, 190d, 206d, 190e, 206e, 206f, 190g, 190h oder 206h) in dem Schritt der Bereitstellung der Umhüllung (130, 136, 130i, 136i, 130j, 136j, 130k, 130L, 130m, 148, 148a, 148b, 148c, 148d, 148e, 148f, 148g oder 148h) ferner ein Bindemittel (140i, 140j, 24k, 24L, 190, 190a, 190b, 190d, 190e, 190g, 190h, 21, 21L, 21m, 212c, 212d, 212f oder 212h) umfaßt, das aus der Gruppe ausgewählt wird, die einen Kontaktklebstoff oder- bindemittel, einen wärmeempfindlichen Klebstoff oder ein wärmeempfindliches Bindemittel, einen schallsiegelfähigen Klebstoff oder ein schallsiegelfähiges Bindemittel, einen vibrationssiegelfähigen Klebstoff oder ein vibrationssiegelfähiges Bindemittel, einen chemisch siegelfähigen Klebstoff oder ein chemisch siegelfähiges Bindemittel oder einen kaltsiegelfähigen Lack umfaßt.

## Revendications

1. Feuille d'emballage (130,136,130i,136i, 130j,136j,130k,130L,130m ou 136m) pour envelopper un bouquet de fleurs (120) ayant une partie fleurs (124) et une partie tiges (122), la feuille d'emballage (130, 136,130i,136i,130j,136j,130k,130L ou 130m) comprenant :
une feuille plane de matière (10,10f,10i,10j,10k ou 10L) dimensionnée de manière à entourer et encercler sensiblement le bouquet de fleurs (120) lorsqu'elle est enroulée autour de celui-ci ; et
des moyens de connexion de plis (18,18f,140i, 140j,24k,24L,18L ou 18m) pour tenir une partie de la feuille de matière (10,10f,10i,10j,10k ou 10L) autour du bouquet floral (120) lorsque la feuille de matière (10,10f,10i,10j,10k ou 10L) est enroulée de façon plissée autour du bouquet de fleurs (120), les moyens de connexion de plis (18,18f,140i,140j,24k,24L,18L ou 18m) comprenant une matière de collage (140i,140j, 24k ou 24L) disposée sur une surface (16i,17j,16k ou 16L) de la feuille de matière (10,10f,10i,10j,10k ou 10L) pour connecter par collage des parties chevauchantes de la feuille de matière (10,10f,10i,10j,10k ou 10L) lorsqu'une partie plissée (142i,142j,142k ou 142L) est formée dans la feuille de matière (10,10f,10i,10j,10k ou 10L) et les moyens de connexion de plis (18,18f,140i, 140j,24k,24L ou 18m) comprennent en outre une patte de ligature (18,18f,18L ou 18m) s'étendant à partir de la feuille de matière (10,10f,10i,10j,10k ou 10L) pour retenir les plis chevauchants connectés dans une position plissée, et
de sorte que la feuille de matière (10,10f,10i, 10j,10k ou 10L) peut être enroulée de façon plissée autour d'au moins une portion de la partie tiges (122) du bouquet de fleurs (120), les moyens de connexion de plis (18,18f,140i,140j,24k,24L,18L ou 18m) étant prévus pour retenir la feuille de matière (10,10f,10i,10j,10k ou 10L)dans une position plissée autour de la partie tiges (122) du bouquet de fleurs (120).

2. Feuille d'emballage (130,136,130i,136i, 130j,136j,130k,130L,130m ou 136m) selon la revendication 1, dans laquelle la feuille plane de matière (10,10f, 10i,10j,10k ou 10L) comprend en outre une première extrémité (12,12i,12j,12k ou 12L), une deuxième extrémité (13,13i,13j,13k ou 13L), un premier côté (14,14i,14j, 14k,14L), un deuxième côté (15,15i,15j,15k ou 15L), une surface intérieure (16,16i,16j,16k ou 16L) et une surface extérieure (17,17i,17j,17k,17L ou 17m) et dans laquelle la matière de collage (140i,140j,24k ou 24L des moyens de connexion de plis (18,18f,140i,140j,24k,24L, 18L ou 18m) est disposée sur des parties de la surface intérieure (16,16i,16j,16k ou 16L), des parties de la surface extérieure (17,17i,17j,17k,17L ou 17m) ou des parties à la fois de la surface intérieure (16,16i,16j, 16k ou 16L) et de la surface extérieure (17,17i,17j,17k, 17L ou 17m) de la feuille de matière (10,10f,10i,10j,10k ou 10L.

3. Feuille d'emballage (130,136,130i,136i, 130j,136j,130k,130L,130m ou 136m) selon la revendication 1 ou 2 , dans laquelle la feuille de matière (10 10f,10i, 10j,10k ou 10L) comprend en outre des moyens de connexion de feuille (24,24i,24j ou 24m) comportant une matière de collage (24,24i,24j ou 24m) disposée sur une partie de la feuille de matière (10,10f,10i,10j,10k ou 10L) pour connecter des parties de la surface intérieure (16,16i, 16j,16k ou 16L) de la feuille de matière (10,10f,10i,10j, 10k ou 10L) à des parties de la surface extérieure (17,17i, 17j,17k,17L ou 17m) de la feuille de matière (10,10f,10i, 10j,10k,10L), lorsque la feuille de matière (10,10f,10i, 10j,10k ou 10L) est enroulée autour du bouquet de fleurs (120).

4. Feuille d'emballage (130,136,130i,136i, 130j,136j,130k,130L,130m ou 136m) selon une quelconque des revendications précédentes, comprenant en outre une patte de traction (18k ou 18L) pour aider à libérer la feuille d'emballage (130,136,130i,136i,130j,136j,130k, 130L,130m ou 136m) du bouquet de fleurs (120).

5. Feuille d' emballage (130,136,130i,136i, 130j,135j,130k,130L,130m ou 136m) pour emballer un bouquet de fleurs (120), la feuille d'emballage (130, 136,130i,136i,130j,136j,130k,130L,130m ou 136m) comprenant :
une feuille plane de matière (10,10f,10i,10j, 10k ou 10L) dimensionnée de manière à entourer et encercler substantiellement le bouquet de fleurs (120) lorsqu'elle est enroulée autour de celui-ci, la feuille de matière (10,10f,10i,10j,10k ou 10L) comportant :
des moyens de connexion de plis (18,18f,21,21L, 21m,140i,140j,24k,24L,18L ou 18m) pour tenir une partie de la feuille de matière (10,10f,10i,10j,10k ou 10L) autour du bouquet de fleurs (120) lorsque la feuille de matière (10,10f,10i,10j,10k ou 10L) est enroulée de façon plissée autour du bouquet de fleurs (120), les moyens de connexion de plis (18,18f,21,21L,21m,140i,140j,24k,24L,18L ou 18m) comprenant une matière de collage (21,21L,21m, 140i,140j,24k ou 24L) pour connexion par collage à des parties de la feuille de matière (10,10f,10i,10j,10k ou 10L) lorsqu'une partie plissée (142i,142j,142k ou 142L) est formée dans la feuille de matière (10,10f,10i,10j,10k ou 10L), et
des moyens de connexion de feuille (24,24i,24j ou 24m) comprenant une matière de collage (24,24i,24j, ou 24m) pour connecter des parties d'une surface intérieure (16,16i,16j,16k ou 16L) de la feuille de matière (10,10f,10i,10j,10k ou 10L) à des parties d'une surface extérieure (17,17i,17j,17k,17L ou 17m) de la feuille de matière (10,10f,10i,10j,10k ou 10L), et
de sorte que la feuille de matière (10,10f,10i, 10j,10k ou 10L) peut être enroulée de façon plissée autour d'au moins une portion de la partie tiges (122) du bouquet de fleurs (120), les moyens de connexion de plis (18,18f,21,21L,21m,140i,140j,24k,24L,18L ou 18m) étant prévus pour retenir la feuille de matière (10,10f, 10i,10j,10k ou 10L) dans une position plissée autour de la partie tiges (122) du bouquet de fleurs (120).

6. Feuille d'emballage (130,136,130i,136i,130j, 136j,130k,130L,130m ou 136m) selon la revendication 5, dans laquelle la feuille de matière plane (10,10f,10i, 10j,10k ou 10L) comprend en outre une première extrémité (12,12i,12j,12k,ou 12L), une deuxième extrémité (13, 13i,13j,13k ou 13L), un premier côté (14,14i,14j,14k ou 14L), un deuxième côté (15,15i,15j,15k ou 15L), la surface intérieure (16,16i,16j,16k ou 16L) et la surface extérieure (17,17i,17j,17k,17L ou 17m), et dans laquelle la matière de collage (140i,140j,24k ou 24L) des moyens de connexion de plis (18,18f,140i,140j,24k,24L, 18L ou 18m) est disposée sur des parties de la surface intérieure (16,16i,16j,16k ou 16L), des parties de la surface extérieure (17,17i,17j,17k,17L ou 17m), ou des parties à la fois de la surface intérieure (16,16i,16j,16k ou 16L) et de la surface extérieure (17,17i,17j,17k,17L ou 17m) de la feuille de matière (10,10f,10i,10j,10k ou 10L).

7. Feuille d'emballage (130,136,130i,136i,130j, 130k,130L,130m ou 136m) selon la revendication 5 ou 6, dans laquelle la matière de collage (21,21L,21m,140i, 140j,24k ou 24L) des moyens de connexion de plis (18,18f, 231,21L,21m,140i,140j,24k,24L,18L ou 18m) est utilisée pour former des plis en chevauchement dans la partie plissée (142i,142j,142k ou 142L) qui sont connectés ensemble par la matière de collage (140i,140j,24k ou 24L).

8. Feuille d'emballage (130,136,130i,136i, 130j,136j,130k,130L,130m ou 136m) selon une quelconque des revendications 5 à 7, comprenant en outre une patte de traction (18k ou 18L) pour faciliter la libération de la feuille d' emballage (130,136,130i,136i,130j,136j, 130k,130L,130m ou 136m) du bouquet de fleurs (120).

9. Feuille d'emballage (148,148a,148b,148c, 148d,148e,148f,148g ou 148h) pour envelopper un bouquet de fleurs (120) ayant une partie fleurs (124) et une partie tiges (122), la feuille d'emballage (148,148a,148b, 148c,149d,148e,148f,148g ou 148h) comprenant :
un manchon de matière (148,148a,148b,148c,148d, 148e,148f,148g ou 148h) ayant une première extrémité (152,152a,152b,152c ou 152d), une deuxième extrémité (154,154a,154b,154c ou 154d), une surface extérieure (158,158a,158b,158c ou 158d), une surface intérieure (156,156a,156c ou 156d), une ouverture à la première extrémité (152,152a,152b ,152c ou 152d) et un espace de retenue intérieur (193,193a,193c,193d ou 193e) et dimensionné de manière à entourer et encercler substantiellement le bouquet de fleurs (120) lorsqu'il est placé autour de ce dernier ; et
des moyens de connexion de plis (190,190a,190b, 206c,190d,206d,190e,206e,206f,190g,190h ou 206h)pour tenir une partie du manchon de matière (148,148a,148b, 148c,148d,148e,148f,148g ou 148h) autour du bouquet de fleurs (120) lorsque le manchon de matière (148,148a, 148b,148c,148d,148e,148f,148g ou 148h) est plissé autour du bouquet de fleurs (120), les moyens de connexion de plis (190,190a,190b,206c,190d,206d,190e,206e,206f, 190g,190h ou 206h) comprenant une matière de collage (190, 190a,190b,190d,190e,190g ou 190h) disposée sur une partie d'au moins une de la surface intérieure (156,156a, 156c ou 156d) ou de la surface extérieure (158,158a, 158b,158c ou 158d) du manchon de matière (148,148a,148b, 148c,148d,148e,148f,148g ou 148h), la matière de collage (190,190a,190b,190d,190e,190g ou 190h) étant prévue pour connecter par collage les parties chevauchantes (194,198 ou 204) du manchon de matière (148,148a,148d, 148c,148d,148e,148f,148g ou 148h) lorsqu'une partie plissée (202,202a,202b,214d ou 214e est formée dans la matière, et
dans laquelle le manchon de matière (148,148a, 148b,148c,148d,148e,148f,148g ou 148h) peut être placé de façon plissée autour d'au moins une partie du bouquet de fleurs, les moyens de connexion de plis (190,190a, 190b,206c,190d,206d,190e,206e,206f,190g,190h ou 206h) étant prévus pour retenir le manchon de matière (148, 148a,148b,148c,148d,148e,148f,148g ou 148h) dans une position plissée autour de la partie tiges (122) du bouquet de fleurs (120).

10. Feuille d'emballage (148,148a,148b,148c, 148d,148e,148f,148g ou 148h) selon la revendication 9, dans laquelle le manchon de matière (148,148a,148b,148c, 148d,148e,148f,148g ou 148h) comprend en outre des moyens de fermeture (240f,244f,242f, ou 248f) pour fermer la première extrémité (152,152a,152b,152c ou 152d) du manchon de matière (148,148a,148b,148c,148d,148e,148f,148g ou 148h), la deuxième extrémité (154,154a, 154b,154c, ou 154d) du manchon de matière (148,148a,148b,148c,148d, 148e,148f,148g ou 148h), ou à la fois la première extrémité (152,152a,152b,152c ou 152d) et la deuxième extrémité (154,154a,154b,154c ou 154d) du manchon de matière (148, 148a,148b,148c,148d,148e,148f ou 148h) après mise en place du manchon de matière (148,148a,148b,148c,148d, 148e,148f,148g ou 148h autour du bouquet de fleurs (120).

11. Feuille d'emballage (130,136,130i,136i,130j, 136j,130k,130L,130m,136m,148,148a,148b,148c,148d,148e, 148f,148g ou 148h) selon une quelconque des revendications 5 à 10, dans laquelle les moyens de connexion de plis (18,18f,21,21L,21m,140i,140j,24k,24L,18L,18m,190, 190a,190b,206c,190d,206d,190e,206e,206f,190g,190h ou 206h) comprennent en outre une patte de ligature (18,18f, 18L,18m,206c,206d,206e,206f ou 206h) s'étendant à partir de la feuille de matière (10,10f,10i,10j,10k ou 10L)ou du manchon de matière (148,148a,148b,148c,148d,148e,148f, 148g ou 148h) pour enroulement autour de la partie plissée (142i,142j,142k,142L,202,202a,202b, 214d ou 214e) de la feuille d'emballage (130, 136, 130i, 136i, 130j, 136j, 130k, 130L, 130m, 136m, 148, 148a, 148b, 148c, 148d, 148e, 148f, 148g ou 148h) afin de retenir la partie plissée (142i, 142j, 142k, 142L, 202, 202a, 202b, 214d ou 214e) de la feuille d'emballage (130, 136, 130i, 136i, 130j, 136j, 130k, 130L, 130m, 136m, 148, 148a, 148b, 148c, 148d, 148e, 148f, 148g ou 148h) dans un état plissé autour du bouquet de fleurs (120).

12. Feuille d'emballage (130, 136, 130i, 136i, 130j, 136j, 130k, 130L, 130m, 136m, 148, 148a, 148b, 148c, 148d, 148e, 148f, 148g ou 148h) selon une quelconque des revendications 1 à 4 et 11, dans laquelle la patte de ligature (18, 18f, 18L, 18m, 206c, 206d, 206e, 206f ou 206h) s'étendant à partir de la feuille de matière (10, 10f, 10i, 10j, 10k ou 10L) ou du manchon de matière (148, 148a, 148b, 148c, 148d, 148e, 148f, 148g ou 148h) comprend une extrêmité connectée à la feuille de matière (10, 10f, 10i, 10j, 10k ou 10L) ou au manchon de matière (148, 148a, 148b, 148c, 148d, 148e, 148f, 148g ou 148h) et une extrémité qui peut s'étendre sur une partie importante d'une circonférence de la feuille de matière (10, 10f, 10i, 10j, 10k ou 10L) ou du manchon de matière (148, 148a, 148b, 148c, 148d, 148e, 148f, 148g ou 148h) et être connectée à cette partie.

13. Feuille d'emballage (130, 136, 130i, 136i, 130j, 136j, 130k, 130L, 130m, 136m, 148, 148a, 148b, 148c, 148d, 148e, 148f, 148g ou 148h) selon une quelconque des revendications 1 à 4 et 11-12, dans laquelle la patte de ligature (18, 18f, 18L, 18m, 206c, 206d, 206e, 206f ou 206h) s'étendant à partir de la feuille de matière (10, 10f, 10i, 10j, 10k ou 10L) ou du manchon de matière (148, 148a, 148b, 148c, 148d, 148e, 148f, 148g ou 148h) comprend en outre une matière de collage (21, 21L, 21m, 212c, 212d, 212f ou 212h) disposée sur une partie de la patte pour connecter la patte de ligature à une partie de la feuille de matière (148, 148a, 148b, 148c, 148d, 148e, 148f, 148g ou 148h) lorsque la patte de ligature (18, 18f, 18L, 18m, 206c, 206d, 206e, 206f ou 206h) est enroulée autour de la partie plissée (142i, 142j, 142k, 142L, 202, 202a, 202b, 214d ou 214e) de la feuille de matière (10, 10f, 10i, 10j, 10k ou 10L) ou du manchon de matière (148, 148a, 148b, 148c, 148d, 148e, 148f, 148g ou 148h).

14. Feuille d'emballage (130, 136, 130i, 136i, 130j, 136j, 130k, 130L, 130m, 136m, 148, 148a, 148b, 148c, 148d, 148e, 148f, 148g ou 148h) selon une quelconque des revendications précédentes, dans laquelle la feuille d'emballage (130, 136, 130i, 136i, 130j, 136j, 130k, 130L, 130m, 136m, 148, 148a, 148b, 148c, 148d, 148e, 148f, 148g ou 148h) comprend en outre une matière de collage d'étiquette (254m) disposée sur une surface de la feuille d'emballage (130, 136, 130i, 136i, 130j, 136j, 130k, 130L, 130m, 136m, 148, 148a, 148b, 148c, 148d, 148e, 148f, 148g ou 148h) pour fixer une étiquette à une partie de la feuille d'emballage (130, 136, 130i, 136i, 130j, 136j, 130k, 130L, 130m, 136m, 148, 148a, 148b, 148c, 148d, 148e, 148f, 148g ou 148h).

15. Feuille d'emballage (130, 136, 130i, 136i, 130j, 136j, 130k, 130L, 130m, 136m, 148, 148a, 148b, 148c, 148d, 148e, 148f, 148g ou 148h) selon une quelconque des revendications précédentes, dans laquelle la feuille de matière (10, 10f, 10i, 10j, 10k ou 10L) ou le manchon de matière (148, 148a, 148b, 148c, 148d, 148e, 148f, 148g ou 148h) est fabriqué en une matière choisie dans le groupe comprenant un papier (non traité ou traité d'une manière quelconque), la cellophane, un feuil, un film de polymère, une étoffe (tissée ou non tissée ou synthétique ou naturelle), une toile d'emballage, un tissu et toute combinaison de ces matières.

16. Feuille d'emballage (130, 136, 130i, 136i, 130j, 136j, 130k, 130L, 130m, 136m, 148, 148a, 148b, 148c, 148d, 148e, 148f, 148g ou 148h) selon une quelconque des revendications précédentes, dans laquelle la matière (10, 10f, 10i, 10j, 10k, 10L, 148, 148a, 148b, 148c, 148d, 148e, 148f, 148g ou 148h) est en outre définie comme ayant une épaisseur comprise entre 2,54 µm (0,1 mil) environ et 762 µm (30 mils) environ.

17. Feuille d'emballage (130, 136, 130i, 136i, 130j, 136j, 130k, 130L, 130m, 136m, 138, 148a, 148b, 148c, 148d, 148e, 148f, 148g ou 148h) selon une quelconque des revendications précédentes 1 à 3, 6 à 8 ou 10 à 12 , dans laquelle la matière (10, 10f, 10i, 10j, 10k, 10L, 148, 148a, 148b, 148c, 148d, 148e, 148f, 148g ou 148h) comprend en outre deux couches ou plus.

18. Feuille d'emballage (130, 136, 130i, 136i, 130j, 136j, 130k, 130L, 130m, 136m, 148, 148a, 148b, 148c, 148d, 148e, 148f, 148g ou 148h) selon une quelconque des revendications précédentes, dans laquelle la matière de collage (140i, 140j, 24k, 24L, 190, 190a, 190b, 190d, 190e, 190g, 190h, 21, 21L, 21m, 212c, 212d, 212f ou 212h) des moyens de connexion de plis (18, 18f, 21L, 21m, 140i, 140j, 24k, 24L, 18L, 18m, 190, 190a, 190b, 206c, 190d, 206d, 190e, 206e, 206f, 190g, 190h ou 206h) comprend en outre une matière de collage (140i, 140j, 24k, 24L, 190, 190a, 190b, 190d, 190e, 190g, 190h, 21, 21L, 21m, 212c, 212d, 212f ou 212h) choisie dans le groupe comprenant un adhésif ou une colle sensible à la pression, un adhésif ou une colle sensible à la chaleur, un adhésif ou une colle soudable soniquement, un adhésif ou une colle soudable par vibration, un adhésif ou une colle soudable chimiquement, ou un vernis de soudage à froid.

19. Procédé d'emballage d'un bouquet de fleurs (120), comprenant :
la préparation d'un bouquet de fleurs (120) ayant une partie fleurs (124) et une partie tiges (122) ;
la préparation d'une feuille d'emballage (130, 136, 130i, 136i, 130j, 136j, 130k, 130L, 130m ou 136m) comportant :
- une feuille de matière (10, 10f, 10i, 10j, 10k ou 10L) ayant une première extrémité (12, 12i, 12j, 12k ou 12L), une deuxième extrémité (13, 13i, 13j, 13k ou 13L) un premier côté (14, 14i, 14j, 14k, 14L), un deuxième côté (15, 15i, 15j, 15k ou 15L), une surface intérieure (16, 16i, 16j, 16k ou 16L) et une surface extérieure (17, 17i, 17j, 17k, 17L ou 17m), et de sorte que la feuille de matière (10, 10f, 10i, 10j, 10k ou 10L) est dimensionnée de manière à entourer et encercler substantiellement le bouquet de fleurs (120) lorsqu'elle est enroulée autour de celui-ci, et
- des moyens de connexion de plis (18, 18f, 21, 21L, 21m, 140i, 140j, 24k, 24L, 18L ou 18m) comprenant une matière de collage (21, 21L, 21m, 140i, 140j, 24k ou 24L) disposée sur une surface (16, 16i, 16j, 16k, 16L, 17, 17i, 17j, 17k, 17L ou 17m) de la feuille de matière (10, 10f, 10i, 10j, 10k ou 10L) ou d'un prolongement (18, 18f, 18L ou 18m) de celle-ci pour connecter par collage une pluralité de parties chevauchantes de la feuille de matière (10, 10f, 10i, 10j, 10k ou 10L) lorsqu'une partie plissée (142i, 142j, 142k ou 142L) comprenant des parties chevauchantes est formée dans la feuille de matière (10, 10f, 10i, 10j, 10k ou 10L) ;
la mise en place du bouquet de fleurs (120) sur une partie de la feuille de matière (10, 10f, 10i, 10j, 10k ou 10L) ;
l'enroulement de la feuille de matière (10, 10f, 10i, 10j, 10k ou 10L) autour du bouquet de fleurs (120) pour former un bouquet de fleurs enveloppé (120) ; et
la formation d'une partie plissée (142i, 142j, 142k ou 142L) ayant une pluralité de plis chevauchants connectés dans la feuille de matière (10, 10f, 10i, 10j, 10k ou 10L) du bouquet de fleurs enveloppé (120), les moyens de connexion de plis (18, 18f, 21, 21L, 21m, 140i, 140j, 24k, 24L, 18L ou 18m) retenant la partie plissée (142i, 142j, 142k ou 142L) autour d'une portion de la partie tiges (122) afin de retenir la feuille de matière (10, 10f, 10i, 10j, 10k ou 10L) autour du bouquet de fleurs (120).

20. Procédé selon la revendication 19, dans lequel, au stade de préparation de la feuille d'emballage (130, 136, 130i, 136i, 130j, 136j, 130k, 130L, 130m ou 136m), la matière de collage (21, 21L, 21m, 140i, 140j, 24k ou 24L) des moyens de connexion de plis (18, 18f, 21, 21L, 21m, 140i, 140j, 24k, 24L, 18L ou 18m) est disposée sur des parties de la surface intérieure (16, 16i, 16j, 16k ou 16L), des parties de la surface extérieure (17, 17i, 17j, 17k, 17L ou 17m) ou des parties à la fois de la surface intérieure (16, 16i, 16j, 16k ou 16L) et de la surface extérieure (17, 17i, 17j, 17k, 17L ou 17m) de la feuille de matière (10, 10f, 10i, 10j, 10k ou 10L).

21. Procédé selon la revendication 19 ou 20, dans lequel, dans l'étape de préparation de la feuille d'emballage (130, 136, 130i, 136i, 130j, 136j, 130k, 130L, 130m ou 136m), la feuille d'emballage (130, 136, 130i, 136i, 130j, 136j, 130k, 130L, 130m ou 136m) comprend en outre des moyens de connexion de feuille (24, 24i, 24j ou 24m) disposés sur la feuille de matière (10, 10f, 10i, 10j, 10k ou 10L), les moyens de connexion de feuille (24, 24i, 24j ou 24m) comprenant une matière de collage (24, 24i, 24j ou 24m) pour connecter des parties de la surface intérieure (16, 16i, 16j, 16k ou 16L) de la feuille de matière (10, 10f, 10i, 10j, 10k ou 10L à des parties de la surface extérieure (17, 17i, 17j, 17k, 17L ou 17m) de la feuille de matière (10, 10f, 10i, 10j, 10k ou 10L) lorsque la feuille de matière (10, 10f, 10i, 10j, 10k ou 10L) est enroulée autour du bouquet de fleurs (120).

22. Procédé selon la revendication 21, dans lequel l'étape de préparation d'une feuille d'emballage (130, 136, 130i, 136i, 130j, 136j, 130k, 130L, 130m ou 136m) comprend en outre la préparation d'un bloc de feuilles de matière (10, 10f, 10i, 10j, 10k ou 10L), le bloc ayant une feuille supérieure de matière (10, 10f, 10i, 10j, 10k ou 10L), et dans lequel les moyens de connexion de feuille (24, 24i, 24j ou 24m) de chaque feuille de matière (10, 10f, 10i, 10j, 10k ou 10L) sont reliés par collage à une partie d'une feuille adjacente de matière (10, 10f, 10i, 10j, 10k ou 10L) afin de connecter en coopération les feuilles de matière (10, 10f, 10i, 10j, 10k ou 10L) pour former le bloc, et dans lequel les moyens de connexion de feuille (24, 24i, 24j ou 24m) sur chaque feuille de matière (10, 10f, 10i, 10j, 10k ou 10L) connectent de façon libérable chaque feuille de matière (10, 10f, 10i, 10j, 10k ou 10L) à une autre feuille de matière (10, 10f, 10i, 10j, 10k ou 10L) de sorte qu'on peut détacher de façon libérable une des feuilles de matière (10, 10f, 10i, 10j, 10k ou 10L) d'une autre feuille de matière (10, 10f, 10i, 10j, 10k ou 10L) par traction sur les feuilles de matière (10, 10f, 10i, 10j, 10k ou 10L) à l'opposé l'une de l'autre.

23. Procédé selon la revendication 21 ou 22, dans lequel l'étape d'enroulement de la feuille de matière (10, 10f, 10i, 10j, 10k ou 10L) autour du bouquet de fleurs (120) comprend en outre le positionnement d'une partie de la feuille supérieure de matière (10, 10f, 10i, 10j, 10k ou 10L) sur au moins une partie du bouquet de fleurs (120) et le roulage de la feuille supérieure de matière (10, 10f, 10i, 10j, 10k ou 10L) et du bouquet de fleurs (120) et l'enroulement de la feuille supérieure de matière (10, 10f, 10i, 10j, 10k ou 10L) autour du bouquet de fleurs (120), la feuille supérieure de matière (10, 10f, 10i, 10j, 10k ou 10L) étant détachée du bloc de feuilles de matière (10, 10f, 10i, 10j, 10k ou 10L) lorsqu'on enroule la feuille supérieure de matière (10, 10f, 10i, 10j, 10k ou 10L) autour du bouquet de fleurs (120).

24. Procédé selon la revendication 23, dans le quel l'étape d'enroulement de la feuille supérieure de matière (10,10f,10i,10j,10k ou 10L) autour du bouquet de fleurs (120) et de détachement de la feuille supérieure de matière (10,10f,10i,10j,10K ou 10L) du bloc laisse la feuille de matière suivante (10,10f,10i,10j,10k ou 10L) devenant une nouvelle feuille supérieure de matière (10,10f,10i,10j,10k ou 10L),et
dans lequel les étapes de mise en place du bouquet de fleurs (120) sur la feuille supérieure de matière et d'enroulement de celle-ci autour du bouquet de fleurs (120) sont répétées avec d'autres bouquets de fleurs (120) jusqu'à ce que sensiblement toutes les feuilles de matière (10,10f,10i,10j,10k ou 10L) du bloc aient été enroulées autour des bouquets de fleurs (120).

25. Procédé selon une quelconque des revendications 19 à 21, dans lequel, dans l'étape de préparation de la feuille d'emballage (130,136,130i,136i,130j, 136j,130k,130L,130m ou 136m), la feuille d'emballage (130,136,130i,136i,130j,136j,130k,130L,130m ou 136m) comprend en outre des moyens de connexion de feuille (24,24i,24j ou 24m) disposés sur la feuille de matière (10,10f,10i,10j,10k ou 10L), les moyens de connexion de feuille (24,24i;24j ou 24m) comportant une matière de collage (24,24i,24j ou 24m) pour connecter des parties de la surface intérieure (16,16i,16j,16k ou 16L) de la feuille de matière (10,10f,10i,10j,10k ou 10L) à des parties de la surface extérieure (17,17i,17j,17k, 17L ou 17m) de la feuille de matière (10,10f,10i,10j, 10k ou 10L) lorsqu'on enroule la feuille de matière (10, 10f,10i,10j,10k ou 10L) autour du bouquet de fleurs (120).

26. Procédé selon une quelconque des revendications 19 à 25, dans lequel, dans l'étape de préparation de la feuille d'emballage (130,136,130i,136i,130j, 136j,130k,130L,130m ou 136m), la feuille d'emballage (130,136,130i,136i,130j,136j,130k,130L,130m ou 136m), comprend en outre une languette de traction (18k ou 18L) s'étendant à partir de la feuille de matière (10, 10f, 10i, 10j, 10k ou 10L) pour faciliter l'enlèvement de la feuille d'emballage (130, 136, 130i, 136i, 130j, 136j, 130k, 130L, 130m ou 136m) du bouquet de fleurs (120).

27. Procédé d'emballage d'un bouquet de fleurs (120), comprenant :
la préparation d'un bouquet de fleurs (120) ayant une partie fleurs (124) et une partie tiges (122) ;
la préparation d'une feuille d'emballage (148, 148a, 148b, 148c, 148d, 148e, 148f, 148g ou 148h) comprenant :
- un manchon de matière (148, 148a, 148b, 148c, 148d, 148e, 148f, 148g ou 148h) ayant une première extrémité (152, 152a, 152b, 152c ou 152d), une deuxième extrémité (154, 154a, 154b, 154c ou 154d), une surface extérieure (158, 158a, 158b, 158c ou 158d), une surface intérieure (156, 156a, 156c ou 156d), une ouverture à la première extrémité (152, 152a, 152b, 152c ou 152d), une circonférence et un espace de retenue intérieur (193, 193a, 193c, 193d ou 193e) délimité par la surface intérieure (156, 156a, 156c ou 156d) et dimensionné de manière à entourer et encercler substantiellement le bouquet de fleurs (120) lorsqu'il est placé autour de celui-ci, et
- des moyens de connexion de plis (190, 190a, 190b, 206c, 190d, 206d, 190e, 206e, 206f, 190g, 190h ou 206h) comprenant une patte de ligature (206c, 206d, 206e, 206f ou 206h) s'étendant à partir du manchon de matière (148, 148a, 148b, 148c, 148d, 148e, 148f, 148g ou 148h) pour connexion par collage à une partie du manchon de matière (148, 148a, 148b, 148c, 148d, 148e, 148f, 148g ou 148h) lorsqu'une partie plissée (202, 202a, 202d, 214d ou 214e) est formée dans le manchon de matière (148, 148a, 148b, 148c, 148d, 148e, 148f, 148g ou 148h) et dans lequel le manchon de matière (148, 148a, 148b, 148c, 148d, 148e, 148f, 148g ou 148h) est exempt de plis préformés ou de stries qui déterminent la position de la partie plissée (202, 202a, 202b, 214d ou 214e);
la mise en place d'au moins une portion de la partie tiges (122) du bouquet de fleurs (120) dans l'espace de retenue (193, 193a, 193c, 193d ou 193e) du manchon de matière (148, 148a, 148b, 148c, 148d, 148e, 148f, 148g ou 148h) ; et
le plissage d'une partie du manchon de matière (148, 148a, 148b, 148c, 148d, 148e, 148f, 148g ou 148h) autour de la partie tiges (122) du bouquet de fleurs (120) de manière à former une partie plissée (202, 202a, 202b, 214d ou 214e) comprenant des plis chevauchants (194, 198, 204), les moyens de connexion de plis (190, 190a, 190b, 206c, 190d, 206d, 190e, 206e, 206f, 190g, 190h ou 206h) retenant la partie plissée (202, 202a, 202b, 214d ou 214e).

28. Procédé selon la revendication 27, dans lequel, dans l'étape de préparation de la feuille d'emballage (148, 148a, 148b, 148c, 148d, 148e, 148f, 148g ou 148h), les moyens de connexion de plis (190, 190a, 190b, 206c, 190d, 206d, 190e, 206e, 206f, 190g, 190h ou 206h) comprennent en outre une matière de collage (190, 190a, 190b, 190d, 190e, 190g ou 190h) disposée sur une partie d'au moins une de la surface intérieure (156, 156a, 156c ou 156d) ou de la surface extérieure (158, 158a, 158b, 158c ou 158d) du manchon de matière (148, 148a, 148b, 148c, 148d, 148e, 148f, 148g ou 148h).

29. Procédé selon la revendication 27 ou 28, dans lequel, dans l'étape de formation de la partie plissée (202, 202a, 202b, 214d ou 214e), au moins certains plis chevauchants (194, 198, 204) sont formés dans la partie plissée (202, 202a, 202b, 214d ou 214e), et dans lequel au moins certains des plis chevauchants (194, 198, 204) sont connectés ensemble par la matière de collage (190, 190a, 190b, 190d, 190e, 190g ou 190h) des moyens de connexion de plis (190, 190a, 190b, 206c, 190d, 206d, 190e, 206e, 206f, 190g, 190h ou 206h).

30. Procédé selon une quelconque des revendications 27 à 29, dans lequel, dans l'étape de préparation de la feuille d'emballage (148, 148a, 148b, 148c, 148d, 148e, 148f, 148g ou 148h), le manchon de matière (148, 148a, 148b, 148c, 148d, 148e, 148f, 148g ou 148h) comprend en outre des moyens de fermeture (240f, 244f, 242f ou 248f) pour fermer la première extrémité (152, 152a, 152b, 152c ou 152d) du manchon de matière (148, 148a, 148b, 148c, 148d, 148e, 148f, 148g ou 148h), la deuxième extrémité (154, 154a, 154b, 154c ou 154d) du manchon de matière (148, 148a, 148b, 148c, 148d, 148e, 148f, 148g ou 148h), ou à la fois la première extrémité (152, 152a, 152b, 152c ou 152d) et la deuxième extrémité (154, 154a, 154b, 154c ou 154d) du manchon de matière (148, 148a, 148b, 148c, 148d, 148e, 148f, 148g ou 148h).

31. Procédé d'emballage d'un bouquet (120), comprenant :
la préparation d'un bouquet de fleurs (120) ayant une partie fleurs (124) et une partie tiges (122) ;
la préparation d'une feuille d'emballage (148, 148a, 148b, 148c, 148d, 148e, 148f, 148g ou 148h) comportant :
- un manchon de matière (148, 148a, 148b, 148c, 148d, 148e, 148f, 148g ou 148h) ayant une première extrémité (152, 152a, 152b, 152c ou 152d), une deuxième extrémité (154, 154a, 154b, 154c ou 154d), une surface extérieure (158, 158a, 158b, 158c ou 158d), une surface intérieure (156, 156a, 156c ou 156d), une ouverture à la première extrémité (152, 152a, 152b, 152c ou 152d), et un espace de retenue intérieur (193, 193a, 193c, 193d ou 193e) délimité par la surface intérieure (156, 156a, 156c ou 156d) et dimensionné de manière à entourer et encercler sensiblement le bouquet de fleurs (120) lorsqu'il est placé autour de celui-ci, et
- des moyens de connexion de plis (190, 190a, 190b, 206c, 190d, 206d, 190e, 206e, 206f, 190g, 190h ou 206h) comportant une matière de collage (190, 190a, 190b, 190d, 190e, 190g ou 190h) disposée sur une partie d'au moins une de la surface intérieure (156, 156a, 156c ou 156d) ou de la surface extérieure (158, 158a, 158b, 158c ou 158d) du manchon de matière (148, 148a, 148b, 148c, 148d, 148e, 148f, 148g ou 148h) pour la connexion par collage de parties chevauchantes (194, 198 ou 204) du manchon de matière (148, 148a, 148b, 148c, 148d, 148e, 148f, 148g ou 148h) lorsqu'on forme une partie plissée (202, 202a, 202b, 214d ou 214e) dans le manchon de matière (148, 148a, 148b, 148c, 148d, 148e, 148f, 148g ou 148h) ;
la mise en place d'au moins une portion de la partie tiges (122) du bouquet de fleurs (120) dans l'espace de retenue (193, 193a, 193c, 193d ou 193e) du manchon de matière (148, 148a, 148b, 148c, 148d, 148e, 148f, 148g ou 148h) ; et
le plissage de parties du manchon de matière (148, 148a, 148b, 148c, 148d, 148e, 148f, 148g ou 148h) autour de la partie tiges (122) du bouquet de fleurs (120) de manière à former une partie plissée (202, 202a, 202b, 214d ou 214e) dans le manchon de matière (148, 148a, 148b, 148c, 148d, 148e, 148f, 148g ou 148h), la matière de collage (190, 190a, 190b, 190d, 190e, 190g ou 190h) des moyens de connexion de plis (190, 190a, 190b, 206c, 190d, 206d, 190e, 206e, 206f, 190g, 190h ou 206h) retenant en place les parties chevauchantes (194, 198 ou 204) de la partie plissée (202, 202a, 202b, 214d ou 214e), ce qui retient le manchon de matière (148, 148a, 148b, 148c, 148d, 148e, 148f, 148g ou 148h) autour du bouquet de fleurs (120).

32. Procédé selon la revendication 31, dans lequel, dans l'étape de préparation de la feuille d'emballage (148, 148a, 148b, 148c, 148d, 148e, 148f, 148g ou 148h), le manchon de matière (148, 148a, 148b, 148c, 148d, 148e, 148f, 148g ou 148h) comprend en outre des moyens de fermeture (240f, 244f, 242f ou 248f) pour fermer la première extrémité (152, 152a, 152b, 152c ou 152d) du manchon de matière (148, 148a, 148b, 148c, 148d, 148e, 148f, 148g ou 148h), la deuxième extrémité (154, 154a, 154b, 154c ou 154d du manchon de matière (148, 148a, 148b, 148c, 148d, 148e, 148f, 148g ou 148h) ou à la fois la première extrémité (152, 152a, 152b, 152c ou 152d) et la deuxième extrémité (154, 154a, 154b, 154c ou 154d) du manchon de matière (148, 148a, 148b, 148c, 148d, 148e, 148f, 148g ou 148h).

33. Procédé selon une quelconque des revendications 19 à 26 et 31 à 32, dans lequel, dans l'étape de préparation de la feuille d'emballage (130, 136, 130i, 136i, 130j, 136j, 130k, 130L, 130m, 136m, 148, 148a, 148b, 148c, 148d, 148e, 148f, 148g ou 148h), les moyens de connexion de plis (18, 18f, 21, 21L, 21m, 140i, 140j, 24k, 24L, 18L, 18m, 190, 190a, 190b, 206c, 190d, 206d, 190e, 206e, 206f, 190g, 190h ou 206h) comprennent en outre une patte de ligature (18, 18f, 18L, 18m, 206c, 206d, 206e, 206f ou 206h) s'étendant à partir de la feuille de matière (10, 10f, 10i, 10j, 10k ou 10L) ou du manchon de matière (148, 148a, 148b, 148c, 148d, 148e, 148f, 148g ou 148h) pour enroulement autour de la partie plissée (142i, 142j, 142k, 142L, 202, 202a, 202b, 214d ou 214e) de la feuille d'emballage (130, 136, 130i, 136i, 130j, 136j, 130k, 130L, 130m, 136m, 148, 148a, 148b, 148c, 148d, 148e, 148f, 148g ou 148h) de manière à retenir la partie plissée (142i, 142j, 142k, 142L, 202, 202a, 202b, 214d ou 214e) de la feuille d'emballage (130, 136, 130i, 136i, 130j, 136j, 130k, 130L, 130m, 136m, 148, 148a, 148b, 148c, 148d, 148e, 148f, 148g ou 148h) dans un état plissé autour du bouquet de fleurs (120).

34. Procédé selon une quelconque des revendications 27 à 30 et 33, dans lequel, dans l'étape de préparation de la feuille d'emballage (130, 136, 130i, 136i, 130j, 136j, 130k, 130L, 130m, 136m, 148, 148a, 148b, 148c, 148d, 148e, 148f, 148g ou 148h), la patte de ligature (18, 18f, 18L, 18m, 206c, 206d, 206e, 206f ou 206h) s'étendant à partir de la feuille de matière (10, 10f, 10i, 10j, 10k ou 10L) ou du manchon de matière (148, 148a, 148b, 148c, 148d, 148e, 148f, 148g ou 148h) comprend en outre une matière de collage (21, 21L, 21m, 212c, 212d, 212f ou 212h) disposée sur une partie de la patte pour connexion de la patte de ligature (18, 18f, 18L, 18m, 206c, 206d, 206e, 206f ou 206h) à une partie de la feuille de matière (10, 10f, 10i, 10j, 10k ou 10L) lorsqu'on enroule la patte de ligature (18, 18f, 18L, 18m, 206c, 206d, 206e, 206f ou 206h) autour de la partie plissée (142i, 142j, 142k, 142L, 202, 202a, 202b, 214d ou 214e) de la feuille de matière (10, 10f, 10i, 10j, 10k ou 10L) ou du manchon de matière (148, 148a, 148b, 148c, 148d, 148e, 148f, 148g ou 148h).

35. Procédé selon une quelconque des revendications 27 à 30 et 33-34, dans lequel, dans l'étape de préparation de la feuille d'emballage (130, 136, 130i, 136i, 130j, 136j, 130k, 130L, 130m, 136m, 148, 148a, 148b, 148c 148d, 148e, 148f, 148g ou 148h), la patte de ligature (18, 18f, 18L, 18m, 206c, 206d, 206e, 206f ou 206h) comprend une extrémité connectée au manchon de matière (148, 148a, 148b, 148c, 148d, 148e, 148f, 148g ou 148h) ou à la feuille de matière (10, 10f, 10i, 10j, 10k ou 10L) et une extrémité qui peut être étendue autour d'une partie importante d'une circonférence de la feuille de matière (10, 10f, 10i, 10j, 10k ou 10L) ou de la circonférence du manchon de matière (148, 148a, 148b, 148c, 148d, 148e, 148f, 148g ou 148h) et connectée à cette partie.

36. Procédé selon une quelconque des revendications 19 à 35, dans lequel, dans l'étape de préparation de la feuille d'emballage (130, 136, 130i, 136i, 130j, 136j, 130k, 130L, 130m, 136m, 148, 148a, 148b, 148c, 148d, 148e, 148f, 148g ou 148h), la feuille d'emballage (130, 136, 130i, 136i, 130j, 136j, 130k, 130L, 130m, 136m, 148, 148a, 148b, 148c, 148d, 148e, 148f, 148g ou 148h) comprend en outre une matière de collage d'étiquette (254m) disposée sur une surface de la feuille d'emballage (130, 136, 130i, 136i, 130j, 136j, 130k, 130L, 130m, 136m, 148, 148a, 148b, 148c, 148d, 148e, 148f, 148g ou 148h) pour fixer une étiquette à une partie de la feuille d'emballage (130, 136, 130i, 136i, 130j, 136j, 130k, 130L, 130m, 136m, 148, 148a, 148b, 148c, 148d, 148e, 148f, 148g ou 148h).

37. Procédé selon une quelconque des revendications 19 à 36, dans lequel, dans l'étape de préparation de la feuille d'emballage (130, 136, 130i, 136i, 130j, 136j, 130k, 130L, 130m, 136m, 148, 148a, 148b, 148c, 148d, 148e, 148f, 148g ou 148h), la feuille de matière (10, 10f, 10i, 10j, 10k ou 10L) ou le manchon de matière (148, 148a, 148b, 148c, 148d, 148e, 148f, 148g ou 148h) est construit en une matière choisie dans le groupe comprenant le papier (non traité ou traité d'une manière quelconque), la cellophane, un feuil, un film de polymère, une étoffe (tissée ou non tissée ou synthétique ou naturelle), une toile d'emballage, un tissu et des combinaisons de ces matières.

38. Procédé selon une quelconque des revendications 19 à 37, dans lequel, dans l'étape de préparation de la feuille d'emballage (130, 136, 130i, 136i, 130j, 136j, 130k, 130L, 130m, 136m, 148, 148a, 148b, 148c, 148d, 148e, 148f, 148g ou 148h), la matière (10, 10f, 10i, 10j, 10k, 10L, 148, 148a, 148b, 148c, 148d, 148e, 148f, 148g ou 148h) est en outre définie en ce qu'elle a une épaisseur comprise entre 2,54 µm (0,1 mil) environ et 762 µm (30 mils) environ.

39. Procédé selon une quelconque des revendications 19 à 38, dans lequel, dans l'étape de préparation de la feuille d'emballage (130, 136, 130i, 136i, 130j, 136j, 130k, 130L, 130m, 136m, 148, 148a, 148b, 148c, 148d, 148e, 148f, 148g ou 148h), la matière (10, 10f, 10i, 10j, 10k, 10L, 148, 148a, 148b, 148c, 148d, 148e, 148f, 148g ou 148h) comprend en outre deux couches ou plus.

40. Procédé selon une quelconque des revendications 19 à 39, dans lequel, dans l'étape de préparation de la feuille d'emballage (130, 136, 130i, 136i, 130j, 136j, 130k, 130L, 130m, 136m, 148, 148a, 148b, 148c, 148d, 148e, 148f, 148g ou 148h), la matière de collage (140i, 140j, 24k, 24L, 190, 190a, 190b, 190d, 190e, 190g, 190h, 21, 21L, 21m, 212c, 212d, 212f ou 212h) des moyens de connexion de plis (18, 18f, 140i, 140j, 24k, 24L, 18L, 18m, 190, 190a, 190b, 206c, 190d, 206d, 190e, 206e, 206f, 190g, 190h ou 206h) comprend en outre une matière de collage (140i, 140j, 24k, 24L, 190, 190a, 190b, 190d, 190e, 190g, 190h, 21, 21m, 212c, 212d, 212f ou 212h) choisie dans le groupe comprenant un adhésif ou une colle sensible à la pression, un adhésif ou une colle thermosensible, un adhésif ou une colle à prise sonique, un adhésif ou une colle à prise par vibration, un adhésif ou une colle à prise chimique ou un vernis à prise à froid.
